# EUROPEAN PATENT APPLICATION

(11) **EP 4 328 184 A1**
(43) Date of publication of application: **28.02.2024**
(21) Application number: 22791102.1
(22) Date of filing: 21.04.2022
(51) Int. Cl.: C01G 23/00, C01G 23/047, B82Y 40/00, B82Y 30/00

(54) **NANO-TITANATE, NANO-TITANIC ACID, AND NANO-TIO2 CONTAINING DOPING AG, PREPARATION METHOD THEREFOR AND USE THEREOF**

(30) Priority: 23.04.2021 CN 202110444047
(71) Applicant: Li, Yanjun, Suzhou, Jiangsu 215500 (CN); Zhao, Yuanyun, Guangdong 523000 (CN)
(72) Inventor: ZHANG, Xiaoxue, Suzhou, Jiangsu 215500 (CN); LI, Yanjun, Suzhou, Jiangsu 215500 (CN); ZHAO, Yuanyun, Dongguan, Guangdong 523000 (CN)
(74) Representative: Vitina, Maruta
(86) International application number: PCT/CN2022/088182
(87) International publication number: WO 2022/222996

(57) **Abstract**

The present invention relates to a method for preparing a nano-titanate, a nano-titanic acid and a nano-TiO₂ containing doping E or embedding E nanoparticles, and the use thereof. By using an E-doped Ti-T intermetallic compound as a titanium source, and reacting the E-doped Ti-T intermetallic compound with alkaline solution at atmospheric pressure and near its boiling-point temperature, an E-doped titanate nanofilm is prepared at atmospheric pressure with high efficiency and in a short time. Through acid treatment and (or) heat treatment, a titanate nanofilm containing embedding E nanoparticles, an E-doped titanic acid nanofilm, and a titanic acid nanofilm and a TiO₂ flake powder containing embedding E nanoparticles can be further prepared. Through a subsequent reaction at high temperature and pressure, the preparation of an E-doped titanate nanotubes and titanic acid nanotubes, and titanic acid nanotubes and TiO₂ nanotubes/nanorods containing embedding E nanoparticles can be achieved in high efficiency and low-cost.

## Description

### TECHNICAL FIELD

The present invention relates to the field of nanomaterials technology, and in particular relates to a nano Ag-doped titanate, a nano Ag-doped titanic acid, a nano Ag-doped TiO₂, as well as to a preparation method and an application thereof.

### BACKGROUND

At present, the main method for the preparation of titanate nanomaterials, and its subsequent products of titanic acid nanomaterials and TiO₂ nanomaterials is the strong alkaline hydrothermal method. However, this reaction requires the use of a high-pressure reaction vessel. Generally, titanate (e.g., sodium titanate) nano-tubes is firstly obtained by a long period of hydrothermal synthesis under high-temperature and high-pressure conditions by using commercial nano TiO₂ and a high concentration of strong alkalis (e.g., NaOH solution) as raw materials, then titanic acid nanotubes is obtained by a neutralization and acid washing process, and then TiO₂ nanotubes is obtain by a furthermore heat treatment. For example, in 2001, it was reported that titanic acid nanotubes with a tube length of tens to hundreds of nanometers and an inner diameter of 5.3 nm could be obtained by hydrothermal reaction of anatase-type TiO₂ and a 10 mol/L sodium hydroxide solution in a high-pressure vessel at 130°C for 72 h, followed by water washing of the product to neutrality. Other methods reported in the literature for the preparation of sodium titanate nanoparticles also include: weighing NaOH, TiO₂ according to a stoichiometric relationship and then transferring them into a polytetrafluoroethylene high-pressure reactor, mixing them and holding them at a temperature of 230°C for 48h to 96h, and then removing them when they are cooled down to room temperature, washing and drying them to obtain sodium titanate nanomaterials, and further acid washing them to obtain titanic acid nanomaterials. It can be seen that the traditional hydrothermal method with strong alkali is characterized by 1) using TiO₂ as the titanium source; 2) being carried out in a high-pressure reaction vessel, which requires airtight and high-pressure conditions; 3) being carried out at higher temperatures; 4) requiring a very long reaction time in terms of hours or tens of hours; and 5) the products obtained are generally nano-tubular titanates or nano-tubular titanic acid. These features, especially the use of TiO₂ as the titanium source, which requires a high-pressure confined environment with an extremely long reaction time, seriously increase the production cost and reduce the production efficiency, which in turn hinders the large-scale and widespread application of titanate nanomaterials, titanic acid nanomaterials, and TiO₂ nanomaterials.

In addition, dopant elements or dopant nanoparticles have a very important impact on the functional applications of nano-scale titanate, nano-scale titanic acid, and nano-scale TiO₂. Currently, the common method used for elemental doping into nano-scale titanate, nano-scale titanic acid, and nano-scale TiO₂ is the mixing method, i.e., after preparing the above mentioned matrix materials, nanoparticles consisting mainly of the dopant elements prepared by other methods are then mixed with the above mentioned matrix materials, so as to make the dopant nanoparticles adsorbed on the surface of the matrix. This mechanical mixing-adsorption method is not only unfavorable for the physical-chemical interaction between the nanoparticles and the matrix material at the atomic scale, but also easily leads to the detachment of the doped nanoparticles from the surface of the aforementioned matrix, resulting in the instability and deterioration of the material properties.

### SUMMARY

Based on this, it is necessary to provide a method for the preparation of nano-scale titanate, nano-scale titanic acid, and nano-scale TiO₂ containing dopant elements through a simple process with rapid and efficient reaction under mild conditions, which is suitable for large-scale production, in view of the aforementioned technical problems.

It should be noted at the outset that in all technical examples of the present invention, the doping means that the corresponding E-group elements including Ag element is chimerically compounded with the corresponding doped matrix material by means of atoms or atomic clusters;

The content of the present invention sequentially includes twenty-five aspects related to the main claims and sequentially corresponds to the content of claims 1-25 as stated in the claims, specifically:
In the first aspect, a method of preparing a E-doped titanate nanofilm material, comprising the following steps:
step 1, providing an initial alloy comprising T-type elements, Ti and E-group elements; wherein the T-type elements comprise at least one of Al and Zn; and the phase composition of the initial alloy comprises a T-Ti intermetallic compound with solid dissolved E-group elements; wherein the atomic percentage content of Ag in the E-group elements is 50% ~ 100%, and the molar ratio of E-group elements to Ti in the initial alloy is 0 < *C_{E}*/*C_{Ti}* ≤0.25;
step 2, reacting the initial alloy with an alkaline solution at a temperature of *T*₁, during which the reaction interface advances inwardly from the surface of the initial alloy at an average rate of greater than 2 µm/min, and the initial alloy at the reaction interface undergoes nano-fragmentation through a hydrogen generation and T-removal reaction, and simultaneously undergoes shape and compositional reconfiguration to generate solid flocculent products containing E-group elements;
step 3, the temperature of the solid flocculent product containing E-group elements in the reaction system described in step 2 is reduced from *T*₁ and the solid flocculent product containing E-group elements is collected, i.e., the E-doped titanate nanofilm material is obtained.

Furthermore, the thin film material, macroscopically viewed in the form of a powder material, is microscopically observed to consist of a large number of two-dimensional thin films.

Furthermore, the thin film material, macroscopically viewed as a powder material, microscopically observed to be composed of a large number of monolithic two-dimensional thin films dispersed or entangled, the structure of which is completely different from that of the nano-porous structure formed by the conventional dealloying reaction. The nanoporous structure obtained by the conventional dealloying reaction consists of a three-dimensional network of ligaments connected to form a whole, and its overall appearance is basically the same as that of the initial alloy before the dealloying reaction;
Furthermore, the two-dimensional thin-film material means a material in which the smallest unit of the material (e.g.,a monolithic film) has a large area and its dimension in the thickness direction is much smaller than the two-dimensional dimensions in the area direction, and its thickness does not exceed 10 nm.

Furthermore, the doping E-group elements, is the usual expression in the field of chemistry, whereas the E-group elements are not necessarily impurity elements, this is relative to the concept of the matrix material on which they are dependent, that is, the E-group elements are elements that are inconsistent with the composition of the matrix material, and the elements have a special function, for the purpose of purposely designing and adding, so as to achieve a homogeneous composite with the matrix material, and to achieve a certain purpose;

In the step 1:
Furthermore, the T-type elements include Al; Furthermore, the T-type element is Al;
Furthermore, the T-type elements include Zn; Furthermore, the T-type element is Zn;
Furthermore, the T-type elements include Al and Zn;
Furthermore, the E-group elements are predominantly Ag; as a preference, the E-group element is Ag;
Furthermore, when not all of the E-group elements are Ag, the E-group elements also comprise other elements capable of being solid dissolved in Ag or the T-Ti intermetallic compound, thereby the E-group elements can exist as solid solution in the T-Ti intermetallic compound in the initial alloy;
Furthermore, the T-Ti intermetallic compound is equivalent to the Ti-T intermetallic compound;
Furthermore, when not all of the E-group elements are Ag, the E-group elements further include at least one of Au, Cu, Pt, Pd, Ru, Rh, Os, Ir;
Furthermore, the solid solution, includes an interstitial solid solution and a displacement solid solution method;
Furthermore, the T-Ti intermetallic compound with E-group elements in solid solution means that the E-group elements exist in the lattice interstices of the T-Ti intermetallic compound in the manner of interstitial atoms, or the E-group elements displace T atom positions or Ti atom positions in the lattice of the T-Ti intermetallic compound in the manner of displacement atoms;
Furthermore, wherein the T refers to T-type elements, is a shorthand for T-type elements, and wherein T represents any one of Al, Zn, AlZn, and wherein there is no limit to the ratio of Al to Zn in AlZn;
Furthermore, the molar ratio content of E-group elements solid dissolved in the T-Ti intermetallic compound to Ti in the initial alloy is represented by *C_{E}lC_{Ti}*, wherein 0 < *C_{E}*/*C_{Ti}* < 0.25;
Furthermore, 0 < *C_{E}*/*C_{Ti}* ≤ 0.10;
Furthermore, the initial alloy is prepared by solidifying a melt containing T-type elements, Ti and E-group elements, and during the solidification of the alloy a solidification structure is formed containing T-Ti intermetallic compounds; the E-group elements are mainly solid dissolved in the T-Ti intermetallic compounds.

Furthermore, the T-Ti intermetallic compound is equivalent to the Ti-T intermetallic compound;
Furthermore, the initial alloy melt solidifies at a rate of 1 K/s to 10⁷ K/s;
Furthermore, the phase composition of the initial alloy consists mainly of T-Ti intermetallic compounds with E-group elements solid dissolved;
Furthermore, the T-Ti intermetallic compound includes at least one of T₃Ti, T₂Ti, TTi intermetallic compound;
Furthermore, the T-Ti intermetallic compound includes at least one of Al₃Ti, Al₂Ti, AlTi intermetallic compound;
Furthermore, the initial alloy includes at least one of T₃Ti, T₂Ti, TTi intermetallic compounds solid dissolved with E-group elements;
Furthermore, the initial alloy includes at least one of Al₃Ti, Al₂Ti, AlTi intermetallic compounds having E-group elements in solid solution;
Furthermore, the initial alloy predominantly includes one of Al₃Ti, Al₂Ti, AlTi intermetallic compounds with E-group elements in solid solution;
As one of the preferred ones, the initial alloy mainly includes an Al₃Ti intermetallic compound with E-group elements solid dissolved therein;
As a second preference, the initial alloy mainly includes an Al₂Ti intermetallic compound with E-group elements solid dissolved;
As a third preference, the initial alloy mainly includes an AlTi intermetallic compounds with E-group elements solid dissolved;
As a preference, the initial alloy has an atomic percentage of T less than or equal to 75%;
As a preference, the atomic percentage of T in the initial alloy is less than 70%;
As a preference, the atomic percentage of Al in the initial alloy is less than or equal to 75%;
As a preference, the atomic percentage of Al in the initial alloy is less than 70%;
As a preference, the initial alloy does not contain a T phase;
As a preference, the initial alloy does not contain an Al phase;
Furthermore, according to the Al-Ti phase diagram, when the atomic percentage content of Al in the Al-Ti alloy exceeds 75%, the alloy generally contains the Al phase in the solidification structure; when the atomic percentage content of Al in the Al-Ti alloy is less than 75%, the alloy generally does not contain the Al phase in the solidification structure;
According to the phase diagram, when TiAl₂ is contained in the alloy, it can coexist with the TiAl phase or TiAl₃ phase, but not with the Al phase, and therefore the alloy containing TiAl₂ is unlikely to contain the Al phase;
Furthermore, the T-Ti intermetallic compound means that the phase composition of the intermetallic compound is a T-Ti intermetallic compound phase, i.e., the phase analysis of XRD for the T-Ti intermetallic compound is a T-Ti intermetallic compound including the intermetallic compound phase structure of T₃Ti, T₂Ti, TTi. At this time, the T-Ti intermetallic compound may contain other elements in addition to T and Ti, such as E-group elements in solid solution;
Furthermore, due to the relatively fixed element ratio relationship of the T-Ti intermetallic compounds, the main compositional ratio of the initial alloy can be roughly obtained based on the determined composition of the T-Ti intermetallic compounds, the composition of the E-group elements, and the molar ratio of the E-group elements to Ti;
For example, with Ag solid dissolved in the Al₃Ti intermetallic compound and *C_{Ag}:C_{Ti}*=0.04, the average composition of the initial alloy is roughly Al_{74.258}Ti_{24.752}Ag_{0.99};
Furthermore, the average size of any one dimension in the three-dimensional direction of the initial alloy shape is greater than 4 µm;
Furthermore, the average size of any one dimension in the three-dimensional direction of the initial alloy shape is greater than 10 µm;
Furthermore, the average size of any one dimension in the three-dimensional direction of the initial alloy shape is greater than 15 µm;
Furthermore, the initial alloy is in the form of a powder or a strip, and the powder particles or ribbons have a scale of less than 5 mm in at least one dimension in the three-dimensional direction;
Furthermore, the initial alloy powder particles or ribbons have a scale of less than 1 mm in at least one dimension in a three-dimensional direction;
Furthermore, the initial alloy powder particles or ribbons have a scale of less than 500 µm in at least one dimension in the three-dimensional direction;
As a preference, the initial alloy powder particles or ribbons have a scale of less than 200 µm in at least one dimension in the three-dimensional direction;
As a preference, the initial alloy powder particles or ribbons have a scale of less than 50 µm in at least one dimension in the three-dimensional direction;
Furthermore, when the initial alloy is in the form of a strip, it can be prepared by a method comprising the melt spinning method;
Furthermore, when the initial alloy is in the form of a powder, a larger initial alloy ingot can be prepared by a casting method, and then crushed into the initial alloy powder.

In the step 2:
Furthermore, wherein the T refers to T-type elements, is a shorthand for T-type elements, and wherein T represents any one of Al, Zn, AlZn, and wherein there is no limit to the ratio of Al to Zn in AlZn;
Furthermore, the hydrogen generation and T-removal reaction is a reaction in which T is dissolved in a hot alkaline solution to from a salt, while hydrogen is released when the initial alloy is reacted with the hot alkaline solution at a temperature of *T₁*;
Furthermore, the alkaline solution comprises at least one of NaOH, KOH, LiOH, RbOH, Ba(OH)₂, Ca(OH)₂, Sr(OH)₂ solution;
Furthermore, the solvent in the alkaline solution comprises water; as a preference, the solvent in the alkaline solution is water;
Furthermore, the concentration of alkali in the alkaline solution is 5.1 ~ 25 mol/L;
As a preference, the concentration of alkali in the alkaline solution is 5.1 ~ 15 mol/L;
As a preference, the concentration of alkali in the alkaline solution is 7 ~ 15 mol/L; as a furthermore preference, the concentration of alkali in the alkaline solution is 7 ~ 12 mol/L;
As a further preference, the concentration of alkali in the alkaline solution is 10 ~ 15 mol/L;
Furthermore, the concentration of alkali refers to the concentration of OH⁻ in the alkaline solution;
Furthermore, the alkali in the hot alkaline solution reacting with the initial alloy is an overdose, and the volume of the hot alkaline solution is more than 5 times the volume of the initial alloy, so that the reaction can be proceed all the time at a higher alkaline concentration;
Furthermore, the volume of the hot alkaline solution is more than 10 times the volume of the initial alloy;
Furthermore, the volume of the hot alkaline solution is more than 20 times the volume of the initial alloy;
Furthermore, the temperature at which the initial alloy reacts with the alkaline solution is the temperature of the alkaline solution;
Furthermore, under a certain alkaline concentration condition, the temperature *T₁* of the alkaline solution is sufficient to ensure that the reaction interface advances inwardly from the surface of the initial alloy at an average rate of not less than 2 µm/min during the hydrogen generation and T-removal process and that the initial alloy can be nano-fragmented by the hydrogen generation and T-removal during the reaction process; in other words, the temperature *T₁* and the concentration of the alkaline solution are determined by the reaction rate, reaction time and reaction effect of the hydrogen generation and T-removal reaction (since the reaction rate and the initial alloy size is determined, then the reaction time is determined; the reaction time for hydrogen generation and T-removal is determined when the generated gas can t be observed by the naked eye); therefore, when the value of the reaction rate is used to confine the reaction, the temperature *T₁* and the concentration of the alkaline solution are indirectly confined.

Furthermore, the average rate of 2 µm/min is the critical reaction rate at which the initial alloy can undergo nano-fragmentation via the hydrogen generation and T-removal reaction during the reaction process;
Furthermore, the occurrence of nano-fragmentation means that the initial alloy is fragmented by the hydrogen generation and T-removal process into a single intermediate or product with a scale of less than 500 nm in at least one dimension in a three-dimensional direction;
Furthermore, *T₁* ≥ 60°C;
Furthermore, the reaction of the initial alloy with the alkaline solution is carried out at ambient pressure or high pressure;
Furthermore, the reaction of the initial alloy with the alkaline solution is carried out in a closed vessel;
Under a closed vessel, high pressure is defined when the pressure inside the vessel exceeds one atmosphere; also, additional high pressure can be formed if the gases generated by the reaction inside the vessel cannot be discharged.

Furthermore, when the reaction is carried out in the closed vessel, the initial alloy and the alkaline solution are first placed separately in the closed vessel, and when the temperature of the alkaline solution reaches a set reaction temperature, the initial alloy is then contacted with the alkaline solution and the reaction starts.

Furthermore, the temperature of the alkaline solution may exceed its boiling point temperature at ambient pressure within the airtight container;
Furthermore, the reaction of the initial alloy with the hot alkaline solution is carried out at ambient pressure;
Furthermore, the ambient pressure, is the atmospheric ambient air pressure without the use of a closed container; furthermore, if the container is not tightly closed, although the pressure inside the container is slightly higher than the ambient pressure in a completely open environment, the pressure at this time also falls into the category of ambient pressure as it is also a non-closed environment.

Furthermore, the reaction is carried out in an atmospheric pressure environment, and atmospheric pressure generally refers to 1 standard atmospheric pressure, wherein the boiling point of the corresponding water is 100°C; when there is an alkali dissolved in the water, the boiling temperature of the aqueous solution of the alkali is higher than 100°C. under 1 standard atmospheric pressure, and the higher the concentration of the alkali is, the higher the boiling point is. For example, the boiling point of *T_{f solution}* for the 5.1 mol/L sodium hydroxide aqueous solution is about 108°C; the boiling point of *T_{f solution}* for the 7 mol/L sodium hydroxide aqueous solution is about 112°C; the boiling point of *T_{f solution}* for the 10 mol/L sodium hydroxide aqueous solution is about 119°C; the boiling point of *T_{f solution}* for the 12 mol/L sodium hydroxide aqueous solution is about 128°C; the boiling point of *T_{f solution}* for the 15 mol/L sodium hydroxide aqueous solution is about 140°C; the boiling point of *T_{f solution}* for the 17 mol/L sodium hydroxide aqueous solution is about 148 °C; the boiling point of *T_{f solution}* for the 20 mol/L sodium hydroxide aqueous solution is about 160°C; the boiling point of *T_{f solution}* for the 25 mol/L sodium hydroxide aqueous solution is about 180°C; The boiling point of *T_{f solution}* for the 10 mol/L potassium hydroxide aqueous solution is about 125 °C; the boiling point of *T_{f solution}* for the 12 mol/L potassium hydroxide aqueous solution is about 136°C; the boiling point of *T_{f solution}* for the 15 mol/L potassium hydroxide aqueous solution is about 150°C;
Furthermore, 60°C ≤ *T₁* ≤ *T_{f solution}*, wherein the *T_{f solution}* is the boiling point temperature of the solution of the alkali involved in the reaction at ambient pressure;
Furthermore, 66°C ≤ *T₁* ≤ *T_{f solution}*; Furthermore, 71°C ≤ *T₁* ≤ *T_{f solution}*; Furthermore, 76°C ≤ *T₁* ≤ *T_{f solution}*;
Furthermore, 81°C ≤ *T₁* ≤ *T_{f solution}*; Furthermore, 86°C ≤ *T₁* ≤ *T_{f solution}*; Furthermore, 91°C ≤ *T₁* ≤ *T_{f solution}*;
Furthermore, 96°C ≤ *T₁* ≤ *T_{f solution}*; Furthermore, 100°C ≤ *T₁* ≤ *T_{f solution}*; Furthermore, 100°C < *T₁* ≤ *T_{f solution}*,
Furthermore, 101°C ≤ *T₁* ≤ *T_{f solution}*; Furthermore, 105°C ≤ *T₁* ≤ *T_{f solution}*;
Furthermore, 101°C ≤ *T_{f solution}* -5°C ≤ *T₁* ≤ *T_{f solution}*;
Furthermore, 101°C ≤ *T_{f solution}* -2°C ≤ *T₁* ≤ *T_{f solution}*;
As a further preference, the temperature of the alkaline solution is *T_{f solution}*, i.e. *T₁* = *T_{f solution}*;
Since the highest temperature to which the reaction solution can be heated at ambient pressure is its boiling point temperature (*T_{f solution}*), when the temperature reaches this temperature and continues to be heated, the temperature of the solution does not increase. Therefore, the boiling point temperature is the easiest, simplest, and most accurate to control. Moreover, the reaction time required for the boiling point temperature reaction under the same conditions is also shorter than that required for other temperatures below the boiling point, and the product yield and efficiency are also the highest;
Furthermore, when 60°C ≤ *T₁* ≤ 100°C, the alkaline solution includes KOH;
Furthermore, when 60°C ≤ *T₁* ≤ 100°C, the concentration of KOH in the alkaline solution is not less than 2 mol/L; at this time, other OH⁻ can be provided by other alkalines to ensure that the total OH⁻ concentration reaches 5.1 mol/L or more;
Furthermore, when 60°C ≤ *T₁* ≤ 100°C, the alkaline solution mainly includes an aqueous KOH solution;
Furthermore, when 60°C ≤ *T₁* ≤ 100°C, the alkaline solution is an aqueous KOH solution;
Since T elements (Al, Zn) are amphoteric metals, they can react with hydroxide in hot concentrated alkaline solution to become T salts and dissolve in the solution while releasing hydrogen vigorously; therefore, the T in the initial alloy can be removed through the reaction of T with the hot alkaline solution, and the remaining E-group elements and Ti in the initial alloy can interact with the alkaline solution and undergo a series of simultaneous changes including diffusion and rearrangement of Ti atoms and their interaction with E-group elements, hydrogen, oxygen, OH⁻, and cations in the alkali, and then generate titanate nanofilms containing E-group elements through shape and compositional reconfiguration.

Furthermore, the reaction of the initial alloy with hot alkaline solution at 60°C ≤ *T₁* ≤ *T_{f solution}* is important for the preparation of the product with a microscopic morphology of thin film. In one comparative example, when the initial TiAl₃ intermetallic alloy powder solidly dissolved with Ag is reacted with a NaOH solution of 10 mol/L and at 35°C for 2 h at ambient pressure, the shape of the original initial alloy powder before and after the reaction is substantially unchanged, and it remains as the original crushed and angular powdery particles. It also does not generate a large number of monolithic two-dimensional film-like products in the microstructure, but generates nanoporous structure of titanate or titanium through the three-dimensional network connection, which maintains the similar microstructure to the original alloy powder, including the angular shape; the size of their particle size is comparable to the size of the initial alloy powder, mainly in several microns or tens of microns level. Thus, the reaction of the initial alloy with the alkaline solution occurring at a lower temperature or near room temperature is completely different from the reaction of the present invention occurring at 60°C < *T₁* ≤ *T_{f solution}*, especially in the high temperature range, and the morphology of the products is also completely different.

Specifically, when the reaction temperature is taken in the low value range of 60°C ≤ *T₁* ≤ *T_{f solution}* , i.e. in the range of 60°C ≤ *T₁* ≤ 100°C, and the alkaline solution mainly consists of an aqueous NaOH solution, the yield of the target product of titanate nanofilms doped with E-group elements is low. However, when the alkaline solution contains KOH, and the titanate nanofilm matrix doped with E-group elements includes a potassium titanate nanofilm matrix, the yield of the E-doped titanate nanofilm in the product can be substantially increased; for example, when the alkaline solution mainly consists of KOH aqueous solution and the reaction temperature is 60°C, the yield of the target product of E-doped potassium titanate nanofilm in the obtained product is not less than 50%; when the reaction temperature is 71°C, the yield of the target product of E-doped potassium titanate nanofilm in the obtained product is not less than 65%; when the reaction temperature is 81°C, the yield of the target product of E-doped potassium titanate nanofilm in the obtained product is not less than 75%; when the reaction temperature is 91°C, the yield of the target product of E-doped potassium titanate nanofilm in the obtained product is not less than 85%; when the reaction temperature is 96°C, the yield of the target product of E-doped potassium titanate nanofilm in the obtained product is not less than 90%;
When the reaction temperature is taken in the high value range of 60°C ≤ *T₁* ≤ *T_{f solution}* , i.e. 100°C < *T₁* ≤ *T_{f solution}*, regardless of the type of alkali, the yield of E-doped titanate nanofilms in the resulting product is very high, and the product morphology is completely different from that of the original initial alloy powder particles or ribbons shape; for example, when the reaction temperature is higher than 101°C, a high yield of E-doped titanate nanofilms can be obtained, which is generally 95%~100%; when the reaction temperature is taken as the boiling point *T_{f solution}* of the alkaline solution at atmospheric pressure, a higher yield of the E-doped titanate nanofilm can be obtained, and the yield is generally 99%~100%;
In particular, when the reaction occurs at ambient pressure and at the boiling point temperature *T_{f solution}* of the alkaline solution, the solution composition of the reaction system has an obvious special change, which is manifested in the following: in the temperature interval below the boiling point temperature of the alkaline solution, the solvent mainly exists as liquid water; however, near or at the boiling point temperature, the solvent contains water that is undergoing a transformation from liquid to gas, in addition to the liquid water and the gaseous water produced by boiling. Moreover, due to the presence of reactants in solution and as formed nano-scale products, according to the principle of heterogeneous nucleation, it provides a large number of plasmas for boiling and evaporation, so that the reaction system is in a special environment of complete boiling and evaporation. In this special environment, the content and state of dissolved atmospheric gases (oxygen, nitrogen) in water are also extremely specific (because the large number of boiling water vapor, hydrogen generated by the reaction of T and alkalis, changes the saturation partial pressure conditions of dissolved gases in water). At the same time, the TiT intermetallic compounds with E-group elements solid solution react with the concentrated alkaline, and a large amount of hydrogen generates in the T-removal process of the alloy. The violent expansion effect caused by the hydrogen generated within a short period of time will promote the nano-fragmentation and shape and composition reconfiguration of the initial alloy at the reaction interface, and the T salts dissolved in alkaline solutions also change the composition of the reacting solution system. The T salts dissolved in alkaline solutions also change the composition of the reaction solution system. All of these characteristics of solutions at boiling point temperatures provide a very specific reaction environment for the reaction. Under this special reaction environment condition, a special reaction process will occur. The initial alloy will undergo a nano-fragmentation and a shape and composition reconfiguration process with high efficiency, which makes it difficult to stabilize the three-dimensional network-like continuous nanoporous structure usually generated by the dealloying reaction at low- or roomtemperature. And instead, this process can produce a flocculent solid product mainly composed of two-dimensional titanate nanofilms doped with E-group elements. This not only greatly reduces the preparation time of the target thin film-like product, but also achieves a high yield of E-doped titanate nanofilms. Moreover, due to the constant boiling point temperature of the specific alkaline solution, the temperature control can be extremely precise, making the control of product morphology and composition extremely accurate and easy.

Furthermore, since the process of "nano-fragmentation - shape and composition reconfiguration of product" described in the step 2 occurs almost simultaneously with the reaction of "hydrogen generation and T-removal process", the theoretical minimum time required for the product generation process described in the step 2 is the time required for the initial alloy reaction interface to advance inward from the surface to complete the hydrogen generation and T-removal reaction, which can be determined by the end of hydrogen generation.

Furthermore, the hydrogen generation reaction is a vigorous hydrogen generation reaction;
Furthermore, the vigorous hydrogen generation and T-removal reaction means that the rate of advancement of the reaction interface of the hydrogen generation and T-removal reaction is sufficiently fast that the hydrogen evolved from the reaction interface is concentrated to be released in a very short period of time, thus behaving as a vigorous reaction process.

Furthermore, the degree of vigor of the hydrogen generation and T-removal reaction is related to the rate of reaction advancement of the reaction interface from the initial alloy surface inwardly per unit time, the higher the temperature of the alkaline solution, the faster the rate of advancement of the reaction interface is, and the more violent the reaction is.
Furthermore, the reaction interface advances inwardly from the initial alloy surface at an average rate of greater than 4 µm/min;
Furthermore, the reaction interface advances inwardly from the initial alloy surface at an average rate of greater than 7.5 µm/min;
Furthermore, the reaction interface advances inwardly from the initial alloy surface at an average rate of greater than 17.5 µm/min;
Furthermore, when 60°C < *T₁* ≤ 100°C, the reaction interface advances inwardly from the initial alloy surface at an average rate of greater than 2 µm/min;
Furthermore, when 100°C < *T₁* ≤ *T_{f solution}*, the reaction interface advances inwardly from the initial alloy surface at an average rate of greater than 20 µm/min;
For example, when the alkali concentration is 10 mol/L, the advancement rate of the reaction interface from the surface of the initial alloy inward during the reaction of the Ag₁Ti₂₅Al₇₄ initial alloy with the alkaline solution is as follows:
   60°C < *T₁* ≤ 71 °C, the reaction interface has an average advancement rate of about 2.5 µm/min ~ 4.0 µm/min;
   71 °C < *T₁* ≤ 81 °C, the reaction interface has an average advancement rate of about 4.0 µm/min ~ 7.5 µm/min;
   81 °C < *T₁* ≤ 91 °C, the reaction interface has an average advancement rate of about 7.5 µm/min ~ 17.5 µm/min;
   91 °C < *T₁* ≤ 100°C, the reaction interface has an average advancement rate of about 17.5 µm/min ~ 35 µm/min;
   100°C < *T₁* ≤ 110 °C, the reaction interface has an average advancement rate of about 35 µm/min ~ 60 µm/min;
   110°C < *T₁* ≤ 120°C, the average advancement rate of the reaction interface is about 60 µm/min ~ 125 µm/min;
   120 °C < *T₁* ≤ *T_{f solution}*, the average advancement rate of the reaction interface is greater than 120 µm/min;

Since T elements (Al, Zn) are amphoteric metals, their reaction with alkaline solutions near the boiling point temperature (which is higher than 100°C) at ambient pressure is very rapid. In general, the reaction time for the complete removal of T elements from the initial alloy is related to the shape of the initial alloy. The smaller the initial alloy powder particles or the thinner the initial alloy ribbons, the shorter the time required for completion of the hydrogen generation and T-removal reactions; conversely, the longer the time required for the completion of the hydrogen generation and T-removal reactions.

Furthermore, ultrasound is applied during the hydrogen generation and T-removal to further enhance the nano-fragmentation effect and reaction rate by ultrasound treatment;
Furthermore, the frequency of the ultrasound is from 20 kHz to 10⁶ kHz;
According to the average advancement rate of the reaction interface and the size of the initial alloy, the minimum reaction time required for the completion of the hydrogen generation and T-removal reactions can be calculated as *t*. For example, when the initial alloy is a strip with a thickness of *d*, and the average advancement rate of the reaction interface is *v*, taking into account the fact that the reaction interface advances from the upper and lower surfaces of the strip, *t*=0.5*d*/*v*; similarly, when the initial alloy is a granular alloy with a diameter of *d* and the average advancement rate of the reaction interface is v, *t=0. Sdlv.*

In one embodiment, the initial alloy ribbon of TiAl₃ intermetallic compound solid dissolved in Ag reacts with a NaOH solution of 10 mol/L and at a boiling temperature of about 119°C. The average advancement rate of the reactive interface of the initial alloy ribbon is about -120 µm/min, i.e., for a 40 µm-thick initial alloy ribbon, the hydrogen generation and Al-removal reactions can be finished in 10 s; for a 20 µm-thick initial alloy ribbon, the hydrogen generation and Al-removal reactions can be finished in 5 s; and even if the initial alloy balls of a grain size of 5 mm, the hydrogen generation and Al-removal reactions of the initial alloy balls can be finished in 21 min;
In one embodiment, a initial alloy ribbon comprised TiAl₃ intermetallic compound and Ag solid solution is reacted with a 10 mol/L NaOH solution at its boiling temperature (the boiling temperature of about 119°C), and the average advancement rate of the reactive interface of the initial alloy ribbon is about -120 µm/min, i.e., for a 40 µm-thick initial alloy ribbon, the hydrogen generation and Al-removal reactions can be completed in 10 s; for a 20 µm-thick initial alloy ribbon, the hydrogen generation and Al-removal reactions can be completed in 5 s. Even for an initial alloy ball with a diameter of 5 mm, the hydrogen generation and Al-removal reactions can be completed in 21 min;
When the *d* is about 40 µm, the preparation of its corresponding initial alloy is extremely simple, and it can be easily prepared by the ordinary melt spinning method, and according to *t*=0.5*d*/*v*, even if the average advancement rate of the reaction interface is 2.5 µm/min corresponding to the low-temperature interval of 60°C, the hydrogen generation and T-removal reactions can be completed in 8 min;
When the hydrogen generation and T-removal reaction is completed, the reaction system subsequently reaches equilibrium; at this time, continue to extend the holding time of the reaction system at the original reaction temperature can still ensure the stability of the product. Thus, when the reaction time of the initial alloy with the hot alkaline solution exceeds the minimum required time *t* for hydrogen generation and T-removal reaction , e.g. up to several hours, the corresponding product can still be obtained;
   Furthermore, the minimum reaction time of the initial alloy with the alkaline solution at temperature *T₁* is 10 s;
   Furthermore, the reaction time of the initial alloy with the hot alkaline solution at *T₁* temperature is 10 s ~ 59 min;
   Furthermore, the reaction time of the initial alloy with the hot alkaline solution at *T₁* temperature is 10 s ~ 29 min;
   Furthermore, the reaction time of the initial alloy with the hot alkaline solution at *T₁* temperature is 10 s ~ 9.9 min;
   Furthermore, the reaction time of the initial alloy with the hot alkaline solution at *T₁* temperature is 10 s ~ 4.9 min;
   Furthermore, the reaction time of the initial alloy with the hot alkaline solution at *T₁* temperature is 10 s ~ 2 min;
   Furthermore, the reaction time of the initial alloy with the hot alkaline solution at *T₁* temperature is 10 s ~ 1 min;
   Furthermore, the reaction time of the initial alloy with the hot alkaline solution at *T₁* temperature is 10 s ~ 30 s;
   Obviously, when *T₁* is higher and the initial alloy is thinner or the particle size is smaller, the shorter the reaction time required; conversely, the longer the reaction time;
   Furthermore, the occurrence of nano-fragmentation means that the initial alloy at the reaction interface is fragmented into nanoscale intermediates or products by the hydrogen generation and T-removal reactions, and at the same time, two-dimensional titanate nonofilms containing E-group elements are generated by the shape and composition reconfiguration; in this process, the hydrogen released violently by the hydrogen generation and T-removal reactions promotes the nano-fragmentation of the intermediates and products, the shape and composition reconfiguration of the products, and the diffusion distribution of the products in the alkaline solution after leaving the reaction interface.

Furthermore, the occurrence of nano-fragmentation means that the initial alloy at the reaction interface is fragmented by the hydrogen generation and T-removal reactions into individual intermediates or products having a scale of less than 500 nm in at least one dimension in the three-dimensional direction;
Furthermore, the solid flocculent product containing E-group elements consists mainly of individual intermediates or products having a scale of less than 20 nm in at least one dimension in the three-dimensional direction;
Furthermore, the solid flocculent product containing E-group elements consists primarily of a single intermediate or product having a scale of less than 10 nm in at least one dimension in a three-dimensional direction;
Furthermore, the solid flocculated product containing E-group elements, after being generated by shape and composition reconfiguration, does not remain at the initial alloy reaction interface, but leaves the initial alloy reaction interface by diffusion during generation and is further diffused and distributed in the alkaline solution by thermal diffusion and convection of the alkaline solution liquid;
Furthermore, the shape and compositional reconfiguration means that the hydrogen generation and T-removal reactions of the initial alloy and the intermediate product after nano-fragmentation undergo further shape and compositional changes simultaneously, generating a nano-sized product with a completely different composition and shape from that of the initial alloy on the micrometer or millimeter scale; the dimensions of the nanoscale product are described in the subsequent description of step 3;
Furthermore, the as-prepared titanate nanofilms containing E-group elements do not contain a three-dimensional continuous network-like nanoporous structure or a porous skeletal structure;
Furthermore, the hydrogen generation and T-removal reactions transforms the micrometer or even millimeter-sized initial alloy into a large number of two-dimensional titanate nanofilms containing E-group elements through a step-by-step nano-fragmentation process from the surface inwards;
Furthermore, the solid flocculent product containing E-group elements mainly consists of a large number of two-dimensional titanate nanofilms containing E-group elements combined by aggregation and entanglement with each other; which macroscopically appears as a solid flocculent product;
Furthermore, the flocculent solid-state product means that the nanoscale scale thin film-like product is in the form of a solid-state flocculant after agglomeration during diffusion, and can be suspended in solution for a longer period of time from an observational point of view.

In the step 3:
In general, after the temperature and products of a chemical reaction have reached equilibrium, if the temperature of the reaction system is slowly lowered, holding the reaction at the new temperature for a long time leads to a disruption of the original reaction equilibrium, with potential changes in the composition and morphologies of the reaction products.

The reaction system described in step 2 comprises the product generated by the reaction and the alkaline solution after the reaction;
In order to maintain the product of the initial reaction equilibrium in the hot alkaline solution while facilitating solid-liquid separation of the product, step 3 comprises a process of lowering the temperature of the solid flocculent product in the reaction system described in step 2 from *T*₁ to a lower temperature interval. By controlling the rate of temperature reduction, the composition and morphology of the products formed at 60°C ≤ *T₁* temperature, in particular the temperature interval of 100°C < *T₁*, can be maintained by rapidly reducing the temperature of the reaction system, which makes it difficult for the reaction products to undergo corresponding changes in time.

Furthermore, the composition and morphology of the products formed at 60°C ≤ *T₁* ≤ *T_{f solution}* temperature, in particular the temperature interval of 100°C ≤ *T₁* ≤ *T_{f solution}*, can be maintained.
Furthermore, the temperature of the solid flocculent product containing E-group elements in the reaction system described in step 2 is reduced from *T₁* to a lower temperature interval at atmospheric pressure, wherein 60°C ≤ *T₁* ≤ *T_{f solution}*;
Furthermore, 66°C ≤ *T₁* ≤ *T_{f solution}*; Furthermore, 71°C ≤ *T₁* ≤ *T_{f solution}*; Furthermore, 76°C ≤ *T₁* ≤ *T_{f solution}*;
Furthermore, 81°C ≤ *T₁* ≤ *T_{f} solution*; Furthermore, 86°C ≤ *T₁* ≤ *T_{f solution}*; Furthermore, 91°C ≤ *T₁* ≤ *T_{f solution}*;
Furthermore, 96°C ≤ *T₁* ≤ *T_{f solution}*; Furthermore, 100°C ≤ *T₁* ≤ *T_{f solution}*; Furthermore, 100°C < *T₁* ≤ *T_{f solution}*;
Furthermore, 101°C ≤ *T₁* ≤ *T_{f solution}*; Furthermore, 105°C ≤ *T₁* ≤ *T_{f solution}*;
Furthermore, 101°C ≤ *T_{f solution}* -5°C ≤ *T₁* ≤ *T_{f solution}*;
Furthermore, 101°C ≤ *T_{f solution}* -2°C ≤ *T₁* ≤ *T_{f solution}*;
Furthermore, *T₁* = *T_{f solution}*;
Furthermore, reducing the temperature of the solid flocculent product containing E-group elements in the reaction system described in step 2 from *T₁* to below 45°C;
Furthermore, reducing the temperature of the solid flocculent product containing E-group elements in the reaction system described in step 2 from *T₁* to below 35°C;
Furthermore, reducing the temperature of the solid flocculent product containing E-group elements in the reaction system described in step 2 from *T₁* to below 30°C;
Furthermore, reducing the temperature of the solid flocculent product containing E-group elements in the reaction system described in step 2 by a cooling rate of greater than 5 K/s;
Furthermore, the rate of temperature reduction is greater than 10 K/s; Furthermore, the rate of temperature reduction is greater than 20 K/s; Furthermore, the rate of temperature reduction is greater than 50 K/s;
Furthermore, the required time for the temperature reduction of the reaction system described in step 2 in the solid flocculent product containing E-group elements is less than 20 s;
Furthermore, the required time for the temperature reduction is less than 10 s;
Furthermore, the required time for the temperature reduction is less than 5 s;
Furthermore, the required time for the temperature reduction is less than 2 s;

It is understood that when the temperature interval of the reaction is in the high value range of the 60°C ≤ *T₁* ≤ *T_{f solution}* temperature interval, such as the 100°C < *T₁* ≤ *T_{f solution}* temperature interval or the *T_{f solution}* temperature, the rapid reduction of the temperature of the reaction product by step 3 can ensure the stabilization of the composition and morphology of the product.

Furthermore, the methods of lowering the temperature of the solid flocculent product containing E-group elements in the reaction system described in step 2 includes at least one of the following: adding solvent to dilute, filtering and cooling;
At ambient pressure, since the reaction is carried out in an open vessel, the temperature of the solid flocculent product in the reaction system described in step 2 can be rapidly lowered by adding a cold solvent (e.g., water) to the reaction system and simultaneously lowering the concentration of the alkaline solution in the reaction system; as another way, the hot alkaline solution in the reaction system and the solid flocculent product containing E-group elements can also be rapidly poured out and simultaneously filtrating the flocculent product to separate it, thereby rapidly lowering the temperature of the solid flocculent product containing E-group elements;
Furthermore, the solvent corresponding to the solvent addition for dilution includes water;
Furthermore, the temperature of the solvent corresponding to the solvent addition dilution is room temperature;
Furthermore, the temperature of the solvent corresponding to the solvent addition dilution is 0°C ~ 30°C;
Furthermore, the temperature of the solvent corresponding to the solvent addition dilution is 0°C ~ 25°C;
Furthermore, the temperature of the solvent corresponding to the solvent addition dilution is 0°C ~ 20°C;
Furthermore, when the additive solvent for dilution is used, the temperature of the solid flocculent product containing E-group elements in the reaction system described in step 2 is reduced while the temperature of the alkaline solution is simultaneously lowered, and in addition the concentration of the alkaline solution in the reaction system described in step 2 is reduced;
Furthermore, the concentration of the alkaline solution after dilution is less than 0.25 times the original concentration; meanwhile, the temperature of the alkaline solution after the reduction of temperature is less than 50°C;
As a preference, the concentration of the alkaline solution after dilution is 0.1 times or less of the original concentration; at the same time, the temperature of the alkaline solution after the reduction of temperature is lower than 45°C.

Furthermore, when filter cooling is taken to reduce the temperature, the specific steps are as follows: under atmospheric pressure, the solid flocculent product containing E-group elements and the alkaline solution at a temperature of 60°C ≤ *T₁* ≤ *T_{f solution}* is poured on a cold filter, and the solid flocculent product containing E-group elements and the alkaline solution are separated by the filter; the heat of the solid flocculent product containing E-group elements is rapidly conducted away by the environment and the filter, and the temperature of the solid flocculent product containing E-group elements can be rapidly reduced to the low temperature range;
Furthermore, 101°C ≤ *T₁* ≤ *T_{f solution}*; Furthermore, *T₁* = *T_{f solution}*;
Furthermore, the temperature of the filter mesh is not higher than 30°C;
Furthermore, the temperature of the filter mesh is not higher than 20°C;
Furthermore, the temperature of the filter mesh is not higher than 10°C;
Furthermore, the filter mesh plane is at an angle to the horizontal plane, so that after the hot alkaline solution including the solid flocculent product is poured into the filter mesh, it can be sufficiently filtered and cooled while flowing and spreading on the filter mesh;
Furthermore, the angle between the plane of the filter mesh and the horizontal plane is 15° to 75°;
Furthermore, the mesh aperture size of the filter mesh ranges from 5 µm to 1 mm;
Furthermore, the filter mesh includes a multi-layer filter mesh;
Furthermore, the filter mesh includes at least 4 layers;
Furthermore, the filter mesh includes a multi-layer filter mesh and the mesh pore size of each layer is inconsistent;
The solid flocculent products containing E-group elements are generally aggregated and entangled together to form a larger aggregation group, so they can be firstly separated by the filter mesh with a larger aperture; by means of a multi-layer filter mesh, primary separation of the solid products can be achieved by a larger mesh filter, continued separation of the solid flocculent products can be achieved by the medium-sized mesh filter, and final separation of the solid flocculent products can be achieved by the small mesh filter;
Furthermore, the filter mesh includes a metal filter with excellent thermal conductivity;
It can be understood that when cooling down the temperature by cold mesh filtration, not only the temperature of the solid flocculent product containing E-group elements is rapidly reduced, but also the separation of solid-liquid substances corresponding to the original reaction equilibrium occurs, which reduces the volume of the separated by-product solution as compared to the dilution method, and further ensures that the composition and morphology of the product generated by the *T₁* temperature are preserved, which is of positive significance.
Furthermore, as long as the temperature of the ultimately obtained E-doped titanate nanofilm material is lower than *T₁*, or it is subjected to solid-liquid separation, cleaning, preservation, and use at a temperature lower than *T₁*, regardless of the historical change of the temperature of the E-doped titanate nanofilm material in the intermediate process, it is part of the operation of reducing the temperature of the solid flocculent product containing E-group elements in the reaction system according to step 2 from *T₁*, as described in step 3;
Furthermore, the process of collecting the solid flocculent product containing E-group elements includes solid-liquid separation, washing, and drying of the solid flocculent product containing E-group elements;
Furthermore, collecting the solid flocculated product containing E-group elements, i.e., obtaining a two-dimensional E-doped titanate nanofilm material;
Furthermore, collecting the solid flocculent product containing E-group elements, i.e., obtaining the two-dimensional titanate nonofilm powder material doped with E-group elements.

Furthermore, the thin film material, macroscopically viewed in the form of a powder material, is microscopically observed to consist of a large number of two-dimensional thin films.

Furthermore, the thin film material, macroscopically viewed as a powder material, microscopically observed to be composed of a large number of monolithic two-dimensional thin films dispersed or entangled, the structure of which is completely different from that of the nano-porous structure formed by the conventional dealloying reaction. The nanoporous structure obtained by the conventional dealloying reaction consists of a three-dimensional network of ligaments connected to form a whole, and its overall appearance is basically the same as that of the initial alloy before the dealloying reaction;
Furthermore, the two-dimensional thin-film material means a material in which the smallest unit of the material (e.g.,a monolithic film) has a large area and its dimension in the thickness direction is much smaller than the two-dimensional dimensions in the area direction, and its thickness does not exceed 10 nm.

Furthermore, the doping E-group elements, is the usual expression in the field of chemistry, whereas the E-group elements are not necessarily impurity elements, this is relative to the concept of the matrix material on which they are dependent, that is, the E-group elements are elements that are inconsistent with the composition of the matrix material, and the elements have a special function, for the purpose of purposely designing and adding, so as to achieve a homogeneous composite with the matrix material, and to achieve a certain purpose;
Furthermore, the E-doped titanate nanofilm material consists of a large number of aggregated single E-doped titanate nanofilm; it can be understood that a large number of single film can be softly agglomerated together by entanglement and aggregation with each other;
Furthermore, the E-doped titanate nanofilm has a thickness of 0.25 nm to 7.5 nm;
Furthermore, the E-doped titanate nanofilm has a thickness of 0.25 nm to 4 nm;
Furthermore, the E-doped titanate nanofilm has a thickness of 0.25 nm to 3 nm;
Preferably, the E-doped titanate nanofilm has a thickness of 0.25 nm to 2 nm;
Furthermore, the average area of the E-doped titanate nanofilm is greater than 500 nm²;
As a preference, the average area of the E-doped titanate nanofilm is greater than 5000 nm²;
As a further preference, the average area of the E-doped titanate nanofilm is greater than 20,000 nm².

Furthermore, the titanate nanofilms doped with E-group elements are predominantly low crystallinity;
Furthermore, the cationic element in the E-doped titanate nanofilm is derived from the cationic element in the corresponding alkali;
Furthermore, the chemical composition of the E-doped titanate nanofilm material includes an E-group elements, Ti, O, and a corresponding cationic element in corresponding alkali; wherein the molar ratio of the E-group elements to Ti satisfies 0 < C_{E}/C_{Ti} ≤ 0.25; for example, when the alkali is NaOH, the corresponding cationic element in the alkali is Na, and the titanate salt is sodium titanate, then the E-doped sodium titanate nanofilm material has a chemical composition including the E-group elements, Ti, O, and the element Na;
Furthermore, 0 < C_{E}/C_{Ti} ≤ 0.10;
Furthermore, the E-group elements is mainly distributed in the titanate nanofilm in the form of atoms or atomic clusters;
Furthermore, when the E-group elements is distributed mainly as atoms or atomic clusters among the titanate nanofilms, the titanate nanofilms can be viewed as a single-phase material. In other words, the E-group elements, and other titanate constituent elements such as Ti, O, are uniformly distributed in the film as atoms or atomic clusters, and the E-group elements do not nucleate and grow into an E phase other than the titanate phase. At this time, the as-prepared product can be understood as a E-doped titanate nanofilm, or as a titanate nanofilm with the E-group elements solid dissolved, or as a completely new substance. For example, when the corresponding cationic element in the alkali is Na, such completely new substance can be considered as a titanate sodium (silver) nanofilm;
Furthermore, the E-group elements is mainly distributed in the titanate nanofilm in a embedding form as atoms or atomic clusters; the key feature of the embedding distribution is that the E-group elements is mainly confined in the titanate nanofilm as atoms or atomic clusters, and the atomic diffusion can only take place when a certain temperature is achieved; at the same time, due to the pinning effect of the E-group elements, it will greatly enhance the phase transition thermal stability of the titanate film matrix. For a detailed introduction, please refer to the following text corresponding to it.

Furthermore, when the E-group elements is present in the E-doped titanate nanofilm in the form of atoms or atomic clusters, due to the pinning effect of the atoms of the E-group elements, the thermal stability of the phase transition of the titanate nanofilm matrix can be increased by a maximum of 200°C; and the higher the E content is, the higher the thermal stability of the phase transition is. That is, compared with the monolithic titanate nanofilm matrix, the heat treatment temperature of the E-doped titanate nanofilm needs to be increased by up to 200°C to achieve the same phase transition during the heating process;
This increase in the thermal stability of the phase transition further indicates that the E-group elements is doped in the titanate matrix on an atomic or atomic cluster scale, rather than as an obvious E nanoparticle phase. If it present as an obvious E nanoparticle phase, and the titanate film matrix and the E nanoparticle phase are separate and independent phases, the phase transition thermal stability of the titanate matrix can not be greatly affected by the presence of E nanoparticle phase.

Furthermore, the process of collecting the solid flocculated product containing E-group elements in step 3 includes a drying process, whereby the powdered E-doped titanate nanofilm material is obtained by drying the solid flocculated product doped with E-group elements.

Furthermore, the drying temperature is 50°C ~ 350°C; Furthermore, the drying temperature is 50°C ~ 300°C;
Furthermore, the drying time is 1 min~24 h; Furthermore, the drying time is 5 min~2 h;
Furthermore, the drying time is in a low value range when the drying temperature is in a high value range;
Furthermore, the drying time is in a high value range when the drying temperature is in a low value range;
Since the E-group elements is mainly Ag, according to the characteristics of the Ag element, it is easy to oxidize into Ag₂O drying at treatment below 180°C, while the Ag₂O will decompose into Ag when the drying temperature is above 180°C, therefore:
   Furthermore, when the drying temperature takes the low value of the range, the E-doped titanate nanofilm contains O-bound Ag atoms or Ag clusters;
   As a preference, when the drying temperature is 50°C ~ 180°C, the E-doped titanate nanofilm contains O-bound Ag atoms or Ag clusters;
   As a preference, when the drying temperature is 50°C ~ 180°C, the E-doped titanate nanofilm contains O-bound Ag₂O clusters;
   Since the O-Ag bond will break and decompose at higher temperatures, when the drying temperature takes the high value of the range, the O that is bound with Ag will separate from Ag due to the breakage of the O-Ag bond;
   Furthermore, when the drying temperature takes the high value of the range, the E-group elements are mainly distributed in the titanate nanofilm as atoms or atomic clusters;
   As a preference, when the drying temperature is 181°C ~ 350°C, the E-group elements are mainly distributed among the titanate nanofilm in the form of atoms or atomic clusters.

Therefore, the degree of bonding with Ag and O can be controlled by the control of the drying temperature and drying time.

Furthermore, when the drying temperature is lower than 350°C, the shape of the titanate film remains substantially unchanged and the E elements remain embedded and distributed in the titanate film as atoms or atomic clusters;
Furthermore, the atomic clusters containing E-group elements have a size of less than 1.5 nm;
Furthermore, the atomic clusters containing E-group elements have a size of less than 1 nm, and when the atomic clusters containing E-group elements are less than 1 nm, the size of such atomic clusters is insufficient to form E-phase nanoparticles that are distinguishable at the phase interface and it is difficult to distinguish the atomic clusters containing E-group elements from the matrix by means of observation, such as transmission electron microscopy (TEM); thus in this scale, it is uniformly distributed in the matrix.

Furthermore, the E-group elements are mainly distributed as atoms or atomic clusters in the titanate nanofilm;
Furthermore, the E-group elements are distributed in the titanate nanofilm mainly in the form of atoms.

Furthermore, the atomic percentage content of Ag in the E-group elements is 50% ~ 100%; Furthermore, the E-group elements is predominantly Ag;
Furthermore, the E-group elements is Ag;
Furthermore, when not all of the E-group elements are Ag, the E-group elements also contain other elements capable of being solid dissolved in Ag or T-Ti intermetallic compounds; thereby allowing the E-group elements to be present in the original initial alloy in the Al-Ti intermetallic compound by solid solution;
Furthermore, when not all of the E-group elements are Ag, the E-group elements further include at least one of Au, Cu, Pt, Pd, Ru, Rh, Os, Ir.

Furthermore, the yield of the two-dimensional E-doped titanate nanofilm in the final product is its weight percent in the final product;
Furthermore, the yield of the E-doped titanate nanofilm in the final product is from 50% to 100%;
Furthermore, the E-doped titanate nanofilm has a yield of 65% to 100% in the final product;
Furthermore, the E-doped titanate nanofilm has a yield of 75% to 100% in the final product;
Furthermore, the E-doped titanate nanofilm has a yield of 85% to 100% in the final product;
Furthermore, the E-doped titanate nanofilm has a yield of 90% to 100% in the final product;
Furthermore, the E-doped titanate nanofilm has a yield of 95% to 100% in the final product;
Furthermore, the E-doped titanate nanofilm has a yield of 99% to 100% in the final product;
Specifically, when the reaction temperature is taken in the low value range of 60°C ≤ *T₁* ≤ *T_{f solution}* , i.e. in the range of 60°C ≤ *T₁* ≤ 100°C, and the alkaline solution mainly consists of an aqueous NaOH solution, the yield of the target product of titanate nanofilms doped with E-group elements is low. However, when the alkaline solution contains KOH, and the titanate nanofilm matrix doped with E-group elements includes a potassium titanate nanofilm matrix, the yield of the E-doped titanate nanofilm in the product can be substantially increased; for example, when the alkaline solution mainly consists of KOH aqueous solution and the reaction temperature is 60°C, the yield of the target product of E-doped potassium titanate nanofilm in the obtained product is not less than 50%; when the reaction temperature is 71°C, the yield of the target product of E-doped potassium titanate nanofilm in the obtained product is not less than 65%; when the reaction temperature is 81°C, the yield of the target product of E-doped potassium titanate nanofilm in the obtained product is not less than 75%; when the reaction temperature is 91°C., the yield of the target product of E-doped potassium titanate nanofilm in the obtained product is not less than 85%; when the reaction temperature is 96°C., the yield of the target product of E-doped potassium titanate nanofilm in the obtained product is not less than 90%;
When the reaction temperature is taken in the high value range of 60°C ≤ *T₁* ≤ *T_{f solution}* , i.e.100°C < *T₁* ≤ *T_{f solution}*, regardless of the type of alkali, the yield of E-doped titanate nanofilms in the resulting product is very high, and the product morphology is completely different from that of the original initial alloy powder particles or ribbons shape; for example, when the reaction temperature is higher than 101°C, a high yield of E-doped titanate nanofilms can be obtained, which is generally 95%~100%; when the reaction temperature is taken as the boiling point *T_{f solution}* of the alkaline solution at atmospheric pressure, a higher yield of the E-doped titanate nanofilm can be obtained, and the yield is generally 99%~100%;
In the second aspect, the present invention also relates to a method of preparing a titanate nanofilm material embedded with E nanoparticles, wherein the titanate nanofilm material embedded E nanoparticles is prepared by heat-treating the product or the E-doped titanate nanofilm material prepared according to the first aspect thereof.

The thermal stability of the titanate nanofilm will be improved due to the presence of the doped E-group elements, and the thickening and shrinkage of the film under heating will be hindered by the doped E-group elements. Therefore, the thickness of the titanate nanofilm does not change significantly (it maintains in a thin film state), by controlling the heat treatment temperature and time during the heat treatment process. While the doped E-group elements, which are mainly distributed in the titanate nanofilm in the form of atoms or atomic clusters, will transform into E nanoparticles embedded in the titanate nanofilm by elemental diffusion and aggregation. This kind of embedded E nanoparticles is different from the ordinary nanoparticles adsorbed through van der Waals force that is reported in other literatures (nanoparticles adsorbed through van der Waals force can move and detach from the substrate). This kind of embedded E nanoparticles ensure that the E nanoparticles can be tightly embedded within the titanate nanofilm (it cannot move or detach from the substrate). When all of the E-group elements, which are mainly distributed as atoms or atomic clusters, have been aggregated into E nanoparticles, it is difficult for them to continue to merge and grow due to the island-like distribution of the E nanoparticles, which cannot be connected by the spatial obstruction of the titanate nanofilm matrix. Therefor, the particle size of the E nanoparticles can be kept roughly unchanged during the subsequent heating process.

Furthermore, when the E-group elements is present in the E-doped titanate nanofilm in the form of atoms or atomic clusters, due to the pinning effect of the atoms of the E-group elements, the thermal stability of the phase transition of the titanate nanofilm matrix can be increased by a maximum of 200°C; and the higher the E content is, the higher the thermal stability of the phase transition is. That is, compared with the monolithic titanate nanofilm matrix, the heat treatment temperature of the E-doped titanate nanofilm needs to be increased by up to 200°C to achieve the same phase transition during the heating process;
For example, a monolithic titanate nanofilm without E-group elements undergoes a phase transition by heat-treating at 450°C for 1h, while the titanate nanofilm containing high value of E-group elements still does not undergo a significant phase transition and shape change within the film matrix by heat-treating at 600°C for 0.5h; and the phase transition and shape change of the film matrix can not be obviously observed by heat-treating at 650°C for 2 min.

Therefore, it is possible to take advantage of the improved thermal stability of the E-doped titanate nanofilm to promote the precipitate of the E nanoparticles through the diffusion and aggregation of the E-group elements in the film matrix by heat treatment, while the shape of the film does not change significantly;
Furthermore, the temperature of the heat treatment is 350°C ~ 650°C;
Furthermore, the temperature of the heat treatment is 350°C ~ 600°C;
Furthermore, the temperature of the heat treatment is 350°C ~ 550°C;
Furthermore, the time of the heat treatment is 2 min ~ 96 h; as a preference, the time of the heat treatment is 10 min ~ 5 h.

When a low value of the temperature range is selected and the content of the E-group elements is high, it takes a long time for the precipitate of the E nanoparticles through element diffusion and aggregation; when a high value of the temperature range is selected and the content of the E-group elements is low, it takes a shorter time for the precipitate of the E nanoparticles through element diffusion and aggregation;
Furthermore, the E nanoparticles have a size of 1.5 nm ~ 10 nm;
Furthermore, the E nanoparticles have a size of 1.5 nm ~ 7.5 nm;
Furthermore, the E nanoparticles have a size of 1.5 nm ~ 5 nm;
Furthermore, the E nanoparticles are present in the titanate nanofilm mainly by means of embeddedness;
The "embedding" refers to a formation mode of in situ generation, i.e., the E nanoparticles are aggregated, grown-up and formed in situ through the diffusion of the doping E-group elements; The embedded E nanoparticles are manifested as being partially or completely embedded in the titanate nanofilm matrix, which does not rely on external addition or external mixed methods to make it embedded.

Furthermore, the thickness of the titanate nanofilm with precipitated E nanoparticles after heat treatment is slightly greater than the thickness before heat treatment;
Furthermore, the thickness of the titanate nanofilm embedded with E nanoparticles is 0.3 nm ~ 10 nm;
Furthermore, the thickness of the titanate nanofilm embedded with E nanoparticles is 0.3 nm ~ 5 nm;
Furthermore, the thickness of the titanate nanofilm embedded with E nanoparticles is 0.3 nm ~ 4 nm;
Furthermore, the thickness of the titanate nanofilm embedded with E nanoparticles is 0.3 nm ~ 2 nm;
Furthermore, in addition to a volume portion embedded in the titanate nanofilm, the E nanoparticle has another volume portion that is not embedded in the film;
Since the embedded E nanoparticles are generated by the diffusion and aggregation of E-group elements originally distributed in the titanate nanofilm, they can be embedded and distributed in the film, and since the film is sufficiently thin, some of the E nanoparticles may have a exposed volume portion outside the film;
Furthermore, the average area of the titanate nanofilm embedded with E nanoparticles is greater than 400 nm²; preferably, the average area of the titanate nanofilm embedded with E nanoparticles is greater than 4,000 nm²; further preferably, the average area of the titanate nanofilm embedded with E nanoparticles is greater than 16,000 nm²;
Furthermore, the main chemical composition of the titanate nanofilm material embedded with E nanoparticles includes E-group elements, Ti, O, and the corresponding cationic element in the alkali, wherein the molar ratio of the E-group elements to Ti satisfies 0 < C_{E}/C_{Ti} ≤ 0.25;
Furthermore, 0 < C_{E}/C_{Ti} ≤ 0.10;
Furthermore, the atomic percentage content of Ag in the E-group elements is 50% ~ 100%; Furthermore, the E-group elements is mainly Ag;
Furthermore, the E-group elements is Ag;
Furthermore, when not all of the E-group elements are Ag, the E-group elements also contains other elements capable of being solid dissolved in Ag or T-Ti intermetallic compounds;
Furthermore, when not all of the E-group elements are Ag, the E-group elements also comprise at least one of Au, Cu, Pt, Pd, Ru, Rh, Os, Ir.

In the third aspect, the present invention also relates to a method of preparing an E-doped titanic acid nanofilm material, wherein the E-doped titanic acid nanofilm material is obtained by reacting the product or the E-doped titanate nanofilm material prepared according to the first aspect with an acid solution and then collecting the solid product.

By reacting with the acid solution, the residual alkali adsorbed on the surface of the E-doped titanate nanofilm material is first neutralized, and then ion exchange between the cations in the E-doped titanate nanofilm material and the hydrogen ions in the acid solution occurs to obtain an E-doped titanic acid nanofilm material. In addition, the as-prepared product is substantially identical to the main characteristics of the product described in the first aspect thereof;
Furthermore, the acid solution includes at least one of hydrochloric acid, nitric acid, sulfuric acid, acetic acid, phosphoric acid, oxalic acid, picric acid, oleic acid, perchloric acid;
Since the two-dimensional E-doped titanate nanofilms or two-dimensional E-doped titanic acid nanofilms prepared by the present method are extremely thin, when the acid concentration is higher than 0.1 mol/L, further dissolution of the E-doped titanic acid nanofilm matrix in the acid solution occurs significantly. Therefore, in order to prevent further dissolution of the E-doped titanic acid nanofilm by reaction with the acid, the acid solution is a dilute acid solution, and the hydrogen ion concentration therein is lower than 0.1 mol/L;
As a preference, the hydrogen ion concentration in the acid solution is 0.0001 mol/L ~ 0.09 mol/L;
As a preference, the hydrogen ion concentration in the acid solution is 0.0001 mol/L ~ 0.05 mol/L;
As a Furthermore preference, the hydrogen ion concentration in the acid solution is 0.0001 mol/L~0.01 mol/L.

Furthermore, the specific step of reacting the E-doped titanate nanofilm material with an acid solution is as follows: the E-doped titanate nanofilm material is dispersed in water, and the acid solution is gradually added while stirring so that the pH of the mixed solution continuously decreases. Finally, the pH of the mixed solution is controlled to be in the range of 2 ~ 5, and after 1 min~5 h, followed by separation and drying, then the E-doped titanic acid nanofilm is obtained. When the pH value is maintained between 2 and 5, corresponding to a concentration of hydrogen ions in the mixed solution is 0.00001 mol/L ~ 0.01 mol/L, it can be ensured that the residual alkali adsorbed on the surface of the E-doped titanate nanofilm material is first neutralized during the whole process, and then the ion exchange between the cations in the E-doped titanate nanofilm material and hydrogen ions in the acid solution takes place, thereby the E-doped titanic acid nanofilm material that has not reacted significantly with the acid solution is obtained.

Furthermore, the thickness of the E-doped titanic acid nanofilm is 0.25 nm~7.5 nm; Furthermore, the thickness of the E-doped titanic acid nanofilm is 0.25 nm~4 nm; as a preference, the thickness of the E-doped titanic acid nanofilm is 0.25 nm~3 nm; as a preference, the thickness of the E-doped titanic acid nanofilm is 0.25 nm~2 nm;
Furthermore, the average area of the E-doped titanic acid nanofilm is greater than 500 nm²; as a preference, the average area of the E-doped titanic acid nanofilm is greater than 5000 nm²; as a Furthermore preference, the average area of the E-doped titanic acid nanofilm is greater than 20000 nm²;
Furthermore, the titanic acid nanofilms doped with E-group elements are predominantly of low crystallinity;
Furthermore, the chemical composition of the E-doped titanic acid nanofilm material includes the E-group elements, Ti, H, and O elements; wherein the molar ratio of the E-group elements to Ti satisfies 0 < C_{E}/C_{Ti} ≤ 0.25;
Furthermore, 0 < C_{E}/C_{Ti} < 0.10;
Furthermore, the E-group elements is mainly distributed in the nano acid titanate film as atoms or atomic clusters;
Furthermore, when the E-group elements is distributed mainly as atoms or atomic clusters in the titanic acid nanofilm, the titanic acid nanofilm can be viewed as a single-phase material. That is, the E-group elements, and other titanate constituent elements such as Ti, H, O, are uniformly distributed in the film as atoms or atomic clusters, and the E-group elements do not nucleate and grow into the E nanoparticle phase in addition to the titanic acid phase. As a result, the as-prepared product can be understood as a titanic acid nanofilm doped with the E constituent elements, a titanic acid nanofilm with the E constituent elements solid dissolved, or a completely new substance such as a titanic acid (silver) nanofilm;
Furthermore, the E-group elements is mainly distributed in the titanate nanofilm in a embedding form as atoms or atomic clusters; the key feature of the embedding distribution is that the E-group elements is mainly confined in the titanic acid nanofilm in the form of atoms or atomic clusters, and the atomic diffusion can only take place when a certain temperature is achieved; at the same time, due to the pinning effect of the E-group elements, it will greatly improve the thermal stability of the titanic acid nanofilm matrix. For a detailed introduction, please refer to the following text corresponding to it.

Furthermore, when the E-group elements is present in the E-doped titanic acid nanofilm in the form of atoms or atomic clusters, due to the pinning effect of the atoms of the E-group elements, the thermal stability of the phase transition of the titanic acid nanofilm matrix can be increased by up to 200°C; and the higher the content of E is, the higher the thermal stability of the phase transition is. That is, compared with the monolithic titanic acid nanofilm matrix, the heat treatment temperature of the E-doped titanic acid nanofilm needs to be increased by up to 200°C to achieve the same phase transition during the heating process;
This increase in the thermal stability of the phase transition further indicates that the E-group elements is doped in the titanic acid matrix on an atomic or atomic cluster scale, rather than as an obvious E nanoparticle phase. If it present as an obvious E nanoparticle phase, and the titanic acid film matrix and the E nanoparticle phase are separate and independent phases, the phase transition thermal stability of the titanic acid matrix can not be greatly affected by the presence of E nanoparticle phase.

Furthermore, the process of collecting the solid product includes a drying process;
Furthermore, the drying temperature is 50°C ~ 3 50°C;
Furthermore, the drying temperature is 50°C ~ 300°C;
Furthermore, the drying time is 1 min ~ 24 h;
Furthermore, the drying time is 5 min ~ 2 h;
Furthermore, when the drying time is in a low value range, the drying temperature is in a high value range;
Furthermore, when the drying temperature is in a low value range, the drying time is in a high value range;
Since the E-group elements is mainly Ag, according to the characteristics of the Ag element, it is easy to oxidize into Ag₂O drying at treatment below 180°C, while the Ag₂O will decompose into Ag when the drying temperature is above 180°C, therefore:
   Furthermore, when the drying temperature takes the low value of the range, the E-doped titanic acid nanofilm contains O-bound Ag atoms or Ag clusters;
   As a preference, when the drying temperature is 50°C ~ 180°C, the E-doped titanic acid nanofilm contains O-bound Ag atoms or Ag clusters;
   As a preference, when the drying temperature is 50°C ~ 180°C, the E-doped titanic acid nanofilm contains O-bound Ag₂O clusters;
   Since the O-Ag bond will break and decompose at higher temperatures, when the drying temperature takes the high value of the range, the O that is bound with Ag will separate from Ag due to the breakage of the O-Ag bond;
   Furthermore, when the drying temperature takes the high value of the range, the E-group elements is mainly distributed in the titanic acid nanofilm as atoms or atomic clusters;
   As a preference, when the drying temperature is 181°C ~ 350°C, the E-group elements are mainly distributed among the titanic acid nanofilm in the form of atoms or atomic clusters.

Therefore, the degree of bonding with Ag and O can be controlled by the control of the drying temperature and drying time.

Furthermore, when the drying temperature is lower than 350°C, the shape of the titanic acid nanofilm remains substantially unchanged and the E elements remain embedded and distributed in the titanic acid nanofilm as atoms or atomic clusters;
Furthermore, the atomic clusters containing E-group elements have a size of less than 1.5 nm;
Furthermore, the atomic clusters containing E-group elements have a size of less than 1 nm, and when the atomic clusters containing E-group elements are less than 1 nm, the size of such atomic clusters is insufficient to form E-phase nanoparticles that are distinguishable at the phase interface and it is difficult to distinguish the atomic clusters containing E-group elements from the matrix by means of observation, such as transmission electron microscopy (TEM); thus in this scale, it is uniformly distributed in the matrix.

Furthermore, the E-group elements are mainly distributed as atoms in the titanic acid nanofilm.

Furthermore, the atomic percentage content of Ag in the E-group elements is 50% ~ 100%; Furthermore, the E-group elements is mainly Ag; the E-group elements is Ag;
Furthermore, when not all of the E-group elements are Ag, the E-group elements also contain other elements capable of being solid dissolved in Ag or T-Ti intermetallic compounds;
Furthermore, when not all of the E-group elements are Ag, the E-group elements further include at least one of Au, Cu, Pt, Pd, Ru, Rh, Os, Ir.

In the fourth aspect, the present invention also relates to a method of preparing a titanic acid nanofilm material embedded with E nanoparticles, wherein the titanic acid nanofilm material embedded with E nanoparticles is prepared by heat-treating the product or the E-doped titanic acid nanofilm material prepared according to the third aspect.

The thermal stability of the titanic acid nanofilm will be improved due to the presence of the doped E-group elements, and the thickening and shrinkage of the film under heating will be hindered by the doped E-group elements. Therefore, the thickness of the titanic acid nanofilm does not change significantly (it maintains in a thin film state), by controlling the heat treatment temperature and time during the heat treatment process. While the doped E-group elements, which are mainly distributed in the titanic acid nanofilm in the form of atoms or atomic clusters, will transform into E nanoparticles embedded in the titanic acid nanofilm by elemental diffusion and aggregation. This kind of embedded E nanoparticles is different from the ordinary nanoparticles adsorbed through van der Waals force that is reported in other literatures (nanoparticles adsorbed through van der Waals force can move and detach from the substrate). This kind of embedded E nanoparticles ensure that the E nanoparticles can be tightly embedded within the titanic acid nanofilm (it cannot move or detach from the substrate). When all of the E-group elements, which are mainly distributed as atoms or atomic clusters, have been aggregated into E nanoparticles, it is difficult for them to continue to merge and grow due to the island-like distribution of the E nanoparticles, which cannot be connected by the spatial obstruction of the titanic acid nanofilm matrix. Therefor, the particle size of the E nanoparticles can be kept roughly unchanged during the subsequent heating process.

Furthermore, the temperature of the heat treatment is 350°C ~ 650°C;
Furthermore, the temperature of the heat treatment is 350°C ~ 600°C;
Furthermore, the temperature of the heat treatment is 350°C ~ 550°C;

The heat treatment temperature ensures that the doped E-group elements generates E nanoparticles embedded in the titanic acid nanofilm through elemental diffusion and aggregation, while maintaining the morphology of the titanic acid nanofilm matrix without significant changes, except for a slight thickening of the thickness.

Furthermore, when the E-group elements is present in the E-doped titanic acid nanofilm in the form of atoms or atomic clusters, due to the pinning effect of the atoms of the E-group elements, the phase transition thermal stability of the phase transition of the titanic acid nanofilm matrix can be increased by up to 200°C; and the higher the E content is, the higher the phase transition thermal stability is. That is, compared with the monolithic titanic acid nanofilm matrix, the heat treatment temperature of the E-doped titanic acid nanofilm needs to be increased by up to 200°C to achieve the same phase transition during the heating process;
For example, the monolithic titanic acid nanofilm without E-group elements undergoes a phase transition by heat-treating at 450°C for 1h, while the titanic acid nanofilm containing high value of E-group elements still does not undergo a significant phase transition within the film matrix by heat-treating at 600°C for 0.5h;
Furthermore, the time of the heat treatment is 5 min ~ 96 h;
As a preference, the time of the heat treatment is 10 min ~ 5 h;
When a low value of the temperature range is selected and the content of the E-group elements is high, a longer time is required for the precipitate of the E nanoparticles through element diffusion and aggregation; when a high value of the temperature range is selected and the content of the E-group elements is low, a shorter time is required for the precipitate of the E nanoparticles through element diffusion and aggregation;
Furthermore, the E nanoparticles have a size of 1.5 nm ~ 10 nm;
Furthermore, the E nanoparticles have a size of 1.5 nm ~ 7.5 nm;
Furthermore, the E nanoparticles have a size of 1.5 nm ~ 5 nm;
Furthermore, the E nanoparticles are present in the titanic acid nanofilm mainly by means of embeddedness;
The "embedding" refers to a formation mode of in situ generation, i.e., the E nanoparticles are aggregated, grown-up and formed in situ through the diffusion of the doping E-group elements; The embedded E nanoparticles are manifested as being partially or completely embedded in the titanic acid nanofilm matrix, which does not rely on external addition or external mixed methods to make it embedded.

Furthermore, the thickness of the titanic acid nanofilm after heat treatment is slightly greater than the thickness before heat treatment;
Furthermore, the titanic acid nanofilm embedded with E nanoparticles has a thickness of 0.3 nm ~ 10 nm;
Furthermore, the titanic acid nanofilm embedded with E nanoparticles has a thickness of 0.3 nm ~ 5 nm;
Furthermore, the titanic acid nanofilm embedded with E nanoparticles has a thickness of 0.3 nm ~ 4 nm;
Furthermore, the titanic acid nanofilm embedded with E nanoparticles has a thickness of 0.3 nm ~ 2 nm;
Furthermore, in addition to a volume portion embedded in the titanic acid nanofilm, the E-nanoparticles have a bare volume portion that is not embedded in the film;
Since the embedded E nanoparticles are generated by diffusion and aggregation of E-group elements originally distributed in the titanic acid nanofilm, they can be embedded and distributed in the film, and since the film is sufficiently thin, some of the E nanoparticles may also be exposed outside the film;
Since the embedded E nanoparticles are generated by the diffusion and aggregation of E-group elements originally distributed in the titanate nanofilm, they can be embedded and distributed in the film, and since the film is sufficiently thin, some of the E nanoparticles may have a exposed volume portion outside the film;
Furthermore, the average area of the titanic acid nanofilm embedded with E nanoparticles is greater than 400 nm²;
As a preference, the average area of the titanic acid nanofilm embedded with E nanoparticles is greater than 4000 nm²;
As a Furthermore preference, the average area of the titanic acid nanofilm embedded with E nanoparticles is greater than 16000 nm²;
Furthermore, the chemical composition of the titanic acid nanofilm material embedded with E nanoparticles includes E-group elements, Ti, H, O elements; wherein the molar ratio of E-group elements to Ti satisfies 0 < C_{E}/C_{Ti}≤ 0.25;
Furthermore, 0 < C_{E}/C_{Ti} ≤ 0.10;
Furthermore, the atomic percentage content of Ag in the E-group elements is 50% ~ 100%;
Furthermore, the E-group elements is mainly Ag; Furthermore, the E-group elements is Ag;
Furthermore, when not all of the E-group elements are Ag, the E-group elements also contain other elements capable of being solid dissolved in Ag or T-Ti intermetallic compounds;
Furthermore, when not all of the E-group elements are Ag, the E-group elements comprise at least one of Au, Cu, Pt, Pd, Ru, Rh, Os, Ir.

In the fifth aspect, the present invention also relates to a method of preparing a TiO₂ nanosheet powder embedded with E nanoparticles, wherein the TiO₂ nanosheet powder is prepared by heat-treating the product or the titanic acid nanofilm material doped with E-group elements prepared according to the third aspect thereof, or by heat-treating the product or the titanic acid nanofilm material embedded with E nanoparticles prepared according to the fourth aspect thereof.

Furthermore, the time for the heat treatment is 1 min ~ 48 h;
As a preference, the time for the heat treatment is 10 min ~ 3 h;
Furthermore, the temperature range of the heat treatment is 600°C - 1500°C;
Furthermore, the temperature range of the heat treatment is 600°C - 1000°C;
Furthermore, the heat treatment process generates nano-TiO₂;
When a low value of the temperature range is selected, a longer time is required to convert the titanic acid nanofilm into TiO₂ nano-sheets, and when a high value of the temperature range is selected, a shorter time is required to convert the titanic acid nanofilm into TiO₂ nano-sheets;
Furthermore, during the heat treatment process, and when the material subjected to heat treatment is a titanic acid nanofilm material doped with E-group elements, the diffusion and aggregation of the doped E-group elements first occurs therein to generate E nanoparticles embedded in the titanic acid nanofilm. With the increase of heat treatment temperature and time, the titanic acid nanofilm will shrink in area, increase in thickness, and change from titanic acid nanofilm to TiO₂ nano-powder. Since the E nanoparticles embedded in the titanic acid nanofilm are separated and isolated by the titanic acid nanofilm matrix, it is difficult for the E nanoparticles that have been completely generated to continue to merge with each other and grow up, and their sizes and morphologies will be in a stable state in the process of phase transformation and thickening. That is, after all of the E-group elements existing as atoms or atomic clusters in the matrix are transformed into E nanoparticles, there is no additional source of E-group elements, and the dispersedly distributed E nanoparticles that have already been generated can not grow up significantly with the increase of the heat treatment temperature and the prolongation of the heat treatment time;
During the heat treatment process, and when the material undergoing heat treatment is a titanic acid nanofilm material embedded with E nanoparticles, since the E nanoparticles embedded in the titanic acid nanofilms are separated and isolated by the titanic acid nanofilm matrix, in the process of the phase transformation and thickening of the titanic acid nanofilms, if all of the E-group elements in the titanic acid nanofilm matrix that are present in the form of atoms or atomic clusters have been transformed into E nanoparticles, there is no additional source of E-group elements, it is difficult for the generated dispersed E nanoparticles to continue to merge with each other and grow up, and their sizes and morphologies will be in a stable state, i.e., they can not grow up with the increase of the heat treatment temperature and the prolongation of the heat treatment time.
Furthermore, when the thickness of the generated TiO₂ nanosheet does not exceed the outer diameter of the E nanoparticles, the E nanoparticles are partially embedded and distributed in the TiO₂ nanosheet;
Furthermore, when the thickness of the generated TiO₂ nanosheet exceeds the outer diameter of the E nanoparticles, the E nanoparticles are wholly or partially embedded and distributed in the TiO₂ nanosheet;
Furthermore, the phase composition of the nano-TiO₂ in the TiO₂ nanosheet powder containing the E nanoparticles includes at least one of brookite-type nano-TiO₂, anatase-type nano-TiO₂, and rutile-type nano-TiO₂.

Furthermore, during the heat treatment process, in addition to the diffusion and aggregation of the doped E-group elements to generate the E nanoparticles embedded in the titanic acid nanofilms, the morphology of the titanic acid nanofilm matrix will further undergo a transformation from a film to a sheet with a significant increase in the thickness, and at the same time, a transformation from titanic acid to TiO₂ will also occur.

Specifically, as the heat treatment temperature and the heat treatment time increase, the product of the heat treatment of the titanic acid nanofilms embedded with E nanoparticles undergoes a continuous transformation from "titanic acid nanofilms embedded with E nanoparticles" → "anatase-type TiO₂ nanosheets embedded with E nanoparticles" → "rutile-type TiO₂ nanosheets embedded with E nanoparticles". Certain examples also do not exclude the appearance of brookite-type TiO₂ sheets embedded with E nanoparticles.

During the transformation process, the coexistence of two crystalline TiO₂ may occur in the products corresponding to certain heat treatment temperatures and times, such as the coexistence of "titanic acid nanofilms embedded with E nanoparticles" and "anatase-type TiO₂ nanosheets embedded with E nanoparticles", as well as the coexistence of "anatase-type TiO₂ nanosheets embedded with E nanoparticles" and "rutile TiO₂ nanosheets embedded with E nanoparticles".

Furthermore, the TiO₂ nanosheet embedded with E nanoparticles has a shape of a plate sheet;
Furthermore, the TiO₂ nanosheet embedded with E nanoparticles has a thickness of 1.0 nm ~ 30 nm;
Furthermore, the TiO₂ nanosheet embedded with E nanoparticles has a thickness of 1.0 nm ~ 20 nm;
Furthermore, the average area of the TiO₂ nanosheets embedded with E nanoparticles is greater than 100 nm²;
Furthermore, the average area of the TiO₂ nanosheet embedded with E nanoparticles is greater than 1000 nm²;
Furthermore, the average area of the TiO₂ nanosheets embedded with E nanoparticles is greater than 4000 nm²;
Furthermore, the E nanoparticles have a size of 1.5 nm ~ 10 nm;
Furthermore, the E nanoparticles have a size of 1.5 nm ~ 7.5 nm;
Furthermore, the E nanoparticles have a size of 1.5 nm ~ 5 nm;
Furthermore, the E nanoparticles are present in the TiO₂ nanosheets mainly by means of embeddedness;
Furthermore, the chemical composition of the TiO₂ nanosheets embedded with E nanoparticles includes E-group elements, Ti, and O element; wherein the molar ratio of E-group elements to Ti satisfies 0< C_{E}/C_{Ti} ≤ 0.25;
Furthermore, 0 < C_{E}/C_{Ti} ≤ 0.10;
Furthermore, the atomic percentage content of Ag in the E-group elements is 50% ~ 100%; Furthermore, the E-group elements is mainly Ag; Furthermore, the E-group elements is Ag;
Furthermore, when not all of the E-group elements are Ag, the E-group elements also contain other elements capable of being solid dissolved in Ag or T-Ti intermetallic compounds;
Furthermore, when not all of the E-group elements are Ag, the E-group elements comprise at least one of Au, Cu, Pt, Pd, Ru, Rh, Os, Ir.

In the sixth aspect, the present invention also relates to a method of preparing E-doped titanate nanotubes, comprising the following steps:
sealing a solid substance with a alkaline solution in a closed vessel, wherein the solid substance is the product or the titanate nanofilm doped with E-group elements prepared according to the first aspect, or (and) the product or the titanic acid nanofilm doped with E-group elements prepared according to the third aspect, then the solid substance and the alkaline solution in the closed vessel were treated by a high pressure and a high temperature of *T₂* which is higher than that of the *T_{f solution}*; wherein the *T_{f solution}* is the boiling temperature of the alkali solution involved in the reaction at ambient pressure, and *T_{f solution}* ≤ *T₂*; after a certain time of reaction, the temperature of the closed vessel is reduced and the pressure is restored to ambient pressure, and the final solid product is collected, i.e., the E-doped titanate nanotubes are obtained.

Furthermore, the alkaline solution includes at least one of NaOH, KOH, LiOH, RbOH, Ba(OH)₂, Ca(OH)₂, Sr(OH)₂ solution;
Furthermore, the solvent in the alkaline solution includes water; as a preference, the solvent in the alkaline solution is water;
Furthermore, the concentration of alkali in the alkaline solution is 5.1 ~ 25 mol/L;
As a preference, the concentration of alkali in the alkaline solution is 5.1 ~ 15 mol/L;
As a preference, the concentration of alkali in the alkaline solution is 7 ~ 15 mol/L;
As a furthermore preference, the concentration of alkali in the alkaline solution is 7 ~ 12 mol/L;
As a furthermore preference, the concentration of alkali in the alkaline solution is 10 ~15 mol/L;
Furthermore, the concentration of alkaline refers to the concentration of OH⁻ in the alkaline;
Furthermore, the alkali in the alkaline solution mixed with the solid substance containing the titanate nanofilm doped with E-group elements as described in the first aspect thereof or (and) the titanic acid nanofilm doped with E-group elements as described in the third aspect thereof is in an excess dose of alkali, and the volume of the alkaline solution is more than 5 times the volume of the solid substance;
Furthermore, the volume of the alkaline solution is more than 10 times the volume of the solid substance; Furthermore, the volume of the alkaline solution is more than 20 times the volume of the solid substance;
As a preferred example,
   the "solid substance containing a titanate nanofilm doped with E-group elements as described in the first aspect thereof or (and) a titanic acid nanofilm doped with E-group elements as described in the third aspect thereof and an alkaline solution" is the solid flocculent product containing E-group elements and the corresponding alkaline solution after the hydrogen generation and T-removal reaction as described in step 1 and 2 in the first aspect;
i.e.: sealing a solid substance with a alkaline solution in a closed vessel, wherein the solid substance is the solid flocculent product containing E-group elements and the corresponding alkaline solution after the hydrogen generation and T-removal reaction as described in step 1 and 2 in the first aspect; then the solid substance and the alkaline solution in the closed vessel were treated by a high pressure and a high temperature of *T₂* which is higher than that of the *T_{f solution}*; wherein the *T_{f solution}* is the boiling temperature of the alkali solution involved in the reaction at ambient pressure, and *T_{f solution}* < *T₂*; after a certain time of reaction, the temperature of the closed vessel is reduced and the pressure is restored to ambient pressure, and the final solid product is collected, i.e., the E-doped titanate nanotubes are obtained.

This preferred solution does not require separation of the solid flocculent product containing E-group elements and the corresponding alkaline solution, followed by mixing the solid flocculent product containing E-group elements with an alkali, nor does it require the alkaline solution to be cooled down and then warmed up (*T₁* < *T₂*), and the alkali concentration meets the requirements of the high temperature and high pressure reaction of this preferred solution. Therefore, this is the most economical and simple operation scheme.

Furthermore, during the high temperature and high pressure treatment, titanate film or (and) titanic acid film is converted to tubular titanate and *T_{f solution}* < *T₂*;
Furthermore, *T₁* ≤ *T_{f solution}* < *T₂*;
Furthermore, the reaction is carried out in a closed vessel above atmospheric pressure so that the temperature of the alkaline solution can be heated above its boiling point temperature at atmospheric pressure, *T_{f solution}*, thereby achieving the conversion of the titanate nanofilm doped with E-group elements or (and) the titanic acid nanofilm doped with E-group elements to tubular titanate at high temperature and pressure.

Furthermore, in the closed container, when the alkaline solution species and concentration are determined, a determined value of temperature must correspond to a determined value of pressure, i.e., the value of pressure is a function of the value of temperature; the higher the temperature, the higher the pressure.
Furthermore, *T_{f solution}* < *T₂* < 300°C;
Furthermore, *T_{f solution}* < *T₂* < 250°C;
Furthermore, *T_{f solution}* < *T₂* < 200°C;
Furthermore, *T_{f solution} <* 120°C < *T₂* < 200°C;
Furthermore, *T_{f solution}* <140°C < *T₂ <* 200°C;
Furthermore, *T_{f solution}* <150°C < *T₂ <* 180°C;
Furthermore, the *T₂* temperature autoclave treatment time is 0.1h~10h; Furthermore, the *T₂* temperature autoclave treatment time is 0.1 h ~ 1 h; Furthermore, the *T₂* temperature autoclave treatment time is 0.1 h ~ 0.5 h; Furthermore preferably, the *T₂* temperature autoclave treatment time is 0.1 h ~ 0.2 h;
Since the product can also be obtained by continuing the holding time after the reaction equilibrium, the holding time can also be selected as a longer time value.

Furthermore, the E-doped titanate nanotubes have an outer diameter of 2 nm ~ 20 nm;
Furthermore, the E-doped titanate nanotubes have an outer diameter of 3 nm ~ 15 nm;
Furthermore, the average length of the E-doped titanate nanotubes is greater than 5 times its average outer diameter.
Furthermore, the E-doped titanate nanotubes are mainly low crystallinity titanates;
Furthermore, the cationic elements in the titanate nanotubes are derived from corresponding cationic elements in the alkali;
Furthermore, the chemical composition of the E-doped titanate nanotubes includes E-group elements, Ti, O, and the corresponding cationic element in the alkal; wherein the molar ratio of the E-group elements to Ti satisfies 0 < *C_{E}lC_{Ti}* ≤ 0.25; for example, when the alkali is NaOH, the corresponding cationic element in the alkali is Na, and the E-doped titanate nanotubes of the chemical composition includes E, Ti, O, and the element Na.

Furthermore, 0 < *C_{E}*/*C_{Ti}* ≤ 0.10;
Furthermore, the E-group elements is mainly distributed in the titanate nanotubes as atoms or atomic clusters;
Furthermore, when the E-group elements is mainly distributed among the titanate nanotubes in the form of atoms or atomic clusters, the titanate nanotubes can be viewed as a single-phase material. That is to say, the E-group elements are uniformly distributed in the titanate nanotubes as the titanate nanotubes constituent elements are distributed as atoms or atomic clusters, and the E-group elements do not nucleate and grow into the E nanoparticle phase other than the titanate phase. At this time, the as-prepared product can be understood as E-doped titanate nanotubes, or as titanate nanotubes with E-group elements solid dissolved, or as a completely new substance, such as titanate (silver) nanotubes;
Furthermore, the E-group elements is mainly distributed in the titanate nanotubes in a embedding form as atoms or atomic clusters; the key feature of the embedding distribution is that the E-group elements is mainly confined in the titanate nanotubes in the form of atoms or atomic clusters, and the atomic diffusion can only take place when a certain temperature is achieved; at the same time, due to the pinning effect of the E-group elements, it can greatly improve the thermal stability of the titanate nanotubes matrix. For a detailed introduction, please refer to the following text corresponding to it.

Furthermore, when the E-group elements is present in the E-doped titanate nanotubes in the form of atoms or atomic clusters, due to the pinning effect of the atoms of the E-group elements, the thermal stability of the phase transition of the titanate nanotubes matrix can be increased by up to 200°C; and the higher the content of E is, the higher the thermal stability of the phase transition is. That is, compared with the monolithic titanate nanotubes matrix, the heat treatment temperature of the E-doped titanate nanotubes needs to be increased by up to 200°C to achieve the same phase transition during the heating process;
This increase in the thermal stability of the phase transition further indicates that the E-group elements is doped in the titanate nanotubes matrix on an atomic or atomic cluster scale, rather than as an obvious E nanoparticle phase. If it present as an obvious E nanoparticle phase, and the titanate nanotubes matrix and the E nanoparticle phase are separate and independent phases, the phase transition thermal stability of the titanate nanotubes matrix can not be greatly affected by the presence of E nanoparticle phase.

Furthermore, the process of collecting the final solid product includes a drying process, i.e. to obtain E-doped titanate nanotubes in powder form.

Furthermore, the drying temperature is 50°C ~ 3 50°C;
Furthermore, the drying temperature is 50°C ~ 300°C;
Furthermore, the drying time is 1 min ~ 24 h;
Furthermore, the drying time is 5 min ~ 2 h;
Furthermore, the drying time is in a low value range when the drying temperature is in a high value range;
Furthermore, the drying time is in a high value range when the drying temperature is in a low value range;
Since the E-group elements is mainly Ag, according to the characteristics of the Ag element, it is easy to oxidize into Ag₂O drying at treatment below 180°C, while the Ag₂O will decompose into Ag when the drying temperature is above 180°C, therefore:
   Furthermore, when the drying temperature takes the low value of the range, the E-doped titanate nanotubes contain O-bound Ag atoms or Ag clusters;
   As a preference, when the drying temperature is 50°C ~ 180°C, the E-doped titanate nanotubes contain O-bound Ag atoms or Ag clusters;
   As a preference, when the drying temperature is 50°C ~ 180°C, the E-doped titanate nanotubes contain O-bound Ag₂O clusters;
   Since the O-Ag bond will break and decompose at higher temperatures, when the drying temperature takes the high value of the range, the O that is bound with Ag will separate from Ag due to the breakage of the O-Ag bond;
   Furthermore, when the drying temperature takes the high value of the range, the E-group elements are mainly distributed in the titanate nanotubes in the form of atoms or atomic clusters;
   As a preference, when the drying temperature is 181°C ~ 350°C, the E-group elements are mainly distributed among the titanate nanotubes in the form of atoms or atomic clusters.

Therefore, the degree of bonding with Ag and O can be controlled by the control of the drying temperature and drying time.

Furthermore, when the drying temperature is lower than 350°C, the shape of the titanate nanotubes remains substantially unchanged and the E elements remain embedded and distributed in the titanate nanotubes as atoms or atomic clusters;
Furthermore, the atomic clusters containing E-group elements have a size of less than 1.5 nm;
Furthermore, the atomic clusters containing E-group elements have a size of less than 1 nm, and when the atomic clusters containing E-group elements are less than 1 nm, the size of such atomic clusters is not sufficient to form E-phase nanoparticles that are distinguishable at the phase interface and it is difficult to distinguish the atomic clusters containing E-group elements from the titanate nanotube matrix by means of observation, such as transmission electron microscopy (TEM); thus in this scale, it is uniformly distributed in the matrix.

Furthermore, the E-group elements is mainly distributed in the titanate nanotubes in the form of atoms;
Furthermore, the E-doped titanate nanotubes are mainly prepared by high-temperature and high-pressure treatment of the E-doped titanate nanofilm, so that when the high-temperature and high-pressure treatment is incomplete, the as-prepared product will also contain the E-doped titanate nanofilm;
Furthermore, the weight percentage content of the E-doped titanate nanotubes in the final product is higher than 50%;
Furthermore, the weight percentage content of the E-doped titanate nanotubes in the final product is higher than 90%;
Furthermore, the atomic percentage content of Ag in the E-group elements is 50% ~ 100%; Furthermore, the E-group elements is mainly Ag; Furthermore, the E-group elements is Ag;
Furthermore, when not all of the E-group elements are Ag, the E-group elements also contain other elements capable of being solid dissolved in Ag or T-Ti intermetallic compounds;
Furthermore, when not all of the E-group elements are Ag, the E-group elements comprise at least one of Au, Cu, Pt, Pd, Ru, Rh, Os, Ir.

In the seventh aspect, the present invention also relates to a method of preparing titanate nanotubes embedded with E nanoparticles, wherein the titanate nanotubes embedded with E nanoparticles are prepared by heat-treating the final product or the titanate nanotubes doped with E-group elements prepared according to the sixth aspect.

Since the thermal stability of the titanate nanotubes is improved by the presence of the doped E-group elements, the titanate nanotubes can be kept virtually unchanged in morphology and phase composition by controlling the appropriate heat treatment temperature and time during the heat treatment process, The E-doped group element, which is mainly distributed in the titanate nanotubes in the form of atoms or atomic clusters, can transform into E nanoparticles embedded in the titanate nanotubes by elemental diffusion and aggregation. This kind of embedded E nanoparticles is different from the ordinary nanoparticles adsorbed through van der Waals force that is reported in other literatures (nanoparticles adsorbed through van der Waals force can move and detach from the substrate). This kind of embedded E nanoparticles ensure that the E nanoparticles can be tightly embedded within the titanate nanotubes (it cannot move or detach from the substrate). When all of the E-group elements, which are mainly distributed as atoms or atomic clusters, have been aggregated into E nanoparticles, it is difficult for them to continue to merge and grow due to the island-like distribution of the E nanoparticles, which cannot be connected by the spatial obstruction of the titanate nanotube matrix. Therefor, the particle size of the E nanoparticles can be kept roughly unchanged during the subsequent heating process.

Furthermore, when the E-group elements is present in the E-doped titanate nanotube in the form of atoms or atomic clusters, due to the pinning effect of the atoms of the E-group elements, the thermal stability of the phase transition of the titanate nanotube matrix can be increased by a maximum of 200°C; and the higher the E content is, the higher the thermal stability of the phase transition is. That is, compared with the monolithic titanate nanotube matrix, the heat treatment temperature of the E-doped titanate nanotube needs to be increased by up to 200°C to achieve the same phase transition during the heating process;
Furthermore, the temperature of the heat treatment is 350°C ~ 650°C;
Furthermore, the temperature of the heat treatment is 350°C ~ 600°C;
Furthermore, the temperature of the heat treatment is 350°C ~ 550°C;
Furthermore, the time of the heat treatment is 2 min ~ 96 h;
Furthermore, the time of the heat treatment is 5 min ~ 10 h;
As a preference, the time of the heat treatment is 10 min ~ 5 h;
When a low value of the temperature range is selected and the content of the E-group elements is high, a longer time is required for the precipitate of the E nanoparticles through element diffusion and aggregation; when a high value of the temperature range is selected and the content of the E-group elements is low, a shorter time is required for the precipitate of the E nanoparticles through element diffusion and aggregation;
Furthermore, the E nanoparticles have a size of 1.5 nm ~ 10 nm;
Furthermore, the E nanoparticles have a size of 1.5 nm ~ 7.5 nm;
Furthermore, the E nanoparticles have a size of 1.5 nm ~ 5 nm;
Furthermore, the E nanoparticles are mainly present in titanate nanotubes by means of embeddedness;
The "embedding" refers to a formation mode of in situ generation, i.e., the E nanoparticles are aggregated, grown-up and formed in situ through the diffusion of the doping E-group elements; The embedded E nanoparticles are manifested as being partially or completely embedded in titanate nanotube matrix, which does not rely on external addition or external mixed methods to make it embedded.

Furthermore, the titanate nanotubes embedded with E nanoparticles have an outer diameter of 2 nm ~ 20 nm;
Furthermore, the titanate nanotubes embedded with E nanoparticles have an outer diameter of 3 nm ~ 15 nm;
Furthermore, the titanate nanotubes embedded with E nanoparticles have an average length greater than 5 times their average outer diameter;
Furthermore, the embedded E nanoparticles are embedded in a way that includes all of the nanoparticles embedded in the titanate nanotubes, or part of the E nanoparticles embedded in the titanate nanotubes, and also includes an exposed portion that is not embedded in the titanate nanotubes.
Furthermore, the main chemical composition of the titanate nanotubes embedded with E nanoparticles includes E-group elements, Ti, O, and the corresponding cationic element in the corresponding alkaline solution of the original preparation process, wherein the molar ratio of E-group elements to Ti satisfies 0 < *C_{E}*/*C_{Ti}*≤ 0.25;
Furthermore, 0 < *C_{E}*/*C_{Ti}* ≤ 0.10;
Furthermore, the atomic percentage content of Ag in the E-group elements is 50% ~ 100%;
Furthermore, the E-group elements is mainly Ag; Furthermore, the E-group elements isAg;
Furthermore, when not all of the E-group elements are Ag, the E-group elements also contain other elements capable of being solid dissolved in Ag or T-Ti intermetallic compounds;
Furthermore, when not all of the E-group elements are Ag, the E-group elements comprise at least one of Au, Cu, Pt, Pd, Ru, Rh, Os, Ir.

In the eighth aspect, the present invention also relates to a method of preparing titanic acid nanotubes doped with E-group elements, wherein the titanic acid nanotubes doped with E-group elements are obtained by reacting the final product or the titanate nanotubes doped with E-group elements prepared according to the sixth aspect with an acid solution and collecting the solid product.

Furthermore, the acid solution includes at least one of hydrochloric acid, nitric acid, sulfuric acid, acetic acid, phosphoric acid, oxalic acid, picric acid, oleic acid, perchloric acid.

By reacting with the acid solution, the residual alkali adsorbed on the surface of the E-doped titanate nanotubes is first neutralized, and then ion exchange between the E-doped titanate nanotubes and the hydrogen ions in the acid solution occurs, and then the E-doped titanic acid nanotubes are obtained.

Since the titanic acid nanotubes have a slightly smaller specific surface area than the titanic acid nanofilm, the reaction can be carried out in an acid with a slightly higher concentration compared to the acid solution in the third aspects thereof;
Furthermore, the hydrogen ion concentration in the acid solution is 0.001 mol/L ~ 0.2 mol/L;
As a preference, the hydrogen ion concentration in the acid solution is 0.001 mol/L ~ 0.1 mol/L;
As a preference, the hydrogen ion concentration in the acid solution is 0.001 mol/L ~ 0.05 mol/L;
Furthermore, the specific step of reacting the E-doped titanate nanotube material with the acid solution is as follows: the E-doped titanate nanotube material is dispersed in water, and the acid solution is gradually added while stirring so that the pH of the mixed solution continuously decreases. Finally, the pH of the mixed solution is controlled to be in the range of 2 ~ 5, and after 1 min~5 h, followed by separation and drying then the E-doped titanic acid nanotube material was obtained. Since the titanate nanotubes are rolled up with a certain thickness, when the pH value is maintained between 2 and 4, corresponding to a concentration of hydrogen ions in the mixed solution is 0.0001 mol/L ~ 0.01 mol/L, it can be ensured that the residual alkali adsorbed on the surface of the E-doped titanate nanotube material is first neutralized during the whole process, and then the ion exchange between the cations in the E-doped titanate nanotube and hydrogen ions in the acid solution takes place, thereby the E-doped titanic acid nanotube material that has not reacted significantly with the acid solution is obtained.

Furthermore, the E-doped titanic acid nanotubes have an outer diameter of 2 nm ~ 20 nm;
Furthermore, the E-doped titanic acid nanotubes have an outer diameter of 3 nm ~ 15 nm;
Furthermore, the average length of the E-doped titanic acid nanotubes is greater than 5 times its average outer diameter;
Furthermore, the E-doped titanic acid nanotubes are mainly low crystallinity titanate;
Furthermore, the chemical composition of the E-doped titanic acid nanotubes includes E, Ti, O, H; wherein the molar ratio of the E-group elements to Ti satisfies 0 < *C_{E}*/*C_{Ti} <* 0.25;
Furthermore, 0 < *C_{E}*/*C_{Ti}* ≤ 0.10;
Furthermore, the E-group elements is mainly distributed in the titanic acid nanotubes as atoms or atomic clusters;
Furthermore, when the E-group elements is distributed mainly as atoms or atomic clusters in the titanic acid nanotubes, the titanic acid nanotubes can be viewed as a single phase material. That is, the E-group elements, and other titanic acid nanotube constituent elements such as Ti, H, O, is uniformly distributed in the titanic acid nanotubes as atoms or atomic clusters, and the E-group elements does not nucleate and grow into the E nanoparticle phase other than the titanic acid nanotubes. At this time, the as-prepared product can be understood as E-doped titanic acid nanotubes, or titanic acid nanotubes with E-group elements solid dissolved, or it can be considered as a new substance;
Furthermore, the E-group elements is mainly distributed in titanic acid nanotubes in a embedding form as atoms or atomic clusters; the key feature of the embedding distribution is that the E-group elements is mainly confined in the titanic acid nanotubes in the form of atoms or atomic clusters, and the atomic diffusion can only take place when a certain temperature is achieved; at the same time, due to the pinning effect of the E-group elements, it can greatly improve the thermal stability of the titanic acid nanotube matrix. For a detailed introduction, please refer to the following text corresponding to it.

Furthermore, when the E-group elements is present in the E-doped titanic acid nanotube in the form of atoms or atomic clusters, due to the pinning effect of the atoms of the E-group elements, the thermal stability of the phase transition of the titanic acid nanotube matrix can be increased by a maximum of 200°C; and the higher the content of E is, the higher the thermal stability of the phase transition is. That is, compared with the monolithic titanic acid nanotube matrix, the heat treatment temperature of the E-doped titanic acid nanotubes needs to be increased by up to 200°C to achieve the same phase transition during the heating process;
This increase in the thermal stability of the phase transition further indicates that the E-group elements is doped in the titanic acid nanotube matrix on an atomic or atomic cluster scale, rather than as an obvious E nanoparticle phase. If it present as an obvious E nanoparticle phase, and the titanic acid nanotube matrix and the E nanoparticle phase are separate and independent phases, the phase transition thermal stability of the titanic acid nanotube matrix can not be greatly affected by the presence of E nanoparticle phase.

Furthermore, the process of collecting the solid product includes a drying process;
Furthermore, the drying temperature is 50°C ~ 3 50°C;
Furthermore, the drying temperature is 50°C ~ 300°C;
Furthermore, the drying time is 1 min ~ 24 h;
Furthermore, the drying time is 5 min ~ 2 h;
Furthermore, the drying temperature is in a high value range when the drying time is in a low value range;
Furthermore, the drying time is in a high value range when the drying temperature is in a low value range;
Since the E-group elements is mainly Ag, according to the characteristics of the Ag element, it is easy to oxidize into Ag₂O drying at treatment below 180°C, while the Ag₂O will decompose into Ag when the drying temperature is above 180°C, therefore:
   Furthermore, when the drying temperature takes the low value of the range, the E-doped titanic acid nanotubes contain O-bound Ag atoms or Ag clusters;
   As a preference, when the drying temperature is from 50°C ~ 180°C, the E-doped titanic acid nanotubes contain O-bound Ag atoms or Ag clusters;
   As a preference, when the drying temperature is 50°C ~ 180°C, the E-doped titanic acid nanotubes contain contain O-bound Ag₂O clusters;
   Since the O-Ag bond will break and decompose at higher temperatures, when the drying temperature takes the high value of the range, the O that is bound with Ag will separate from Ag due to the breakage of the O-Ag bond;
   Furthermore, when the drying temperature takes the high value of the range, the E-group elements are mainly distributed in the titanic acid nanotubes in the form of atoms or atomic clusters;
   As a preference, when the drying temperature is 181°C ~ 350°C, the E-group elements is mainly distributed among the titanic acid nanotubes in the form of atoms or atomic clusters.

Therefore, the degree of bonding with Ag and O can be controlled by the control of the drying temperature and drying time.

Furthermore, when the drying temperature is lower than 350°C, the shape of the titanic acid nanotubes remains substantially unchanged and the E elements remain embedded and distributed in the titanic acid nanotubes as atoms or atomic clusters;
Furthermore, the atomic clusters containing E-group elements have a size of less than 1.5 nm;
Furthermore, the atomic clusters containing E-group elements have a size of less than 1 nm, and when the atomic clusters containing E-group elements are less than 1 nm, the size of such atomic clusters is insufficient to form E-phase nanoparticles that are distinguishable at the phase interface and it is difficult to distinguish the atomic clusters containing E-group elements from the titanic acid nanotube matrix by means of observation, such as transmission electron microscopy (TEM); thus in this scale, it is uniformly distributed in the matrix.

Furthermore, the E-group elements is mainly distributed as atoms in the titanic acid nanotubes;
Furthermore, the atomic percentage content of Ag in the E-group elements is 50% ~ 100%; Furthermore, the E-group elements is predominantly Ag; the E-group elements is Ag;
Furthermore, when not all of the E-group elements are Ag, the E-group elements also contain other elements capable of being solid dissolved in Ag or T-Ti intermetallic compounds;
Furthermore, when not all of the E-group elements are Ag, the E-group elements comprise at least one of Au, Cu, Pt, Pd, Ru, Rh, Os, Ir.

In the ninth aspect, the present invention also relates to a method of preparing titanic acid nanotubes embedded with E nanoparticles, wherein the titanic acid nanotubes embedded with E nanoparticles are prepared by heat-treating the product or the titanic acid nanotubes doped with E-group elements prepared according to the eighth aspect.

The thermal stability of the titanic acid nanotubes will be improved due to the presence of the doped E-group elements, and the structural transformation of the titanic acid nanotubes under heating will be hindered by the doped E-group elements. In the heat treatment process, the titanic acid nanotubes can be kept basically unchanged in morphology and phase composition by controlling the appropriate heat treatment temperature and time during the heat treatment process, While the doped E-group elements, which are mainly distributed in the titanic acid nanotubes in the form of atoms or atomic clusters, will transform into E nanoparticles embedded in the titanic acid nanotubes by elemental diffusion and aggregation.

This kind of embedded E nanoparticles is different from the ordinary nanoparticles adsorbed through van der Waals force that is reported in other literatures (nanoparticles adsorbed through van der Waals force can move and detach from the substrate). This kind of embedded E nanoparticles ensure that the E nanoparticles can be tightly embedded within the titanic acid nanotubes (it cannot move or detach from the substrate). When all of the E-group elements, which are mainly distributed as atoms or atomic clusters, have been aggregated into E nanoparticles, it is difficult for them to continue to merge and grow due to the island-like distribution of the E nanoparticles, which cannot be connected by the spatial obstruction of the titanic acid nanotube matrix. Therefor, the particle size of the E nanoparticles can be kept roughly unchanged during the subsequent heating process.
Furthermore, the temperature of the heat treatment is 350°C ~ 650°C;
Furthermore, the temperature of the heat treatment is 350°C ~ 600°C;
Furthermore, the temperature of the heat treatment is 350°C ~ 550°C;
The heat treatment temperature ensures that the doped E-group elements transform into E nanoparticles embedded in the titanic acid nanotubes through elemental diffusion and aggregation, while maintaining the titanic acid nanotube matrix morphology without significant changes.

Furthermore, when the E-group elements is present in the E-doped titanic acid nanotube in the form of atoms or atomic clusters, due to the pinning effect of the atoms of the E-group elements, the thermal stability of the phase transition of the titanic acid nanotube matrix can be increased by up to 200°C; and the higher the E content is, the higher the thermal stability of the phase transition is. That is, compared with the monolithic titanic acid nanotube matrix, the heat treatment temperature of the E-doped titanic acid nanotubes needs to be increased by up to 200°C to achieve the same phase transition during the heating process;
Furthermore, the time of the heat treatment is 5 min ~ 96 h;
Furthermore, the time of the heat treatment is 5 min ~ 10 h;
As a preference, the time of the heat treatment is 10 min ~ 5 h;
When a low value of the temperature range is selected and the content of the E-group elements is high, a longer time is required for the precipitate of the E nanoparticles through element diffusion and aggregation; when a high value of the temperature range is selected and the content of the E-group elements is low, a shorter time is required for the precipitate of the E nanoparticles through element diffusion and aggregation;
Furthermore, the E nanoparticles have a size of 1.5 nm ~ 10 nm;
Furthermore, the E nanoparticles have a size of 1.5 nm ~ 7.5 nm;
Furthermore, the E nanoparticles have a size of 1.5 nm ~ 5 nm;
Furthermore, the E nanoparticles are mainly present in the titanic acid nanotubes by means of embeddedness;
The "embedding" refers to a formation mode of in situ generation, i.e., the E nanoparticles are aggregated, grown-up and formed in situ through the diffusion of the doping E-group elements; The embedded E nanoparticles are manifested as being partially or completely embedded in the titanic acid nanotube matrix, which does not rely on external addition or external mixed methods to make it embedded.

Furthermore, the titanic acid nanotubes embedded with E nanoparticles have an outer diameter of 2 nm ~ 20 nm;
Furthermore, the titanic acid nanotubes embedded with E nanoparticles have an outer diameter of 3 nm ~ 15 nm;
Furthermore, the titanic acid nanotubes embedded with E nanoparticles have an average length greater than 5 times their average outer diameter;
Furthermore, the embedded E nanoparticles are embedded in a way that includes all of the nanoparticles embedded in the titanic acid nanotubes, or part of the E nanoparticles embedded in the titanic acid nanotubes, and also includes an exposed portion that is not embedded in the titanic acid nanotubes.

Furthermore, the main chemical composition of the titanic acid nanotubes embedded with E nanoparticles includes E-group elements, Ti, H, and O, wherein the molar ratio of E-group elements to Ti satisfies 0 < *C_{E}*/*C_{Ti}* ≤ 0.25;
Furthermore, the titanic acid nanotubes embedded with E nanoparticles have a chemical composition including an element of the E-group elements, Ti, H, and O; wherein the molar ratio of the element of the E-group elements to Ti satisfies 0 < *C_{E}*/*C_{Ti}* ≤ 0.25;
Furthermore, 0 < *C_{E}*/*C_{Ti}* < 0.10;
Furthermore, the atomic percentage content of Ag in the E-group elements is 50% ~ 100%; Furthermore, the E-group elements is mainly Ag; Furthermore, the E-group elements is Ag;
Furthermore, when not all of the E-group elements are Ag, the E-group elements also contain other elements capable of being solid dissolved in Ag or T-Ti intermetallic compounds;
Furthermore, when not all of the E-group elements are Ag, the E-group elements comprise at least one of Au, Cu, Pt, Pd, Ru, Rh, Os, Ir.

In the tenth aspect, the present invention also relates to a method of preparing crystalline TiO₂ nanotubes/rods embedded with E nanoparticles, wherein the crystalline TiO₂ nanotubes/rods embedded with E nanoparticles are prepared by heat-treating the product or the titanic acid nanotubes doped with E-group elements prepared according to the eighth aspect, or by heat-treating the product or the titanic acid nanotubes embedded with E nanoparticles prepared according to the ninth aspect.

Furthermore, the time of the heat treatment is 1 min ~ 48 h;
As a preference, the time of the heat treatment is 10 min ~ 3 h;
Furthermore, the temperature of the heat treatment is 600°C ~ 1500°C;
Furthermore, the temperature of the heat treatment is 600°C ~ 1000°C;
Furthermore, the titanic acid nanotubes transform into crystalline TiO₂ nanotubes/rods during the heat treatment;
When a low value of the temperature range is selected, a longer time is required to convert the titanic acid nanotubes into TiO₂ nanotubes/rods, and when a high value of the temperature range is selected, a shorter time is required to convert the titanic acid nanotubes into TiO₂ nanotubes/rods;
Furthermore, during the heat treatment process, and when the material subjected to heat treatment is an E-doped titanic acid nanotubes described in the eighth aspect, the diffusion and aggregation of the doped E-group elements first occurs therein to generate E nanoparticles embedded in the titanic acid nanotubes; and at this time, the state of the material is consistent with that of the titanic acid nanotubes embedded with E nanoparticles as described in the ninth aspect. As the heat treatment temperature and time increase, the titanic acid nanotubes transform into crystalline TiO₂ nanotubes/rods. Since the E nanoparticles embedded in the titanic acid nanotubes or the crystalline TiO₂ nanotubes/rods are separated and isolated by the titanic acid nanotube matrix or the crystalline TiO₂ nanotube/rod matrix, it is difficult for the E nanoparticles that have been completely generated to continue to merge with each other and grow up, and their sizes and morphologies will be in a stable state in the process of phase transformation, and they will not be significantly changed with the elevation of the heat-treatment temperature and the prolongation of the heat-treatment time.

Furthermore, the crystalline TiO₂ nanotubes/rods means that the shape of the crystalline TiO₂ nanotubes/rods includes at least one of tubes and rods; when the inner diameter of the tubes is reduced to zero, it is the shape of the rods;
Furthermore, the crystalline TiO₂ nanotubes/rods with embedded E nanoparticles have a phase composition including at least one of brookite TiO₂, anatase TiO₂, rutile TiO₂.

Specifically, with the increase of heat treatment temperature and time, the heat-treated product undergoes the successive transformation of "titanic acid nanotubes with embedded E nanoparticles" → "anatase TiO₂ nanotubes/rods with embedded E nanoparticles" → "rutile TiO₂ nanotubes/rods with embedded E nanoparticles".

During the transformation process, two crystalline types may coexist in the as-prepared product corresponding to certain heat treatment temperatures and times, such as the coexistence of "titanic acid nanotubes with embedded E nanoparticles" and "anatase TiO₂ nanotubes/rods with embedded E nanoparticles", and the coexistence of " anatase TiO₂ nanotubes/rods with embedded E nanoparticles" and "rutile TiO₂ nanotubes/rods with embedded E nanoparticles".

Furthermore, the E nanoparticles have a size of 1.5 nm ~ 10 nm;
Furthermore, the E nanoparticles have a size of 1.5 nm ~ 7.5 nm;
Furthermore, the E nanoparticles have a size of 1.5 nm ~ 5 nm;
Furthermore, the E nanoparticles are predominantly present in the crystalline TiO₂ nanotubes/rods by means of embeddedness;
Furthermore, the crystalline TiO₂ nanotubes/rods embedded with E nanoparticles have an outer diameter of 2 nm ~ 25 nm;
Furthermore, the crystalline TiO₂ nanotubes/rods embedded with E nanoparticles have an outer diameter of 3 nm ~ 20 nm;
Furthermore, the crystalline TiO₂ nanotubes/rods embedded with E nanoparticles have an average length greater than three times of their average outer diameter;
Furthermore, the embedded E nanoparticles are embedded in a form that includes all of the nanoparticles embedded in the TiO₂ nanotubes/rods, or part of the nanoparticles embedded in the TiO₂ nanotubes/rods, and also includes a exposed portion of the E nanoparticles that is not embedded in the TiO₂ nanotubes/rods.

Furthermore, the chemical composition of the crystalline TiO₂ nanotubes/rods with embedded E nanoparticles includes E-group elements, Ti, O; wherein the molar ratio of E-group elements to Ti satisfies 0 < *C_{E}*/*C_{Ti}* ≤ 0.25;
Furthermore, 0 < *C_{E}*/*C_{Ti}* ≤ 0.10;
Furthermore, the atomic percentage content of Ag in the E-group elements is 50% ~ 100%; Furthermore, the E-group elements is mainly Ag; Furthermore, the E-group elements is Ag;
Furthermore, when not all of the E-group elements are Ag, the E-group elements also contain other elements capable of being solid dissolved in Ag or T-Ti intermetallic compounds;
Furthermore, when not all of the E-group elements are Ag, the E-group elements comprise at least one of Au, Cu, Pt, Pd, Ru, Rh, Os, Ir.

In the eleventh aspect, the present invention also relates to a titanate nanofilm material doped with E-group elements, which is prepared by a method of preparing a titanate nanofilm material doped with E-group elements prepared according the first aspect.

In the twelfth aspect, the present invention also relates to a titanate nanofilm material embedded with E nanoparticles, which is prepared by a method of preparing a titanate nanofilm material embedded with E nanoparticles prepared according to the second aspect.

In the thirteenth aspect, the present invention also relates to a titanic acid nanofilm material doped with E-group elements, which is prepared by a method of preparing a titanic acid nanofilm material doped with E-group elements prepared according to the third aspects.

In the fourteenth aspect, the present invention also relates to a titanic acid nanofilm material embedded with E nanoparticles, which is prepared by a method of preparing a titanic acid nanofilm material embedded with E nanoparticles prepared according to the fourth aspect.

In the fifteenth aspect, the present invention also relates to a TiO₂ nanosheet powder embedded with E nanoparticles, which is prepared by a method of preparing a TiO₂ nanosheet powder embedded with E nanoparticles prepared according to the fifth aspect.

In the sixteenth aspect, the present invention also relates to a titanate nanotube doped with E-group elements, which is prepared by a method of preparing a titanate nanotube doped with E-group elements prepared according to the sixth aspect.

In the seventeenth aspect, the present invention also relates to a titanate nanotube embedded with E nanoparticles, which is prepared by a method of preparing a titanate nanotube embedded with E nanoparticles prepared according to the seventh aspect.

In the eighteenth aspect, the present invention also relates to a titanic acid nanotube doped with E-group elements, which is prepared by a method of preparing a titanic acid nanotube doped with E-group elements prepared according to eighth aspect.

In the nineteenth aspect, the present invention also relates to a titanic acid nanotube embedded with E nanoparticles, which is prepared by a method of preparing a titanic acid nanotube embedded with E nanoparticles prepared according to the ninth aspect.

In the twenty aspects, the present invention also relates to a crystalline TiO₂ nanotube/rod embedded with E nanoparticles, which is prepared by a method of preparing a crystalline TiO₂ nanotube/rod embedded with E nanoparticles prepared according to the tenth aspect.

In the twenty-first aspect, the present invention also relates to another method of preparing titanate nanotubes doped with E-group elements, which are prepared by the following steps:
step 1), providing an initial alloy comprising T-type elements, Ti and E-group elements; wherein the T-type elements comprise at least one of Al and Zn; and the phase composition of the initial alloy comprises a T-Ti intermetallic compound with solid dissolved E-group elements; wherein the atomic percentage content of Ag in the E-group elements is 50% ~ 100%, and the molar ratio of E-group elements solid dissolved in the T-Ti intermetallic compound to Ti in the initial alloy is 0 < *C*_{E}/*C*_{Ti}≤ 0.25;
step 2), sealing the initial alloy with the alkaline solution in a closed vessel, and subsequently heating the closed reaction system to the temperature of *T*₂ and holding it for a certain period of time; wherein 100°C < *T_{ƒ solution}* ≤ *T₂; T_{f solution}* is the boiling point temperature of the alkaline solution involved in the reaction at ambient pressure, and the pressure in the reaction vessel at the temperature of *T₂* is higher than the ambient pressure;
step 3), lowering the temperature of the closed vessel and restoring the pressure to ambient pressure, and collecting the final solid product, i.e., obtaining titanate nanotubes doped with E-group elements.

The step 1), as well as the detailed description of step 1), are identical to step 1 and its detailed description described in the first aspect (a method for the preparation of nano-titanate thin-film materials doped with elements of group E) (see the step 1 described in the first aspect above);
In the step 2),
Furthermore, the initial alloy and the alkaline solution are sealed in a closed vessel at room temperature and pressure, and the temperature of the closed reaction system is subsequently heated to a high temperature of *T₂* and held for a certain period of time; wherein 100°C < *T_{f solution} < T₂*;
Furthermore, the alkaline solution includes at least one of NaOH, KOH, LiOH, RbOH, Ba(OH)₂, Ca(OH)₂, Sr(OH)₂ solution;
Furthermore, the solvent in the alkaline solution includes water; as a preference, the solvent in the alkaline solution is water;
Furthermore, the concentration of alkali in the alkaline solution is 5.1 ~ 25 mol/L;
As a preference, the concentration of alkali in the alkaline solution is 5.1 ~ 15 mol/L;
As a preference, the concentration of alkali in the alkaline solution is 7 ~ 15 mol/L; as a Furthermore preference, the concentration of alkali in the alkaline solution is 7 ~ 12 mol/L;
As a Furthermore preference, the concentration of alkali in the alkaline solution is 10 ~ 15 mol/L;
Furthermore, the concentration of alkaline refers to the concentration of OH- in the alkaline;
Furthermore, the alkali in the alkaline solution reacting with the initial alloy is an overdose, and the volume of the alkaline solution is more than 5 times the volume of the initial alloy, so that the reaction can be made to proceed all the time at a higher alkali concentration;
Furthermore, the volume of the alkaline solution is more than 10 times the volume of the initial alloy;
Furthermore, the volume of the alkaline solution is more than 20 times the volume of the initial alloy;
Furthermore, the temperature at which the initial alloy reacts with the alkaline solution is the temperature of the alkaline solution;
It can be understood that the reaction between the initial alloy and the alkaline solution is very slow in the preparation and beginning stages of the reaction at room temperature and atmospheric pressure, and that after the initial alloy and the alkaline solution are sealed in a closed container, the hydrogen generated by the reaction between the T-type elements in the initial alloy and the alkaline solution is also sealed in the closed container, which causes the pressure of the closed container to be elevated.

Furthermore, the closed reaction system includes, an initial alloy, an alkaline solution, and a closed container; the temperature of the closed reaction system is the temperature corresponding to the initial alloy, the alkaline solution, and the closed container;
Furthermore, the temperature of the initial alloy and the alkaline solution in the closed container is heated to the *T₂* temperature at a heating rate of greater than 10°C/min from room temperature;
Furthermore, the time for heating the temperature of the initial alloy and the alkaline solution in the closed container from room temperature to the *T₂* temperature is less than 30 min;
Furthermore, 100°C < *T_{f solution} < T₂ <* 300°C;
Furthermore, 100°C < *T_{f solution} < T₂ <* 250°C;
Furthermore, 100°C < *T_{f solution} < T₂ <* 200°C;
Furthermore, 100°C < *T_{f solution} <* 120°C *<T₂ <* 200°C;
Furthermore, 100°C < *T_{f solution} <* 140°C < *T₂ <* 200°C;
Furthermore, 100°C < *T_{f solution} <* 150°C *< T₂ <* 180°C;
Furthermore, the holding time of the closed reaction system at the *T₂* temperature is 0.1 h ~ 20 h; preferably 0.1 h ~ 2 h, preferably 0.1 h ~ 1 h, preferably 0.1 h ~ 0.5 h, further preferably 0.2 h ~ 0.4 h;
Since the product can also be obtained by continuing the holding time after the reaction has equilibrated, the holding time can also be selected as a longer time value.

Furthermore, the initial alloy in the closed vessel and the alkaline solution undergoes a hydrogen generation and T-removal reaction in the heating stage from room temperature to *T₂* temperature, which mainly generates nanoporous titanate intermediate products doped with E-group elements;
Furthermore, the conversion of the nanoporous titanate intermediate products doped with E-group elements to E-doped titanate nanotubes occurs during the holding stage at *T₂* temperature of the closed reaction system;
Furthermore, the pressure of the closed reaction system is higher than the atmospheric pressure;
Furthermore, the pressure of the closed reaction system is a combination of the pressure of the solution of the closed system at the temperature of *T₂* and the pressure of the hydrogen produced by the hydrogen evolution reaction at the temperature of *T₂;*
It can be understood that, because of the presence of the pressure of the generated hydrogen gas, the pressure of the closed reaction system is higher than the pressure corresponding to the simple closed system solution at the temperature of *T₂;* such a high-pressure environment creates conditions for the transformation of the nanoporous titanate intermediate product doped with E-group elements to the E-doped titanate nanotubes;
In the step 3).

Furthermore, the E-doped titanate nanotubes have an outer diameter of 3 nm ~ 25 nm;
Furthermore, the E-doped titanate nanotubes have an outer diameter of 3 nm ~ 20 nm;
Furthermore, the E-doped titanate nanotubes have an outer diameter of 4 nm ~ 15 nm;
Furthermore, the average length of the E-doped titanate nanotubes is greater than 5 times its average outer diameter.

Furthermore, the E-doped titanate nanotubes are mainly low crystallinity titanates;
Furthermore, the cationic elements in the titanate nanotubes are derived from corresponding cationic elements in the alkali;
Furthermore, the chemical composition of the E-doped titanate nanotubes includes E, Ti, O, and the corresponding cationic element in the alkali; wherein the molar ratio of the E-group elements to Ti satisfies 0 < *C_{E}*/*C_{Ti}* ≤ 0.25; for example, when the alkali is NaOH, the corresponding cationic element in the alkali is Na, and then the chemical composition of the E-doped titanate nanotubes contains E, Ti, O, and the element Na.

Furthermore, 0 < *C_{E}*/*C_{Ti}* ≤ 0.10;
Furthermore, the E-group elements is mainly distributed among the titanate nanotubes as atoms or atomic clusters;
Furthermore, when the E-group elements is mainly distributed among the titanate nanotubes in the form of atoms or atomic clusters, the titanate nanotubes can be viewed as a single-phase material. That is to say, like other constituent elements in the titanate nanotubes, the E-group elements are uniformly distributed in the titanate nanotubes as atoms or atomic clusters, and the E-group elements do not nucleate and grow into the E nanoparticle phase other than the titanate phase. At this time, the as-prepared product can be understood as E-doped titanate nanotubes, or as titanate nanotubes with E-group elements solid dissolved, or as a completely new substance, such as titanate (silver) nanotubes;
Furthermore, the E-group elements is mainly distributed in titanate nanotubes in a embedding form as atoms or atomic clusters; the key feature of the embedding distribution is that the E-group elements is mainly confined in the titanate nanotubes in the form of atoms or atomic clusters, and the atomic diffusion can only take place when a certain temperature is achieved; at the same time, due to the pinning effect of the E-group elements, it can greatly improve the thermal stability of the titanate nanotubes.

Furthermore, the collection the final solid product in the step 3 of includes the drying of the final solid product, i.e., obtaining powdered E-doped titanate nanotubes.

Furthermore, the drying temperature is 50°C ~ 3 50°C;
Furthermore, the drying temperature is 50°C ~ 300°C;
Furthermore, the drying temperature is 50°C ~ 250°C;
Furthermore, the drying time is 1 min ~ 24 h;
Furthermore, the drying time is 5 min ~ 2 h;
Furthermore, the drying time may be in a low value range when the drying temperature is in a high value range;
Furthermore, when the drying temperature is in a low value range, the drying time is in a high value range;
Since the E-group elements is mainly Ag, according to the characteristics of the Ag element, it is easy to oxidize into Ag₂O drying at treatment below 180°C, while the Ag₂O will decompose into Ag when the drying temperature is above 180°C, therefore:
   Furthermore, when the drying temperature takes the low value of the range, the E-doped titanate nanotubes contain O-bound Ag atoms or Ag clusters;
   As a preference, when the drying temperature is 50°C ~ 180°C, the E-doped titanate nanotubes contain O-bound Ag atoms or Ag clusters;
   As a preference, when the drying temperature is 50°C ~ 180°C, the E-doped titanate nanotubes contain O-bound Ag₂O clusters;
   Since the O-Ag bond will break and decompose at higher temperatures, when the drying temperature takes the high value of the range, the O that is bound with Ag will separate from Ag due to the breakage of the O-Ag bond;
   Furthermore, when the drying temperature takes the high value of the range, the E-group elements are mainly distributed in the titanate nanotubes in the form of atoms or atomic clusters;
   As a preference, when the drying temperature is 181°C ~ 350°C, the E-group elements are mainly distributed among the titanate nanotubes in the form of atoms or atomic clusters.
   Therefore, the degree of bonding with Ag and O can be controlled by the control of the drying temperature and drying time.
   Furthermore, when the drying temperature is lower than 350°C, the shape of the titanate nanotubes remains substantially unchanged and the E elements remain embedded and distributed in the titanate nanotubes as atoms or atomic clusters;
   Furthermore, the atomic clusters containing E-group elements have a size of less than 1.5 nm;
   Furthermore, the atomic clusters containing E-group elements have a size of less than 1 nm, and when the atomic clusters containing E-group elements are less than 1 nm, the size of such atomic clusters is not sufficient to form E-phase nanoparticles that are distinguishable at the phase interface and it is difficult to distinguish the atomic clusters containing E-group elements from the titanate nanotube matrix by means of observation, such as transmission electron microscopy (TEM); thus in this scale, it is uniformly distributed in the matrix.
   Furthermore, the E-group elements is mainly distributed in the titanate nanotubes in the form of atoms;
   The conversion process from the E-doped intermediate product to the E-doped titanate nanotubes also undergoes the formation of E-doped titanate nonofilms, so that when the high-temperature and high-pressure treatment is incomplete, the as-prepared product in step 3 will also contain the E-doped titanate nanofilms;
   Furthermore, the weight percentage content of the E-doped titanate nanotubes in the final product is higher than 50%;
   Furthermore, the weight percentage content of the E-doped titanate nanotubes in the final product is higher than 90%;
   Furthermore, the atomic percentage content of Ag in the E-group elements is 50% ~ 100%; Furthermore, the E-group elements is mainly Ag; Furthermore, the E-group elements is Ag;
   Furthermore, when not all of the E-group elements are Ag, the E-group elements also contain other elements capable of being solid dissolved in Ag or T-Ti intermetallic compounds;
   Furthermore, when not all of the E-group elements are Ag, the E-group elements comprise at least one of Au, Cu, Pt, Pd, Ru, Rh, Os, Ir.

In the twenty-second aspect, the present invention also relates to a method of preparing a titanic acid nanotube doped with E-group elements, wherein the titanic acid nanotube doped with E-group elements is obtained by reacting the final product or the titanate nanotubes doped with E-group elements prepared according to the twenty-first aspect with an acid solution and collecting the solid product.

Furthermore, the acid solution includes at least one of hydrochloric acid, nitric acid, sulfuric acid, acetic acid, phosphoric acid, oxalic acid, picric acid, oleic acid, perchloric acid.

By reacting with the acid solution, the residual alkali adsorbed on the surface of the E-doped titanate nanotubes is first neutralized, and then ion exchange between the E-doped titanate nanotubes and the hydrogen ions in the acid solution occurs, and then the E-doped titanic acid nanotubes are obtained.

Since the titanic acid nanotubes have a slightly smaller specific surface area than the titanic acid nanofilm, the reaction can be carried out in an acid with a slightly higher concentration compared to the acid solution in the third aspects thereof;
Furthermore, the hydrogen ion concentration in the acid solution is 0.001 mol/L ~ 0.2 mol/L;
As a preference, the hydrogen ion concentration in the acid solution is 0.001 mol/L ~ 0.1 mol/L;
As a preference, the hydrogen ion concentration in the acid solution is 0.001 mol/L ~ 0.05 mol/L;
Furthermore, the specific step of reacting the E-doped titanate nanotube material with the acid solution is as follows: the E-doped titanate nanotube material is dispersed in water, and the acid solution is gradually added while stirring so that the pH of the mixed solution continuously decreases. Finally, the pH of the mixed solution is controlled to be in the range of 2 ~ 5, and after 1 min~5 h, followed by separation and drying then the E-doped titanic acid nanotube material was obtained. Since the titanate nanotubes are rolled up with a certain thickness, when the pH value is maintained between 2 and 4, corresponding to a concentration of hydrogen ions in the mixed solution is 0.0001 mol/L ~ 0.01 mol/L, it can be ensured that the residual alkali adsorbed on the surface of the E-doped titanate nanotube material is first neutralized during the whole process, and then the ion exchange between the cations in the E-doped titanate nanotube and hydrogen ions in the acid solution takes place, thereby the E-doped titanic acid nanotube material that has not reacted significantly with the acid solution is obtained.

Furthermore, the E-doped titanic acid nanotubes have an outer diameter of 3 nm ~ 25 nm;
Furthermore, the E-doped titanic acid nanotubes have an outer diameter of 3 nm ~ 20 nm;
Furthermore, the E-doped titanic acid nanotubes have an outer diameter of 4 nm ~ 15 nm;
Furthermore, the average length of the E-doped titanic acid nanotubes is greater than 5 times its average outer diameter;
Furthermore, the E-doped titanic acid nanotubes are mainly low crystallinity titanate;
Furthermore, the chemical composition of the E-doped titanic acid nanotubes includes E, Ti, O, H; wherein the molar ratio of the E-group elements to Ti satisfies 0 < *C_{E}*/*C_{Ti} <* 0.25;
Furthermore, 0 < *C_{E}*/*C_{Ti}* ≤ 0.10;
Furthermore, the E-group elements is mainly distributed in the titanic acid nanotubes as atoms or atomic clusters;
The key feature of the embedding distribution is that the E-group elements is mainly confined in the titanic acid nanotubes in the form of atoms or atomic clusters, and the atomic diffusion can only take place when a certain temperature is achieved; at the same time, due to the pinning effect of the E-group elements, it can greatly improve the thermal stability of the titanic acid nanotubes.

Furthermore, the process of collecting the solid product includes a drying process;
Furthermore, the drying temperature is 50°C ~ 350°C;
Furthermore, the drying temperature is 50°C ~ 300°C;
Furthermore, the drying time is 1 min ~ 24 h;
Furthermore, the drying time is 5 min ~ 2 h;
Furthermore, the drying time may be in a low value range when the drying temperature is in a high value range;
Furthermore, when the drying temperature is in a low value range, the drying time is in a high value range;
Since the E-group elements is mainly Ag, according to the characteristics of the Ag element, it is easy to oxidize into Ag₂O drying at treatment below 180°C, while the Ag₂O will decompose into Ag when the drying temperature is above 180°C, therefore:
   Furthermore, when the drying temperature takes the low value of the range, the E-doped titanic acid nanotubes contain O-bound Ag atoms or Ag clusters;
   As a preference, when the drying temperature is from 50°C ~ 180°C, the E-doped titanic acid nanotubes contain O-bound Ag atoms or Ag clusters;
   As a preference, when the drying temperature is 50°C ~ 180°C, the E-doped titanic acid nanotubes contain contain O-bound Ag₂O clusters;
   Since the O-Ag bond will break and decompose at higher temperatures, when the drying temperature takes the high value of the range, the O that is bound with Ag will separate from Ag due to the breakage of the O-Ag bond;
   Furthermore, when the drying temperature takes the high value of the range, the E-group elements are mainly distributed in the titanic acid nanotubes in the form of atoms or atomic clusters;
   As a preference, when the drying temperature is 181°C ~ 350°C, the E-group elements is mainly distributed among the titanic acid nanotubes in the form of atoms or atomic clusters.

Therefore, the degree of bonding with Ag and O can be controlled by the control of the drying temperature and drying time.
Furthermore, when the drying temperature is lower than 350°C, the shape of the titanic acid nanotubes remains substantially unchanged and the E elements remain embedded and distributed in the titanic acid nanotubes as atoms or atomic clusters;
Furthermore, the atomic clusters containing E-group elements have a size of less than 1.5 nm;
Furthermore, the atomic clusters containing E-group elements have a size of less than 1 nm, and when the atomic clusters containing E-group elements are less than 1 nm, the size of such atomic clusters is insufficient to form E-phase nanoparticles that are distinguishable at the phase interface and it is difficult to distinguish the atomic clusters containing E-group elements from the titanic acid nanotube matrix by means of observation, such as transmission electron microscopy (TEM); thus in this scale, it is uniformly distributed in the matrix.
Furthermore, the E-group elements is mainly distributed as atoms in the titanic acid nanotubes;
Furthermore, the atomic percentage content of Ag in the E-group elements is 50% ~ 100%; Furthermore, the E-group elements is predominantly Ag; the E-group elements is Ag;
Furthermore, when not all of the E-group elements are Ag, the E-group elements also contain other elements capable of being solid dissolved in Ag or T-Ti intermetallic compounds;
Furthermore, when not all of the E-group elements are Ag, the E-group elements comprise at least one of Au, Cu, Pt, Pd, Ru, Rh, Os, Ir.

In the twenty-third aspect, the present invention also relates to a method of preparing titanic acid nanotube embedded with E nanoparticles, wherein the titanic acid nanotube embedded with E nanoparticles is prepared by heat-treating the product or the titanic acid nanotube doped with the E-group elements prepared according to the twenty-second aspect.

The thermal stability of the titanic acid nanotubes will be improved due to the presence of the doped E-group elements, and the structural transformation of the titanic acid nanotubes under heating will be hindered by the doped E-group elements. In the heat treatment process, the titanic acid nanotubes can be kept basically unchanged in morphology and phase composition by controlling the appropriate heat treatment temperature and time during the heat treatment process, While the doped E-group elements, which are mainly distributed in the titanic acid nanotubes in the form of atoms or atomic clusters, will transform into E nanoparticles embedded in the titanic acid nanotubes by elemental diffusion and aggregation.

This kind of embedded E nanoparticles is different from the ordinary nanoparticles adsorbed through van der Waals force that is reported in other literatures (nanoparticles adsorbed through van der Waals force can move and detach from the substrate). This kind of embedded E nanoparticles ensure that the E nanoparticles can be tightly embedded within the titanic acid nanotubes (it cannot move or detach from the substrate). When all of the E-group elements, which are mainly distributed as atoms or atomic clusters, have been aggregated into E nanoparticles, it is difficult for them to continue to merge and grow due to the island-like distribution of the E nanoparticles, which cannot be connected by the spatial obstruction of the titanic acid nanotube matrix. Therefor, the particle size of the E nanoparticles can be kept roughly unchanged during the subsequent heating process.

Furthermore, the temperature of the heat treatment is 350°C ~ 650°C;
Furthermore, the temperature of the heat treatment is 350°C ~ 600°C;
Furthermore, the temperature of the heat treatment is 350°C ~ 550°C;
The heat treatment temperature ensures that the doped E-group elements transform into E nanoparticles embedded in the titanic acid nanotubes through elemental diffusion and aggregation, while maintaining the titanic acid nanotube matrix morphology without significant changes.

Furthermore, when the E-group elements is present in the E-doped titanic acid nanotube in the form of atoms or atomic clusters, due to the pinning effect of the atoms of the E-group elements, the thermal stability of the phase transition of the titanic acid nanotube matrix can be increased by up to 200°C; and the higher the E content is, the higher the thermal stability of the phase transition is. That is, compared with the monolithic titanic acid nanotube matrix, the heat treatment temperature of the E-doped titanic acid nanotubes needs to be increased by up to 200°C to achieve the same phase transition during the heating process;
Furthermore, the time of the heat treatment is 5 min ~ 96 h;
Furthermore, the time of the heat treatment is 5 min ~ 10 h;
As a preference, the time of the heat treatment is 10 min ~ 5 h;
When a low value of the temperature range is selected and the content of the E-group elements is high, a longer time is required for the precipitate of the E nanoparticles through element diffusion and aggregation; when a high value of the temperature range is selected and the content of the E-group elements is low, a shorter time is required for the precipitate of the E nanoparticles through element diffusion and aggregation;
Furthermore, the E nanoparticles have a size of 1.5 nm ~ 10 nm;
Furthermore, the E nanoparticles have a size of 1.5 nm ~ 7.5 nm;
Furthermore, the E nanoparticles have a size of 1.5 nm ~ 5 nm;
Furthermore, the E nanoparticles are mainly present in the titanic acid nanotubes by means of embeddedness;
The "embedding" refers to a formation mode of in situ generation, i.e., the E nanoparticles are aggregated, grown-up and formed in situ through the diffusion of the doping E-group elements; The embedded E nanoparticles are manifested as being partially or completely embedded in the titanic acid nanotube matrix, which does not rely on external addition or external mixed methods to make it embedded.

Furthermore, the titanic acid nanotubes embedded with E nanoparticles have an outer diameter of 3 nm ~ 25 nm;
Furthermore, the titanic acid nanotubes embedded with E nanoparticles have an outer diameter of 3 nm ~ 20 nm;
Furthermore, the titanic acid nanotubes embedded with E nanoparticles have an outer diameter of 4 nm ~ 15 nm;
Furthermore, the titanic acid nanotubes embedded with E nanoparticles have an average length greater than 5 times their average outer diameter;
Furthermore, the embedded E nanoparticles are embedded in a way that includes all of the nanoparticles embedded in the titanic acid nanotubes, or part of the E nanoparticles embedded in the titanic acid nanotubes, and also includes an exposed portion that is not embedded in the titanic acid nanotubes.

Furthermore, the main chemical composition of the titanic acid nanotubes embedded with E nanoparticles includes E-group elements, Ti, H, and O, wherein the molar ratio of E-group elements to Ti satisfies 0 < *C_{E}*/*C_{Ti}* ≤ 0.25;
Furthermore, the titanic acid nanotubes embedded with E nanoparticles have a chemical composition including the E-group elements, Ti, H, and O; wherein the molar ratio of the E-group elements to Ti satisfies 0 < *C_{E}*/*C_{Ti}* ≤ 0.25;
Furthermore, 0 < *C_{E}*/*C_{Ti}* < 0.10;
Furthermore, the atomic percentage content of Ag in the E-group elements is 50% ~ 100%; Furthermore, the E-group elements is mainly Ag; Furthermore, the E-group elements is Ag;
Furthermore, when not all of the E-group elements are Ag, the E-group elements also contain other elements capable of being solid dissolved in Ag or T-Ti intermetallic compounds;
Furthermore, when not all of the E-group elements are Ag, the E-group elements comprise at least one of Au, Cu, Pt, Pd, Ru, Rh, Os, Ir.

In the twenty-fourth aspect, the present invention also relates to a method of preparing crystalline TiO₂ nanotubes/rods embedded with E nanoparticles, wherein the crystalline TiO₂ nanotubes/rods embedded with E nanoparticles are prepared by heat-treating the product or the titanic acid nanotube doped with E-group elements prepared according to the twenty-second aspect, or by heat-treating the product or the titanic acid nanotube embedded with E nanoparticles prepared according to the twenty-third aspect.

The thermal stability of the titanic acid nanotubes will be improved due to the presence of the doped E-group elements, and the structural transformation of the titanic acid nanotubes under heating will be hindered by the doped E-group elements. In the heat treatment process, the titanic acid nanotubes can be kept basically unchanged in morphology and phase composition by controlling the appropriate heat treatment temperature and time during the heat treatment process, While the doped E-group elements, which are mainly distributed in the titanic acid nanotubes in the form of atoms or atomic clusters, will transform into E nanoparticles embedded in the titanic acid nanotubes by elemental diffusion and aggregation.

This kind of embedded E nanoparticles is different from the ordinary nanoparticles adsorbed through van der Waals force that is reported in other literatures (nanoparticles adsorbed through van der Waals force can move and detach from the substrate). This kind of embedded E nanoparticles ensure that the E nanoparticles can be tightly embedded within the titanic acid nanotubes (it cannot move or detach from the substrate). When all of the E-group elements, which are mainly distributed as atoms or atomic clusters, have been aggregated into E nanoparticles, it is difficult for them to continue to merge and grow due to the island-like distribution of the E nanoparticles, which cannot be connected by the spatial obstruction of the titanic acid nanotube matrix. Therefor, the particle size of the E nanoparticles can be kept roughly unchanged during the subsequent heating process.

Furthermore, the temperature of the heat treatment is 350°C ~ 650°C;
Furthermore, the temperature of the heat treatment is 350°C ~ 600°C;
Furthermore, the temperature of the heat treatment is 350°C ~ 550°C;

The heat treatment temperature ensures that the doped E-group elements transform into E nanoparticles embedded in the titanic acid nanotubes through elemental diffusion and aggregation, while maintaining the titanic acid nanotube matrix morphology without significant changes.

Furthermore, when the E-group elements is present in the E-doped titanic acid nanotube in the form of atoms or atomic clusters, due to the pinning effect of the atoms of the E-group elements, the thermal stability of the phase transition of the titanic acid nanotube matrix can be increased by up to 200°C; and the higher the E content is, the higher the thermal stability of the phase transition is. That is, compared with the monolithic titanic acid nanotube matrix, the heat treatment temperature of the E-doped titanic acid nanotubes needs to be increased by up to 200°C to achieve the same phase transition during the heating process;
Furthermore, the time of the heat treatment is 5 min ~ 96 h;
Furthermore, the time of the heat treatment is 5 min ~ 10 h;
As a preference, the time of the heat treatment is 10 min ~ 5 h;
When a low value of the temperature range is selected and the content of the E-group elements is high, a longer time is required for the precipitate of the E nanoparticles through element diffusion and aggregation; when a high value of the temperature range is selected and the content of the E-group elements is low, a shorter time is required for the precipitate of the E nanoparticles through element diffusion and aggregation;
Furthermore, the E nanoparticles have a size of 1.5 nm ~ 10 nm;
Furthermore, the E nanoparticles have a size of 1.5 nm ~ 7.5 nm;
Furthermore, the E nanoparticles have a size of 1.5 nm ~ 5 nm;
Furthermore, the E nanoparticles are mainly present in the titanic acid nanotubes by means of embeddedness;
The "embedding" refers to a formation mode of in situ generation, i.e., the E nanoparticles are aggregated, grown-up and formed in situ through the diffusion of the doping E-group elements; The embedded E nanoparticles are manifested as being partially or completely embedded in the titanic acid nanotube matrix, which does not rely on external addition or external mixed methods to make it embedded.

Furthermore, the TiO₂ nanotubes/rods embedded with E nanoparticles have an outer diameter of 5 nm ~ 30 nm;
Furthermore, the TiO₂ nanotubes/rods embedded with E nanoparticles have an outer diameter of 5 nm ~ 25 nm;
Furthermore, the TiO₂ nanotubes/rods embedded with E nanoparticles have an outer diameter of 7 nm ~ 20 nm;
Furthermore, the titanic acid nanotubes embedded with E nanoparticles have an average length greater than 5 times their average outer diameter;
Furthermore, the embedded E nanoparticles are embedded in a way that includes all of the nanoparticles embedded in the titanic acid nanotubes, or part of the E nanoparticles embedded in the titanic acid nanotubes, and also includes an exposed portion that is not embedded in the titanic acid nanotubes.

Furthermore, the main chemical composition of the titanic acid nanotubes embedded with E nanoparticles includes E-group elements, Ti, H, and O, wherein the molar ratio of E-group elements to Ti satisfies 0 < *C_{E}*/*C_{Ti}* ≤ 0.25;
Furthermore, the titanic acid nanotubes embedded with E nanoparticles have a chemical composition including an element of the E-group elements, Ti, H, and O; wherein the molar ratio of the element of the E-group elements to Ti satisfies 0 < *C_{E}*/*C_{Ti}* ≤ 0.25;
Furthermore, 0 < *C_{E}*/*C_{Ti}* < 0.10;
Furthermore, the atomic percentage content of Ag in the E-group elements is 50% ~ 100%; Furthermore, the E-group elements is mainly Ag; Furthermore, the E-group elements is Ag;
Furthermore, when not all of the E-group elements are Ag, the E-group elements also contain other elements capable of being solid dissolved in Ag or T-Ti intermetallic compounds;
Furthermore, when not all of the E-group elements are Ag, the E-group elements comprise at least one of Au, Cu, Pt, Pd, Ru, Rh, Os, Ir.

In the twenty-fifth aspect, the present invention further relates to an application of the product materials prepared according to the preparation method described in any one of the first to tenth aspects, or the product materials prepared according to the preparation method described in any one of the twenty-first to twenty-fourth aspects, or the materials described in any one of the eleventh to twentieth aspects, in polymer-based nanocomposites, resin-based composites, ceramic materials, photocatalytic materials, hydrophobic materials, effluent degrading materials, bactericidal coatings, anticorrosive coatings, and marine coatings.

Furthermore, the present invention also relates to the application of the Ag-doped titanic acid nanofilm material prepared according to the method described in the third aspects, wherein the Ag-doped titanic acid nanofilm material is mixed with a polymer, and then a composite coating containing the Ag-doped titanic acid nanofilm and the polymer is prepared; in the composite coating, the Ag elements are dispersed in the form of atoms or atomic clusters and the titanic acid nanofilm is dispersed in the polymer, wherein the polymer composite coating can be applied in the fields of hydrophobic materials, wastewater degradation materials, bactericidal coating materials, anticorrosive coatings, and coatings for offshore equipment and ships.

Furthermore, the polymer includes at least one of a polymer material, a resin material, and a coating;
Furthermore, in a specific example, wherein the titanic acid nanofilm material containing Ag-doped elements is mixed with PDMS (known as polydimethylsiloxane), to prepare a composite coating of Ag-doped titanic acid nanofilm and PDMS. The coating, in which the Ag element is dispersed in the titanic acid nanofilm in a embedding form of atoms or atomic clusters, can maximize the utilization of the bactericidal properties of the Ag element and the titanic acid nanofilm, while enhancing the hydrophobicity by the PDMS coating.

Furthermore, in a specific example, the Ag-doped composite coating of titanic acid nanofilm with PDMS can be applied in fields including hydrophobic materials, sewage degradation materials, bactericidal coating materials, anticorrosive coatings, coatings for marine equipment and ships.

In the twenty-sixth aspect, the present invention also relates to an application of the product material prepared according to the method described in any one of the first to tenth aspects, or the product material prepared according to the method described in any one of the twenty-first to twenty-fourth aspects, or the material described in any one of the eleventh to twentieth aspects, in home decoration paint, germicidal sprays, and antifouling paints.

As a home decoration paint, the Ag-doped product material or the material described above are mixed with the other components of the paint as a paint additive and applied to the surface of the furniture, the wares, or the wall to achieve an antibacterial effect;
As a germicidal spray, the Ag-doped product material or materials described above are mixed with other liquid spray components together and sprayed on the surface of furniture, wares, fabrics, and walls to achieve an antibacterial effect;
As an antifouling coating, the Ag-doped product material or materials as described above are substituted for the bactericidal antifouling component (e.g., cuprous oxide powder) in the conventional antifouling coating (e.g., antifouling paint) to achieve an antifouling effect.

Since Ag exists in nano-titanate, nano-titanic acid, and nano-TiO₂ in a very small particle size, the utilization efficiency of Ag is extremely high, and thus only a very small amount of addition is required to achieve the best antifouling effect;
Furthermore, the Ag is present as at least one of Ag, Ag₂O, AgO.

In the twenty-seventh aspect, the present invention further relates to an application of the product material prepared according to the preparation method described in any one of the first to tenth aspects, or the product material prepared according to the preparation method described in any one of the twenty-first to twenty-fourth aspects, or the material described in any one of the eleventh to twentieth aspects, in an antibacterial fabric;
Furthermore, the Ag-contained product material or the materials are dispersed so as to be adhered to or coated on the surface of the fabric, or to be mixed and knitted together with the fabric, so that the fabric has an antibacterial and sterilizing effect and capability.

Furthermore, the Ag is present as at least one of Ag, Ag₂O, AgO.

The beneficial effects of the present invention are mainly reflected in the following aspects:
First, by creatively adopting a cheap and readily available Ti-T alloy with solid dissolved E-group elements as a titanium source, and reacting an E-doped Ti-T intermetallic compound with a hot alkaline solution for a short period of time near the boiling temperature of the alkaline solution at atmospheric pressure, then the preparation of E-doped titanate nanofilm materials has been achieved in atmospheric pressure wiht a high efficiency. Based on this, it is possible to prepare titanate nanofilm materials embedded with E nanoparticles, E-doped titanic acid nanofilm materials, titanic acid nanofilm materials embedded with E nanoparticles, and TiO₂ nanosheets embedded with E nanoparticles in a low-cost and a high efficiency. In combination with the subsequent high temperature and high pressure reaction (described in the sixth aspect) of the key step (hydrogen generation and T-removal reaction), the matrix of the as-prepared solid product was changed from a thin film to a tube, which in turn further made it possible to efficiently prepare E-doped titanate nanotubes, E-doped titanic acid nanotubes, titanate nanotubes embedded with E nanoparticles, and TiO₂ nanotubes/rods embedded with E nanoparticles in a short period of time at low cost.

Although the strong alkali hydrothermal method is currently a more mature process for the preparation of nano titanate, nano titanic acid and nano TiO₂, the reaction requires the use of a high-pressure reaction vessel, generally using nano TiO₂ and a high concentration of strong alkali (e.g., NaOH solution) as the raw material through a long period of hydrothermal synthesis under high-temperature conditions, which is usually followed by a neutralization and acid washing to obtain titanic acid nanotubes. For example, in 2001, it was reported in the literature that titanic acid nanotubes with a tube length of tens to hundreds of nanometers and an inner diameter of 5.3 nm could be obtained by hydrothermal reaction in a high-pressure reaction vessel for 72 h under the condition of 130°C using industrial anatase-type TiO₂ and a 10 mol/L sodium hydroxide solution as the starting materials, followed by neutrality. Other methods reported in the literature for the preparation of sodium titanate also include: weighing NaOH and TiO₂ according to a stoichiometric relationship and then transferring them to a polytetrafluoroethylene high-pressure reactor, mixing them and then keeping them at a temperature of 230°C for 48 h ~ 96 h, and then taking them out, washing and drying them to obtain sodium titanate nanotubes when cooled down to room temperature, and further acid-washing to obtain titanic acid nanotubes. It can be seen that the conventional strong alkaline hydrothermal method is characterized by 1) using TiO₂ as the titanium source; 2) being carried out in a high-pressure reaction vessel, which requires airtight and high-pressure conditions; 3) being carried out at higher temperatures; 4) requiring a very long reaction time in terms of hours or days; and 5) the product obtained is generally titanate nanotubes or titanic acid nanotubes.

In contrast, the preparation of thin film-like titanate matrix substrates and their subsequent products in the first to fifth aspects of the present invention, although also employing a strong alkaline solution, is markedly different from the conventional strong alkali hydrothermal method in that 1) the Ti-T intermetallic compounds with solid dissolved E-group elements are mainly used as the titanium source; 2) the reaction is carried out in an open vessel with atmospheric pressure, and a high-pressure hermetically sealed vessel is not required; 3) it is preferably carried out at the boiling point of the alkaline solution or at boiling point temperature, does not need to be carried out at a very high temperature, and the upper limit of the temperature is the boiling point of the alkaline solution, which is very easy to control accurately; 4) the reaction can be completed in less than a minute or even a few seconds; 5) the product obtained is a E-doped titanate nanofilm material, and based on this, materials such as titanate nanofilm material embedded with E nanoparticles, E-doped titanic acid nanofilm material, titanic acid nanofilm material embedded with E nanoparticles, and TiO₂ nanosheet powder embedded with E nanoparticles, etc., can be further prepared.

Furthermore, while the preparation of tubular nano-titanates and subsequent products thereof as described in the sixth to tenth aspects of the present invention also employs a high temperature and high-pressure reaction, the reactants added to the high-pressure reaction vessel (as described in the sixth aspect) are E-doped titanate nanofilm materials already prepared and the corresponding alkaline reaction solution. Therefore, it is not necessary to use TiO₂ as the titanium source as in the conventional hydrothermal reaction, which first requires several hours to break the Ti-O bond, and then further to obtain the TiO₂ nanotube product by high temperature and high pressure. Specifically, even if the TiT intermetallic compound solid dissolved with the E-group elements is a powder or strip with a diameter or thickness of tens of micrometers, due to the special environment existing in the alkaline solution at the boiling point temperature, after a few minutes or even a few seconds of reaction at atmospheric pressure and near the boiling point temperature of the alkaline solution, the E-doped titanate nanofilm material can be generated, which greatly shortens the preparation time of the thin-film titanate matrix substrate. When it is necessary to further prepare a tubular titanate matrix, due to the ultrathin thickness of the E-doped titanate nanofilm material, it can be transformed into E-doped titanate nanotubes with only a short period of high-temperature and high-pressure treatment according to the sixth aspect, which greatly shortens the preparation time of the corresponding tubular titanate matrix substrate. Therefore, whether preparing a thin film-like titanate matrix or a tubular titanate matrix doped with the E-group elements, the total time of the entire preparation process described in the present invention in terms of the atmospheric pressure reaction time and the high-pressure reaction time combined can be measured in minutes (much less than 1 h), which is still much lower than the preparation time required by other reported or disclosed preparation methods, and is of extremely obvious positive advances.

The obtaining of this apparent beneficial effect, in particular the significant reduction of the preparation time of the target product, is closely related to the use of the E-doped TiT intermetallic compounds with as a source of titanium, and the fact that the reaction is carried out at or near the preferred boiling point temperature (*T_{f solution}*). When the reaction occurs at atmospheric pressure and near the boiling point temperature of the solution, the solution composition of the reaction system has a distinct peculiarity, which is manifested in the following: in the temperature interval below the boiling point temperature of the alkaline solution, the solvent exists mainly as liquid water, and the state of the reaction system is very ordinary; however, near or at the boiling point temperature of the alkaline solution, the solvent contains, in addition to the liquid water and the gaseous water produced by boiling, the solvent that is undergoing the process of transition from liquid water to gaseous water in the critical state of water. Moreover, due to the presence of reactants in solution and the as-generated nano-scale products in the reaction system, according to the principle of heterogeneous nucleation, it provides a large number of plasmas for boiling and vaporization, so that the reaction system is in a special environment of full-scale boiling and evaporation. In this specific environment, the content and state of dissolved atmospheric gases (oxygen, nitrogen) in water are also extremely specific (because the large number of boiling water vapor, hydrogen generated by the reaction of T and alkali, changes the saturation partial pressure conditions of dissolved gases in water). At the same time, the reaction of the E-doped Ti-T intermetallic compounds and concentrated alkaline solution in the process of T-removal reaction will generate a large amount of hydrogen, these hydrogen generated within a short period of time and a large number of heterogeneous nuclei boiling vapors produced by water vapor, which result in the violent expansion, will further promote the nano-fragmentation reaction and reconfiguration process of the shape and the composition at the interface of the initial alloy. The T salt dissolved in the alkaline solution will also change the composition of the reaction solution. These many characteristics of the solution at the boiling point temperature provide a very specific reaction environment for the reaction. In particular, since the T-removal reaction of Ti-T intermetallic compounds at or near the boiling temperature is extremely violent, the hydrogen produced by the reaction is also extremely rapid. Therefore, under the high-speed expansion of in situ hydrogen generation, the original initial reactants (initial alloy powders or ribbons) are nano-fragmented by the violent hydrogen precipitation and T-removal reaction, which makes it difficult to stabilize the three-dimensional network-like continuous nanoporous structure generally generated by the low- or room-temperature dealloying reaction, and further generates the flocculent two-dimensional E-doped titanate nanofilms through shape and composition reconfiguration. This not only significantly reduces the preparation time of the target thin film-like product, but also achieve a high yield of 2D E-doped titanate nanofilms. Moreover, the constant temperature of the boiling point of a specific alkali solution allows extremely precise temperature control, making the control of the product morphology and composition extremely accurate and easy. In conclusion, the design and application of this special reaction environment of the present invention can skillfully control the composition and morphology of the reaction products and greatly reduce the preparation time of the target products.

When the Ti-T intermetallic compound with solid dissolved E-group elements is used as the titanium source, even if the titanium source is a micrometer-sized powder or strip sample, the reaction mechanism is significantly different compared with the conventional hydrothermal method of preparing titanate nanofilms or nanotubes using TiO₂ as the titanium source with strong alkali. The concentrated alkaline solution used in the present invention mainly serves two purposes: 1) to remove the T in the E-doped Ti-T intermetallic compounds by dealloying reaction, so that the E atoms and Ti atoms are free from the Ti-T intermetallic compounds. Specifically, when the E-doped Ti-T intermetallic compound reacts with a strong alkaline solution at or near the boiling point temperature of the solution, under a special reaction environment, the first thing that occurs is an extremely rapid dealloying reaction of the T with the strong alkaline solution to produce a T salt dissolved in water and to generate hydrogen gas. When T enters the solution as T salt, the atoms of E-group elements and Ti atoms in the E-doped Ti-T intermetallic compound in solid solution are freed, and Ti can be easily combined with O and other elements, and further reconstructed by shape and composition to generate titanate thin films, a process that can be accomplished in a few seconds or minutes at the shortest. 2) The presence of alkali allows the released Ti atoms to combine with the cations and oxygen elements in the alkaline solution to form titanate nanofilms in a time as short as a few seconds in the special environment near the boiling point temperature of the alkaline solution. At the same time, the free and inert E-group elements are encapsulated in the titanate nanofilm as atoms or atomic clusters. In contrast, the conventional high-pressure hydrothermal method uses TiO₂, which has a very high stability, as the Ti source. Even if the TiO₂ is a nanometer-sized powder, it still needs to be reacted under high pressure, high temperature, and several hours to destroy the Ti-O bond structure of the TiO₂ in advance, so that the Ti can be released and then be combined with the O and other elements again in a new and specific way to generate titanate. There is a comparative example provided in the examples of the present invention, when anatase-type nano TiO₂ with a particle size of 50 - 100 nm is used as the Ti source, and, it shows almost no change and remains anatase-type nano TiO₂ with a particle size of 50 - 100 nm (the size of the particle size can be estimated to be unchanged by the half-height width of the XRD peaks), after reacting at the boiling temperature of 10 mol/L aqueous sodium hydroxide solution for 10 min. Therefore, in addition to the special environment generated at the boiling temperature of the solution, the selection of the titanium source through Ti-T intermetallic compounds is also very important for the rapid and short-term preparation of the reaction products.

Secondly, the facil preparation conditions of two-dimensional E-doped titanate nanofilm materials, two-dimensional E-doped titanic acid nanofilm materials were creatively invented, and other subsequent materials were further prepared by further heat treatment or acid treatment. The reaction of the initial alloy with alkaline solution at a temperature of 60°C ≤ *T₁* ≤ *T_{f solution}* is important for the preparation of products with a microscopic morphology in the form of two-dimensional thin films. In one comparative example, when the initial alloy powder of TiAl₃ intermetallic compound containing solid solution Ag reacted with 10 mol/L NaOH solution at 35°C for 2 h under atmospheric pressure, the shape of the original initial alloy powder before and after the reaction was roughly unchanged, and it was still the original crushed and angular powder particles, and it did not generate a large number of monolithic two-dimensional thin film-like products in the microstructure, but rather a nanoporous structure of titanate or nanoporous structure of titanium which constitutes a consistent appearance with the shape of the original alloy powder by means of three-dimensional ligamenst, and its particle size is still comparable to that of the initial alloy powder, which is mainly of several micrometers or tens of micrometers. Therefore, the reaction between the initial alloy and the alkaline solution occurring at a lower temperature near room temperature is completely different from the reaction of the present invention in the temperature interval of 60°C ≤ *T₁* ≤ *T_{f solution},* especially in the high temperature section of the temperature interval (100°C < *T₁* ≤ *T_{f solution}*), and the product morphology is also completely different. The present invention creatively invents a method for preparing two-dimensional E-doped titanate nanofilms and two-dimensional E-doped titanic acid nanofilm materials by an initial alloy of T-Ti intermetallic compounds solid dissolved with E-group elements.

Specifically, when the reaction temperature is taken in the low value range of 60°C ≤ *T₁* ≤ *T_{f solution}* temperature interval 60°C ≤ *T₁* ≤ 100°C and the alkaline solution consists mainly of an aqueous NaOH solution, the yield of the target product of E-doped titanate nanofilm is low. However, when the alkaline solution contains KOH, and the target titanate nanofilm matrix doped with E-group elements includes a potassium titanate nanofilm matrix, the yield of the E-doped titanate nanofilm in the product can be substantially increased; for example, when the alkaline solution mainly includes an aqueous solution of KOH, and the reaction temperature is 60°C, the yield of the target E-doped potassium titanate nanofilm in the resulting product is not lower than 50%; when the reaction temperature is 71°C, the yield of the E-doped potassium titanate nanofilm in the obtained product is not lower than 65%; when the reaction temperature is 81°C, the yield of the E-doped potassium titanate nanofilm in the obtained product is not lower than 75%; when the reaction temperature is 91°C, the yield of E-doped potassium titanate nanofilm in the obtained product is not lower than 85%; when the reaction temperature is 96°C, the yield of the E-doped potassium titanate nanofilm in the product is not less than 90%;

When the reaction temperature is taken as 60°C ≤ *T₁* ≤ *T_{f solution}* temperature interval high value range 100°C < *T₁* ≤ *T_{f solution}*, regardless of the type of alkali changes, the yield of the resulting product E-doped titanate nanofilm is very high, and the product morphology is completely different from that of the original initial alloy powder particles or ribbons; for example, when the reaction temperature is higher than 101°C, a high yield of the E-doped titanate nanofilm can be obtained, , i.e. generally 95%~100%; when the reaction temperature is taken as the boiling point *T_{f solution}* of alkaline solution at atmospheric pressure, a higher yield of the E-doped titanate nanofilm can be obtained, i.e. generally 99%~100%;

Third, the process of preparing E-doped titanate nanotubes in the sixth aspect and the twenty-first aspect can greatly reduce the preparation time of the product compared to the conventional preparation method using TiO₂ nanoparticles as precursors. Specifically, the difference between the sixth aspect and the twenty-first aspect is that the sixth aspect first prepare a two-dimensional E-doped titanate nanofilm, and then prepare the E-doped titanate nanotubes under high temperature and high pressure; whereas the twenty-first aspect skip the process of preparing the two-dimensional E-doped titanate nanofilm, and form the E-doped nanoporous titanate in the temperature-raising stage of the reaction system, and then form the two-dimensional titanate nanofilm and further form the E-doped titanate nanotubes in the holding stage of high temperature and high pressure. The sixth aspect of the preferred example is that the hydrogen generation and T-removal is carried out near the boiling point temperature, and the preparation of two-dimensional titanate nanofilms doped with E-group elements is achieved in a very short period of time due to the utilization of the vigorous hydrogen generation and T-removal (as described in the first aspect thereof), and therefore the subsequent high temperature and high pressure reaction is required only for a relatively short period of time to achieve the preparation of E-doped titanate nanotubes; and the twenty-first aspect of the preferred example has a slower, less vigorous reaction in the preparation stage and the heating-up period without the the vigorous hydrogen generation and T-removal, therefor the nanoporous titanate structures doped with E-group elements is obtained. From this point of view, its transformation of the nanoporous titanate structure doped with E-group elements into E-doped titanate nanotubes during the high temperature and high pressure holding stage is more difficult (an additional process of transforming a two-dimensional titanate thin film intermediate product into E-doped titanate thin film is required) and takes longer time than that of the sixth aspect; however, in the twenty-first aspect, the hermetically sealed vessel contains the reactive hydrogen gas generated by the additional high-pressure, which is higher than the pressure corresponding to the sixth aspect at the same T₂ temperature, and the high pressure contributes to the formation of the E-doped titanate nanotubes; therefore, from this point of view, the difficulty of forming the E-doped titanate nanotubes at the high temperature and high pressure holding stage of the twenty-first aspect is, again, lower than that of the sixth aspect. The actual process is the result of the game between the two situations. The sixth aspect is more efficient as it takes slightly less time than the twenty-first aspect, but the twenty-first aspect has one process step less and is simpler, so both aspects have their own advantages. In conclusion, compared with the traditional preparation method, both the sixth aspect and the twenty-first aspect schemes greatly reduce the preparation time of E-doped titanate nanotubes, and the total reaction time can be less than 0.5 h, which is of positive significance.

Fourth, the precise control of the composition and morphology of the product can be achieved through the precise control of the reaction conditions. Specifically, in the present invention, when the concentration of the alkali in the solution is determined, the boiling point temperature to which the solution can be heated under ambient pressure is also determined, which means that the pressure and temperature in the reaction conditions are precisely determined. At the boiling point temperature of the alkaline solution, any excess heat added to the solution is converted to the heat of vaporization of water without raising the temperature of the solution, which makes it possible to keep the temperature of the solution constant at the boiling point temperature by continuous heating. Even though the dealloying process of the Ti-T intermetallic compounds with E-group elements solid dissolved generates a large amount of latent heat during the reaction process, the temperature of the reaction solution can still be maintained at the boiling point temperature of the solution

In contrast, conventional high-pressure hydrothermal synthesis carries out the synthesis of products at high pressure and temperature. When it is necessary to terminate the reaction, it is necessary to slowly reduce the pressure and temperature to normal temperature and ambient pressure, and then transfer the sample, which takes a certain amount of time to complete. Generally speaking, for chemical reactions, a certain temperature and pressure condition corresponds to a certain composition and shape of the product. When the temperature and pressure of the alkaline solution cannot be quickly changed to normal temperature and ambient pressure, and transferred in time, the equilibrium of the reactants at the original temperature and pressure is broken, and certain changes in composition and morphology may occur at other temperatures and pressures. In contrast, the preparation of the titanate nanofilm in the present invention is carried out in an open container at atmospheric pressure, and when the reaction needs to be terminated, it is only necessary to quickly add cold water or room temperature water to the reaction container within a few seconds, or to cool it down through a cold filter, so that it is possible to almost instantaneously reduce the temperature and concentration of the reaction system to the temperature and concentration at which the reaction can no longer be carried out, so as to make the composition and shape of the original reaction equilibrium product to be preserved. Therefore, the technical solution provided by the present invention can obtain E-doped titanate nanofilm materials with stable composition and morphology. On the basis of the present invention, it is possible to further prepare compositionally and morphologically stable titanate nanofilms embedded with E nanoparticles, E-doped titanic acid nanofilms, titanic acid nanofilms embedded with E nanoparticles, TiO₂ nanosheets embedded with E nanoparticles, and so on. And the stable control of the product composition and morphology is one of the key factors that the products can be widely used, which is of positive significance.

Fifth, in situ doped E-group elements as atoms or atomic clusters in titanate nanofilms, titanic acid nanofilms, titanate nanotubes, and titanic acid nanotubes was achieved; and in-situ precipitation of E nanoparticles in titanate nanofilms, titanic acid nanofilms, TiO₂ nanosheets, and titanic acid nanotubes, and TiO₂ nanotubes/rods was further achieved by subsequent heat treatment.

Dopant elements or dopant nanoparticles have very important and positive effects on the functional applications of nano-titanate, nano-titanic acid, and nano-TiO₂. Currently, it is difficult to achieve the in-situ doping of nano-titanate and nano-titanic acid with dopant elements by means of atoms or atomic clusters by conventional preparation methods, and it is generally only possible to achieve the doping of nanoparticles with additional nanoparticles. The strategy in these conventional preparation methods is mainly as follows: after preparing titanate nanoparticles, titanic acid nanoparticles, or TiO₂ nanoparticles, the doped nanoparticles prepared by other methods are compounded and mixed with titanate nanoparticles, titanic acid nanoparticles, or TiO₂ nanoparticles, so as to prepare dopant nanoparticles containing titanate nanoparticles, titanic acid nanoparticles, or TiO₂ nanoparticles, wherein the dopant nanoparticles mainly adhered to the matrix by adsorption. This mechanical mixing and attachment method is not only unfavorable to the physical-chemical interaction between the dopant elements and the matrix at the atomic scale, but also easily causes the dopant nanoparticles to dislodged from the matrix such as titanate nanoparticles, titanic acid nanoparticles, or TiO₂ nanoparticles, which results in instability and deterioration of the properties of the composite materials.

The present invention, on the other hand, creatively solves the above problem: not only solves the problem of E nanoparticles shedding from the matrix through the embedded distribution of E nanoparticles in each corresponding matrix (including titanate nanofilms, titanic acid nanofilms, TiO₂ nanoflakes, titanic acid nanotubes, and TiO₂ nanotubes), but also greatly enhances the physico-chemical interaction between the E nanoparticles and the matrix. In particular, the present invention also achieves the distribution of the doped E-group elements as atoms or atomic clusters in each of the corresponding matrices (including titanate nanofilms, titanic acid nanofilms, titanate nanotubes, and titanic acid nanotubes). At the same time, because of the pinning effect of the E-group elements, it also greatly improves the phase transition thermal stability of the matrix material, which increases the phase transition thermal stability of the matrix by up to 200°C, which is of great application significance. For example, at present, industrial Ag nanoparticles can generally be applied as bactericidal materials, while nano-titanates, nano-titanates acid, and nano-TiO₂ mechanically mixed with them can generally be used as their carriers. Since the Ag that plays a bactericidal role is mainly the Ag atoms on the surface of the Ag nanoparticles, the atoms inside the Ag nanoparticles do not play a bactericidal role, resulting in some kind of waste of the internal Ag atoms in terms of their performance and increasing the cost. Moreover, the physically adsorbed Ag nanoparticles are also prone to fall off from the substrates, resulting in unstable performance with poor performance durability. In contrast, the present invention creatively achieves that the Ag element is distributed as atoms or atomic clusters in titanate nanofilms, titanic acid nanofilms, titanate nanotubes, and titanic acid nanotubes, so that not only is there no need to worry about the problem of shedding of Ag, but also the utilization of Ag can be greatly maximized, and the phase transition thermal stability of the substrate material can be greatly improved, which is of great beneficial significance. In one of the embodiments, the composite coating obtained by compounding the titanic acid film matrix with Ag as atoms or atomic clusters exhibits extremely excellent bactericidal properties.

Sixth, it makes possible the large-scale industrial production of many of the products involved. The reaction pressure of the key steps of this series of inventions can be atmospheric pressure, and it is not necessary to need a high-pressure closed container; the reaction temperature is the boiling point temperature of the solution or near the boiling point temperature of the solution (depending on the alkali concentration in the solution, the temperature is roughly in the range of 105°C to 180°C, which is relatively mild); the titanium source required is mainly a solid solution of Ti-T intermetallic compounds with E-group elements, which can be prepared in large scale by methods such as "alloy melting + casting + crushing" or "alloy melting + melt spinning" and other methods of large-scale preparation. Especially importantly, the critical reaction time can be as short as a few seconds, which is extremely efficient. Moreover, the reaction temperature, pressure and other conditions can be precisely controlled and the reaction can be quickly terminated to obtain the desired products. All these features greatly simplify the production process, improve the production efficiency, and reduce the production cost, so that the low-cost, short-time and efficient large-scale preparation of the corresponding products at atmospheric pressure and (or) medium temperature, has become possible.

Therefore, the preparation methods of the present invention is characterized by simple process, easy operation, high efficiency, low cost, and can prepare a variety of nano-titanate, nano-titanic acid, and nano-TiO₂ doped with E-group elements or embedded with E nanoparticles with the shape of nanofilms, nanotubes/rods and other morphologies, which have a very good prospect of application in the fields of polymer-based nanocomposites, resin-based composites, ceramic materials, photocatalytic materials, hydrophobic materials, wastewater-degrading materials, bactericidal coatings, anticorrosive coatings, marine coatings, and so on.

### BRIEF DESCRIPTION OF THE DRAWINGS

Figure 1 shows the low and high magnification TEM photographs of Ag-doped sodium titanate nanofilms in Embodiment 1;
Figure 2 shows the TEM photograph of sodium titanate nanofilms embedded with Ag nanoparticles in Embodiment 1;
Figure 3 shows the low magnification and high magnification TEM photographs of Ag-doped titanic acid nanofilms in Embodiment 1;
Figure 4 shows an elemental distribution of the Ag-doped titanic acid nanofilms in Embodiment 1 ;
Figure 5 shows the low magnification and high magnification TEM photographs of titanic acid nanofilms embedded with Ag nanoparticles in Embodiment 1;
Figure 6 shows the low magnification, medium magnification, and high magnification TEM photographs of anatase TiO₂ nanosheet powder embedded with Ag nanoparticles in Embodiment 1;
Figure 7 shows the low magnification and high magnification TEM photographs of Ag-doped titanic acid nanofilms in Embodiment 2;
Figure 8 shows the low magnification and high magnification TEM photographs of Ag-doped titanic acid nanofilms in Embodiment 9;
Figure 9 shows an XRD pattern of the product prepared in Comparative Example 1;
Figure 10 shows the XRD pattern of the anatase TiO₂ powder before reaction in Comparative Example 1;
Figure 11 shows a low magnification SEM photograph of the product in Comparative Example 2;
Figure 12 shows a high magnification SEM photograph of the product in Comparative Example 2;
Figure 13 shows the TEM morphology and diffraction spectra of the titanic acid nanofilms without doping elements by heated at 475°C for 2 h in Comparative Example 3.

### DETAILED DESCRIPTION

Hereinafter, the described technical solutions will be further illustrated by the following specific embodiments:

### Embodiment 1

This embodiment provides a method of preparing of Ag-doped sodium titanate nanofilm material, sodium titanate nanofilm material embedded with Ag nanoparticles, Ag-doped titanic acid nanofilm material, titanic acid nanofilm material embedded with Ag nanoparticles, and TiO₂ nanosheet powder embedded with Ag nanoparticles, and their uses, including the following steps:
Weighing the metal Ag, Ti and Al raw materials according to the ratio of Ag₁Ti_{24.75}Al_{74.25} (atomic percentage), melting to obtain an alloy melt with the composition of Ag₁Ti_{24.75}Al_{74.25}; preparing the alloy melt into an initial alloy in the form of ribbons with a thickness of ~20 µm by a rapid solidification method using melt spinning with copper roller. The initial alloy is mainly composed of TiAl₃ intermetallic compounds containing solid dissolved Ag.

Under atmospheric pressure, 0.25 g of the above-made Ag₁Ti_{24.75}Al_{74.25} initial alloy ribbon was added into 50 ml of aqueous NaOH solution at a concentration of 10 mol/L and a temperature of its boiling point (about 119°C) with constant stirring. During the reaction with the concentrated alkaline solution, the Ag₁Ti_{24.75}Al_{74.25} initial alloy ribbon undergoes nano-fragmentation through intense hydrogen generation and Al-removal reaction, and simultaneously undergoes shape and compositional reconfiguration to produce solid flocculent products diffusely distributed in the alkaline solution.

The hydrogen generation and Al-removal reaction was finished within 15 s, and the temperature was hold for 2 min to ensure the completion of the reaction, and then 450 ml of room temperature water was rapidly poured into the reaction system under stirring, and the concentration of alkali in the solution was reduced to 1 mol/L within 2 s, and the temperature was reduced to below 45°C.

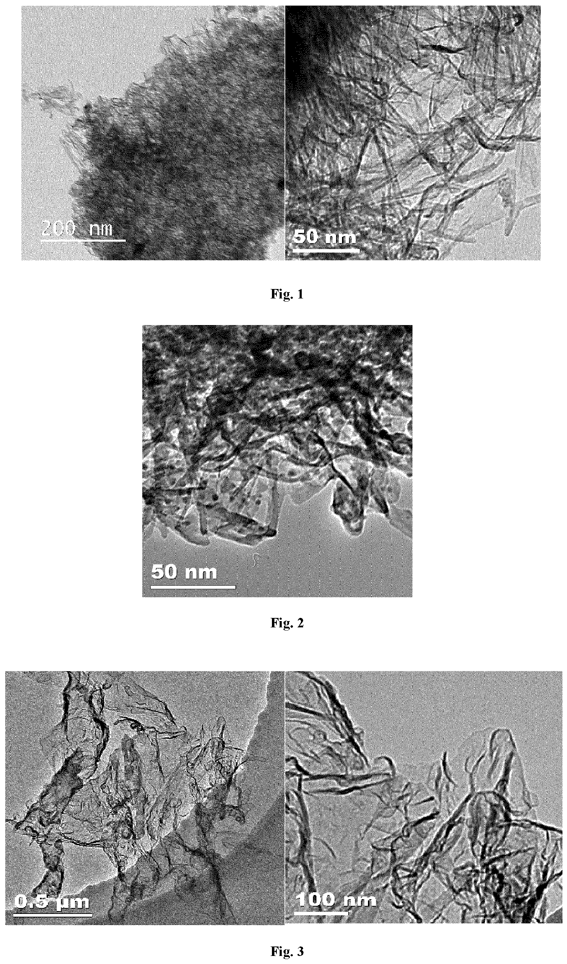

The solid flocculent product was separated from the alkaline solution, cleaned, and dried at 280°C for 10 min, i.e., Ag-doped sodium titanate nanofilm material was obtained, with the thickness of a single film ranging from 0.25 nm to 2 nm, and the average area of the film was larger than 2000 nm², which showed the characteristics of an obvious two-dimensional material, as shown the low-magnification and high-magnification TEM images in Fig. 1. Here the Ag element is mainly distributed in the titanate nanofilm as atoms or atomic clusters, and thus it can not be observed by TEM contrast. Although the Ag-doped sodium titanate nanofilms agglomerated together, they did not contain any nanoporous structure or porous skeletal structure in their structure; based on the observation of the agglomerates in Fig. 1, combined with the electron beam penetration of the TEM, it can be found that the thickness of the agglomerates is extremely thin, which suggests that the agglomerates are not structurally stable near-spherical bodies but rather flat aggregates of a large number of films, which were uniformly flattened out on the TEM carbon mesh during the TEM sample preparation process..

The above Ag-doped sodium titanate nanofilm material was heat-treated at 550°C for 2 hours, i.e., the sodium titanate nanofilm material embedded with Ag nanoparticles was obtained, with the thickness of a single film in the range of about 0.5 nm ~ 4 nm, the average area of the film being greater than 1000 nm², and the size of Ag nanoparticles in the range of 1.5 nm ~ 5 nm. its TEM morphology is shown in Fig. 2. The thermal stability of the sodium titanate nanofilm matrix was greatly improved due to the pinning effect of Ag elements, as detailed in Comparative Example 3.

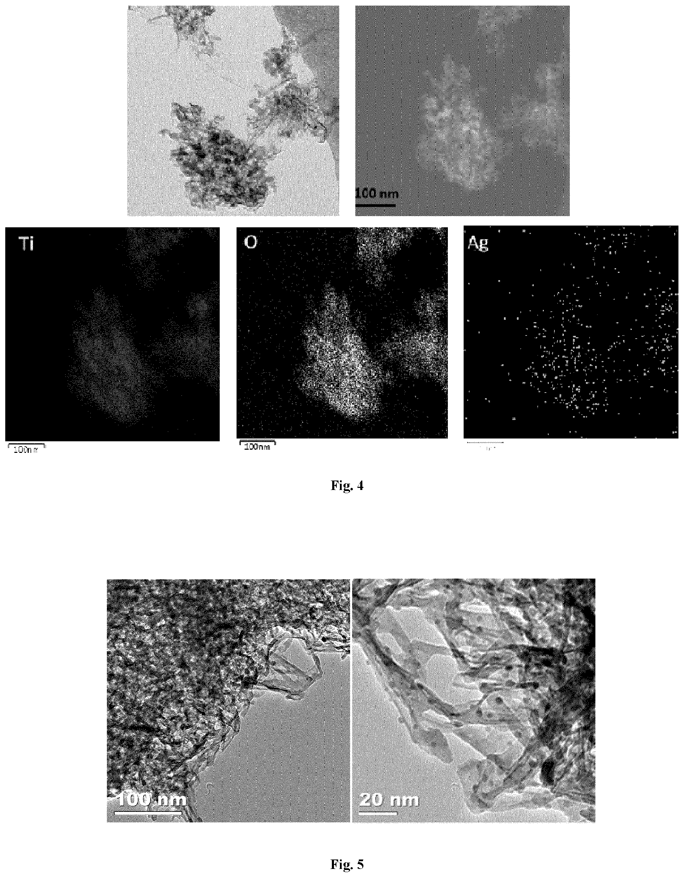

The solid flocculent product after separation from the alkaline solution as described above was dispersed in water, and then 0.025 mol/L HCl solution was gradually added to it, so that the pH value of the mixed solution was continuously decreased, and the pH value of the mixed solution was finally controlled between 2 and 5. After 5 min, the solid-liquid separation was carried out, and after being cleaned, and dried at 250°C for 15 min, i.e., Ag-doped titanic acid nanofilm material was obtained. The thickness of the single film was about 0.25 nm ~ 2 nm, and the average area of the film was larger than 2000 nm². The TEM morphology was shown in the low magnification and high magnification photographs of Fig. 3, and the area of the film was larger than 50,000 nm². Here the Ag element was mainly distributed as atoms or atomic clusters in the prepared titanic acid nanofilm, as shown in the elemental distribution map of Fig. 4: although the Ag is not visible in the bright-field image, Ag is uniformly distributed in three different regions in the compositional distribution map (for the convenience of characterization, the region where the film disperses small clusters is selected for elemental distribution mapping to obtain the strongest possible differentiated signals from different regions).

The above Ag-doped titanic acid nanofilm material was heat-treated at 550°C for 2 hours, and the Ag elements distributed in the prepared titanic acid nanofilm in the form of atoms or atomic clusters were diffused, agglomerated, and grew up to generate Ag nanoparticles embedded in the titanic acid nanofilm, i.e., titanic acid nanofilm material embedded with Ag nanoparticles was obtained, and the thickness of a single film was about 0.5 nm ~ 4 nm, and the average area of the film was greater than 1000 nm², and its thickness increased and its area contracted compared with that of the unheated titanic acid nanofilm; the size of the embedded Ag nanoparticles is in the range of 1.5 nm ~ 5 nm, and some of the embedded Ag nanoparticles, in addition to being partially embedded in the film matrix with a portion of the volume, are also partially exposed outside the film matrix with a portion of the volume. The TEM morphology of the resulting titanic acid nanofilm material embedded with Ag nanoparticles is shown in the low-magnification and high-magnification photograph in Figure 5. The thermal stability of the titanic acid nanofilm matrix was greatly improved due to the pinning effect of the Ag element, as detailed in Comparative Example 3.

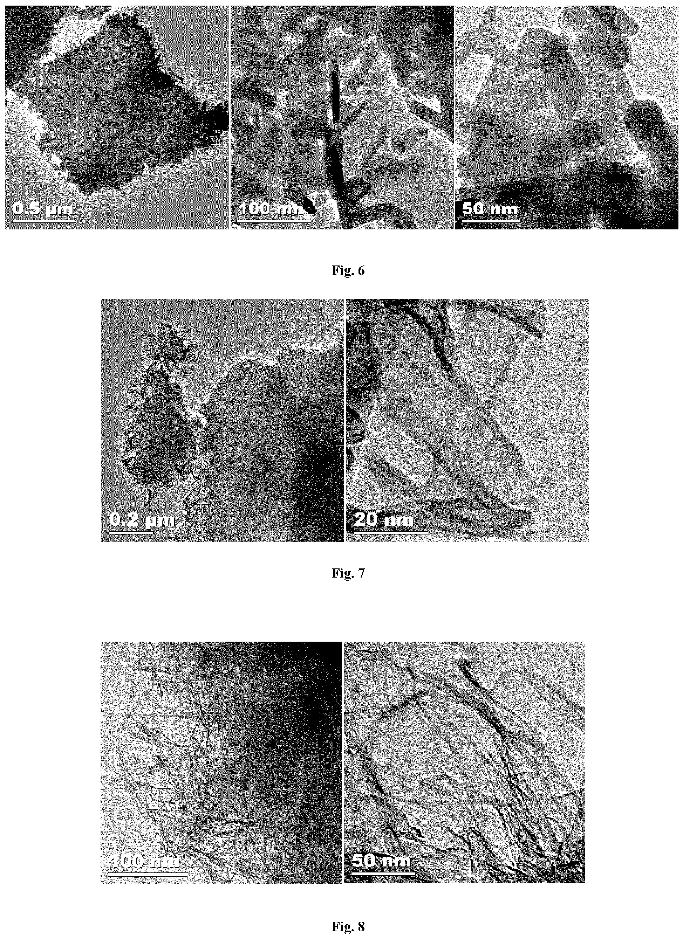

The above Ag-doped titanic acid nanofilm material was heat-treated at 650° C for 3 hours, i.e., anatase TiO₂ sheet powder embedded with Ag nanoparticles was obtained. With the heat treatment at this temperature, not only the Ag elements distributed as atoms or atomic clusters in the Ag-doped titanic acid nanofilm were diffused, agglomerated, and grew up to generate the embedded Ag nanoparticles, but also the titanic acid film matrix thereof underwent a transformation to anatase TiO₂, and at the same time the morphology underwent a transformation from thin film to sheet; the anatase-type TiO₂ nanosheets had a thickness in the range of 1 nm - 15 nm, an average area greater than 500 nm², and the size range of the in situ embedded Ag nanoparticles in the anatase TiO₂ nanosheets was 1.5 nm ~ 5 nm, and their TEM morphologies was shown in the low-middle-high magnification images in Figure 6.

The rutile TiO₂ sheet powder embedded with Ag nanoparticles was obtained by heat treating the above Ag-doped titanic acid nanofilm material at 950°C for 2 hours. The rutile TiO₂ nanosheets have a thickness range of 2 nm ~ 25 nm, an average area of more than 300 nm², and a size range of Ag nanoparticles of 1.5 nm ~ 5 nm.

The above Ag-doped titanic acid nanofilm material is mixed with PDMS (polydimethylsiloxane), and then a PDMS composite coating containing the Ag-doped titanic acid nanofilm is obtained according to a coating preparation method. In this coating, Ag is dispersed in the titanic acid nanofilm in the form of atoms or clusters, and the titanic acid nanofilm is dispersed in PDMS, so that the bactericidal properties of Ag and the mechanical strengthening and strong hydrophobic properties of the titanate nanofilm can be utilized to the maximum extent to obtain the PDMS composite coating with excellent mechanical properties, hydrophobic properties and bactericidal properties. This PDMS composite coating material can be applied in fields including hydrophobic materials, wood antiseptic and bactericidal materials, photocatalytic materials, bactericidal coating materials, coatings for offshore equipment and ships.

Application as a home decoration coating: the Ag-doped titanic acid nanofilm material described above is applied to the surface of furniture, wares, and walls as a coating additive mixed with other components of the coating to achieve an antibacterial effect;

Application as a germicidal spray: mixing the Ag-doped titanic acid nanofilm material described above with other liquid spray components and spraying them together through a spray carrier on the surface of furniture, wares, fabrics, and walls to achieve an antibacterial effect;

Application as an antifouling coating: replacing the above-described Ag-doped titanic acid nanofilm material with the bactericidal antifouling component in the conventional antifouling coating to achieve the antifouling effect;

Application in antimicrobial fabrics: dispersing the above-described Ag-doped titanic acid nanofilm material so that it adheres to or is coated on the surface of fabrics or is mixed and knitted with fabrics, so as to enable the fabrics to possess antibacterial and antiseptic effects and capabilities.

### Embodiment 2

The present embodiment provides a method for preparing an Ag-doped potassium titanate nanofilm material, a potassium titanate nanofilm material embedded with Ag nanoparticles, an Ag-doped titanic acid nanofilm material, a titanic acid nanofilm material embedded with Ag nanoparticles, and a TiO₂ nanosheet powder embedded with Ag nanoparticles, and their uses, including the following steps:
The raw materials of metal Ag, Ti and Al are weighed according to the ratio of Ag₁Ti₃₃Al₆₆ (atomic percent) and melted to obtain an alloy melt with the composition of Ag₁Ti₃₃Al₆₆. The alloy melt is prepared into a ribbon-like initial alloy with a thickness of ~20 µm by a rapid solidification method using melt spinning with copper roller. The initial alloy is mainly composed of TiAl₂ intermetallic compounds containing solid dissolved Ag.

Under atmospheric pressure, 0.25 g of the above-produced Ag₁Ti₃₃Al₆₆ initial alloy ribbon was added to 50 ml of aqueous KOH solution at a concentration of 10 mol/L and a temperature of its boiling temperature (about 125°C) under continuous stirring. The Ag₁Ti₃₃Al₆₆ initial alloy ribbon underwent nano-fragmentation through a violent hydrogen generation and Al-removal reaction with the concentrated alkaline solution, and simultaneously generated solid flocculent products diffusely distributed in the alkaline solution through shape and composition reconfiguration.

The hydrogen generation and Al-removal reaction was completed within 10 s. The temperature was hold for 1 h to confirm the end of the hydrogen generation and Al-removal reaction, and to confirm that the corresponding products could still be obtained by prolonging the holding time; the volume of the solution was maintained at 50 ml by replenishing the evaporated water during the holding time.

After 1 h, 450 ml of room temperature water was rapidly poured into the reaction system at one time under stirring, and the alkali concentration in the solution was reduced to 1 mol/L within 2 s, and the temperature was reduced to below 45°C.

The solid flocculent product was separated from the alkaline solution, cleaned, and dried at 150°C for 10 min, i.e., Ag-doped potassium titanate nanofilm material was obtained, with the thickness of a single film of about 0.25 nm ~ 2 nm, and the average area of the film being larger than 2000 nm². Here the Ag element was mainly distributed in the potassium titanate nanofilm in the form of atoms or atomic clusters. Due to the oxidation of Ag during the drying process, such Ag elemen contains O-bound Ag.

The solid flocculent product was separated from the alkaline solution, washed, and dried at 250°C for 30 min to obtain the Ag-doped potassium titanate nanofilm material, with the thickness of a single film of about 0.25 nm ~ 2 nm, and the average area of the film was more than 2,000 nm², in which the Ag element was mainly distributed as atoms or atomic clusters in the potassium titanate nanofilm. It is shown that the target products of Ag-doped potassium titanate nanofilms can still be obtained by continuing the holding time for 1 h after the end of the hydrogen generation and Al-removal reaction.

The above Ag-doped potassium titanate nanofilm material was heat-treated at 550°C for 1 h. The potassium titanate nanofilm material embedded with Ag nanoparticles was obtained, with the thickness of a single film ranging from about 0.55 nm ~ 4 nm, the average area of the film being greater than 1500 nm², and the size of the Ag nanoparticles ranging from 1.5 nm ~ 5 nm.

The solid flocculent product after separation from the alkaline solution as described above was dispersed in water, and then 0.025 mol/L HCl solution was gradually added thereto, so that the pH value of the mixed solution was continuously decreased, and the pH value of the mixed solution was finally controlled between 2 and 5, and after 5 min, it was separated, cleaned, and dried at 280° C for 20 min, i.e., the Ag-doped titanic acid nanofilm material was obtained. The thickness of a single film was about 0.25 nm ~ 2 nm, and the average area of the film was greater than 2000 nm², Here the Ag element were distributed in the titanic acid nanofilm as atoms or atomic clusters, and its morphology was shown in the low magnification and high magnification images of Fig. 7.

The Ag-doped titanic acid nanofilm material described above was heat-treated at 500°C for 5 hours, i.e., the titanic acid nanofilm material embedded with Ag nanoparticles was obtained, and the thickness of a single film was about 0.5 nm ~ 3 nm, and the average area of the film was greater than 1500 nm², and the size of the Ag nanoparticles was in the range of 1.5 nm ~ 5 nm; Some of the embedded Ag nanoparticles, in addition to being partially embedded in the film matrix with a portion of the volume, are also partially exposed outside the film matrix with a portion of the volume.

The Ag-doped titanic acid nanofilm material was heat-treated at 650°C for 2 hours to obtain anatase TiO₂ nanosheets embedded with Ag nanoparticles. The thickness of the anatase-type TiO₂ nanosheets ranges from 1 nm ~ 15 nm, the average area is greater than 500 nm², and the size of the in situ Ag nanoparticles embedded in the anatase-type TiO₂ nanosheets ranges from 1.5 nm ~ 5 nm.

The rutile-type TiO₂ nanosheets embedded with Ag nanoparticles was obtained by heat treating the above Ag-doped titanic acid nanofilm material at 950°C for 2 hours. The thickness of the rutile-type TiO₂ nanosheets ranges from 2 nm ~ 25 nm, and the size of the in situ Ag nanoparticles embedded in situ in the rutile--type TiO₂ nanosheets ranges from 1.5 nm ~ 5 nm.

The Ag-doped titanic acid nanofilm material described above is mixed with a polymer according to a coating preparation method to obtain a composite coating containing polymer and Ag-doped titanic acid nanofilm. The Ag element in the coating is dispersed in the titanic acid nanofilm in the form of atoms or atomic clusters, and the titanic acid nanofilm is dispersed in the polymer composite coating. So that the bactericidal properties of the Ag element, and the mechanically strengthened and strong hydrophobic properties of the titanic acid nanofilm, can be utilized to the maximum extent possible, and to obtain a polymer composite coating with excellent mechanical properties, hydrophobic properties and bactericidal properties. The polymer composite coating material can be applied in the fields of hydrophobic materials, wood anticorrosive and bactericidal materials, photocatalytic materials, bactericidal coating materials, offshore equipment and marine coatings.

### Embodiment 3

This embodiment provides a method of preparing Ag-doped potassium titanate nanofilm material, including the following steps:
The raw materials of metal Ag, Ti and Al are weighed according to the ratio of Ag₁Ti_{24.75}Al_{74.25} (atomic percentage), and melted to obtain an alloy melt with the composition of Ag₁Ti_{24.75}Al_{74.25}; The alloy melt is prepared into an initial alloy in the form of ribbons with a thickness of ~20 µm by
a rapid solidification method using melt spinning with copper roller. The initial alloy is mainly composed of TiAl₃ intermetallic compounds containing solid dissolved Ag.

Under atmospheric pressure, 0.25 g of the above prepared Ag₁Ti_{24.75}Al_{74.25} initial alloy ribbon was added into 50 ml of aqueous KOH solution at a concentration of 15 mol/L and a temperature of 60°C with constant stirring. The Ag₁Ti_{24.75}Al_{74.25} initial alloy ribbon underwent nano-fragmentation through a violent hydrogen generation and Al-removal reaction with the concentrated alkaline solution, and simultaneously underwent shape and compositional reconfiguration to generate solid flocculent products diffusely distributed in the alkaline solution.

The hydrogen generation and Al-removal reaction was completed within 4 min, and the reaction temperature was hold for 2 min to ensure that the reaction was completely finished. Then, the hot alkaline solution containing the solid flocculated products was poured onto five stacked copper meshes with pore sizes of 200 µm, 20 µm, 5 µm, 5 µm, and 5 µm, respectively, at an angle of 45° to the horizontal plane, and the solid flocculated products were retained on the five stacked copper meshes, and the alkaline solution was filtered out while the temperature of the solid products was reduced to below 40°C within 10 s.

The resulting solid flocculated product was further cleaned and dried at 50°C for 1 h. The Ag-doped potassium titanate nanofilm material with a yield of more than 60% was obtained, with the thickness of a single film ranging from 0.25 nm ~ 2 nm, and the average area of the film being greater than 2000 nm². Here the element Ag was mainly distributed as atoms or atomic clusters in the potassium titanate nanofilm.

### Embodiment 4

The present embodiment provides a method of preparing Ag-doped sodium titanate nanotubes, sodium titanate nanotubes embedded with Ag nanoparticles, Ag-doped titanic acid nanotubes, titanic acid nanotubes embedded with Ag nanoparticles, and TiO₂ nanotubes/rods embedded with Ag nanoparticles, including the following steps:
The metal Ag, Ti and Al raw materials were weighed according to the ratio of Ag_{1.5}Ti_{24.5}Al₇₄ (atomic percent) and melted to obtain an alloy melt with the composition of Ag_{1.5}Ti_{24.5}Al₇₄. The alloy melt was prepared into a ribbon-like initial alloy with a thickness of ~100 µm by a rapid solidification method using melt spinning with copper roller. The initial alloy is mainly composed of TiAl₃ intermetallic compounds containing solid dissolved Ag.

Under atmospheric pressure, 1 g of the above-made Ag_{1.5}Ti_{24.5}Al₇₄ initial alloy ribbon was added into 50 ml of a NaOH aqueous solution at a concentration of 10 mol/L and a temperature of its boiling point (~119°C) with constant stirring. The initial alloy ribbon of Ag_{1.5}Ti_{24.5}Al₇₄ underwent nano-fragmentation through intense hydrogen generation and Al-removal reaction with the concentrated alkaline solution during the reaction, and simultaneously underwent shape and compositional reconfiguration to produce solid flocculent products diffusely distributed in the alkaline solution.

The hydrogen generation and Al-removal reaction is completed within 1 min, and then the hot alkaline solution containing the solid flocculated product is sealed in a PTFE-lined reactor, and the reaction system is subsequently heated to 200°C within 5 min, at which time the pressure in the reactor is higher than atmospheric pressure;
After holding the reaction vessel at the high temperature of 200°C and high pressure for 10 min, the reaction vessel was cooled down to ambient temperature in cold water at 20°C. After the reaction vessel is cooled down to ambient temperature, the pressure inside the vessel is restored to atmospheric pressure, and then the solid material inside the reaction vessel is separated from the solution, cleaned, and dried at 250°C for 10min, i.e., Ag-doped sodium titanate nanotube material is obtained, with the outer diameter of the tube ranging from 3 nm to 10 nm, and the length of the tube being more than 5 times the outer diameter of the tube. Therein, the element Ag is distributed in the sodium titanate nanotubes as atoms or atomic clusters, and the as-prepared Ag-doped sodium titanate nanotubes have a phase transition thermal stability higher than that of the monolithic sodium titanate nanotube matrix.

The above Ag-doped sodium titanate nanotubes were heat-treated at 550°C. for 2 hours, i.e., sodium titanate nanotubes embedded with Ag nanoparticles were obtained, whose outer diameter of the tubes was in the range of 3 nm ~ 10 nm, the length of the tubes was more than 5 times the outer diameter of the tubes, and the Ag nanoparticles had a size in the range of 1.5 nm ~ 5 nm, which were distributed in the sodium titanate nanotubes by means of embedded.

The solid substance after separation from the alkaline solution in the reactor as described above was dispersed in water, and then 0.025 mol/L HCl solution was gradually added to it, so that the pH value of the mixed solution decreased continuously, and the pH value of the mixed solution was finally controlled between 2 and 4. After 15 min, solid-liquid separation, cleaning, and drying at 250°C for 15 min were performed, i.e., Ag-doped titanic acid nanotubes were obtained and the outer diameter of the tube ranges from 3 nm to 10 nm, and the length of the tube is more than 5 times the outer diameter of the tube. Wherein, the Ag element is distributed in the titanic acid nanotubes in the form of atoms or atomic clusters, and the phase transition thermal stability of the obtained Ag-doped titanic acid nanotubes is higher than that of the monolithic titanic acid nanotube matrix.

The above Ag-doped titanic acid nanotubes were heat-treated at 550°C for 2 h to obtain titanic acid nanotubes embedded with Ag nanoparticles. The size range of the obtained Ag nanoparticles was 1.5 nm ~ 5 nm, which were distributed in the titanic acid nanotubes by means of embedded growth; the outer diameter of the obtained titanic acid nanotubes was 3 nm ~ 10 nm, and the length of the tubes was more than 5 times the outer diameter of the tubes.

The above Ag-doped titanic acid nanotubes were heat-treated at 650°C for 2 h to obtain anatase TiO₂ nanotubes embedded with Ag nanoparticles. The Ag nanoparticles have a size range of 1.5 nm ~ 5 nm, which are distributed in anatase TiO₂ nanotubes by means of embedded growth; the anatase TiO₂ nanotubes have an outer diameter of 3 nm ~ 15 nm, and the length of the tubes is more than 5 times the outer diameter of the tubes.

The Ag-doped titanic acid nanotubes were heat-treated at 950°C for 2 h to obtain rutile TiO₂ nanotubes/rods embedded with Ag nanoparticles. The Ag nanoparticles have a size range of 1.5 nm ~ 5 nm, which are distributed in the rutile TiO₂ nanotubes/rods by means of embedded growth; the rutile TiO₂ nanotubes/rods have an outer diameter in the range of 5 nm ~ 20 nm, and the length of the tubes/rods is more than 3 times of the outer diameter of the tubes/rods.

### Embodiment 5

The present embodiment provides a method and application for preparing Ag-Au doped sodium titanate nanofilms, sodium titanate nanofilms containing embedded Ag-Au nanoparticles, Ag-Au doped titanic acid nanofilms, titanic acid nanofilms containing embedded Ag-Au nanoparticles, and nano-TiO₂ sheet powders containing embedded Ag-Au nanoparticles, including the following steps:
The raw materials of metal Ag, Au, Ti and Al were weighed according to the ratio of Ag_{0.8}Au_{0.2}Ti_{24.75}Al_{74.25} (atomic percent), and an alloy melt with the composition of Ag_{0.8}Au_{0.2}Ti_{24.75}Al_{74.25} was obtained by melting. The alloy melt was prepared into a ribbon-like initial alloy with a thickness of ~15 µm by a rapid solidification method using melt spinning with copper roller. The initial alloy is mainly composed of TiAl₃ intermetallic compounds containing solid dissolved Ag and Au.

Under atmospheric pressure, 1 g of the as-prepared Ag_{0.8}Au_{0.2}Ti_{24.75}Al_{74.25} initial alloy ribbon was added to 50 ml of a NaOH aqueous solution with a concentration of 10 mol/L and a temperature range of 105°C ~ 119°C (boiling temperature of alkaline solution) under continuous stirring The Ag_{0.8}Au_{0.2}Ti_{24.75}Al_{74.25} initial alloy ribbon underwent nano-fragmentation through a violent hydrogen generation and Al-removal reaction with the concentrated alkaline solution, and simultaneously generated solid flocculent products diffusely distributed in the alkaline solution through shape and composition reconfiguration.

The hydrogen generation and Al-removal reaction was finished within 10 s, and the reaction temperature was hold for 2 min to ensure the complete completion of the reaction, and then 450 ml of room-temperature water was rapidly poured into the reaction system under stirring, and the concentration of alkali in the solution was reduced to 1 mol/L within 2 s, and the temperature was reduced to below 45°C.

The solid flocculent product was separated from the solution, cleaned, and dried at 250°C for 10 min, i.e., Ag-Au-doped sodium titanate nanofilm material was obtained, with the thickness of a single film of about 0.25 nm ~ 2 nm, and the average area of the film was larger than 2000 nm². Here the elements of Ag, Au were mainly distributed in the sodium titanate nanofilm in the form of atoms or atomic clusters; as the pinning effect of the Ag and Au elements, the thermal stability of the sodium titanate nanofilm matrix is greatly improved.

The above Ag-Au-doped sodium titanate nanofilm was heat-treated at 600°C for 0.1 hour, i.e., sodium titanate nanofilm material containing embedded Ag-Au nanoparticles was obtained, with the thickness of a single film in the range of about 0.5 nm ~ 3 nm, the average area of the film being greater than 1200 nm², and the size of Ag-Au nanoparticles in the range of 1.5 nm ~ 5 nm, which were distributed in the nanofilm by means of embedded growth.

The solid flocculent material after separation from the alkaline solution as described above was dispersed in water, and then 0.025 mol/L HCl solution was gradually added therein, so that the pH value of the mixed solution was continuously decreased, and the pH value of the mixed solution was finally controlled between 2 and 5. After 4 h, the separation of the solid-liquid mixture, washing and drying at 250°C for 10 min were carried out, i.e., Ag-Au doped titanic acid nanofilm was obtained, and a single thin film with a thickness of about 0.25 nm ~ 2 nm, and the average area of the film was greater than 2000 nm². Here the elements of Ag and Au were mainly distributed in the titanic acid nanofilm as atoms or atomic clusters; the thermal stability of the titanic acid nanofilm matrix was greatly improved due to the pining effect of the elements of Ag and Au.

The above Ag-Au doped titanic acid nanofilm was heat treated at 550°C for 2 hours, i.e., titanic acid nanofilm material containing embedded Ag-Au nanoparticles was obtained, and the thickness of the single film was about 0.5 nm ~ 3 nm, and the average area of the film was more than 1500 nm², and the size of the Ag-Au nanoparticles was in the range of 1.5 nm ~ 5 nm, which were distributed in the titanic acid nanofilm by means of embedded growth.

The above Ag-Au-doped titanic acid nanofilm was heat-treated at 650°C for 2 hours to obtain anatase-type nano-TiO₂ sheet powder containing embedded Ag-Au nanoparticles. The anatase-type nano-TiO₂ sheet has a thickness ranging from 1 nm to 10 nm, and an average area of more than 500 nm², and the Ag-Au nanoparticles have a size of 1.5 nm to 5 nm, which are distributed in the anatase-type nano-TiO₂ sheet by means of embedded growth.

The above Ag-Au-doped titanic acid nanofilm was heat-treated at 950°C for 2 hours to obtain a rutile-type TiO₂ nanosheet powder containing embedded Ag-Au nanoparticles. The rutile-type nano-TiO₂ sheet has a thickness ranging from 2 nm to 20 nm, and an average area of more than 400 nm², and the Ag-Au nanoparticles have a size ranging from 1.5 nm to 5 nm, which are distributed in the rutile-type nano-TiO₂ sheet by means of embedded growth.

The Ag-Au doped titanic acid nanofilm material was mixed with polyaniline to prepare a composite coating with Ag-Au doped nano-titanic acid and polyaniline. In this coating, Ag and Au elements are dispersed in the titanic acid nanofilm matrix in the form of atoms or atomic clusters, and the titanic acid nanofilm is dispersed in the polyaniline, which can maximize the utilization of the properties of Ag and Au elements and titanic acid films. The material can be applied in fields including hydrophobic materials, photocatalytic materials, bactericidal coating materials, coatings for offshore equipment and ships.

### Embodiment 6

This embodiment provides a method of preparing Ag-Au-Pd doped sodium titanate nanotubes, sodium titanate nanotubes containing embedded Ag-Au-Pd nanoparticles, Ag-Au-Pd doped titanic acid nanotubes, titanic acid nanotubes containing embedded Ag-Au-Pd nanoparticles, and TiO₂ nanotubes/rods containing embedded Ag-Au-Pd nanoparticles, including the steps of:
The raw materials of metal Ag, Au, Pd, Ti and Zn were weighed according to the ratio of Ag_{0.8}Au_{0.1}Pd_{0.1}Ti_{24.75}Zn_{74.25} (atomic percentage), and the alloy melt with the composition of Ag_{0.8}Au_{0.1}Pd_{0.1}Ti_{24.75}Zn_{74.25} was obtained by melting. The alloy melt was solidified into an ingot, and then crushed into a fine alloy powder with a particle size of no more than 100 µm, which mainly consisted of TiZn₃ intermetallic compounds containing solid dissolved Ag, Au and Pd;

Under atmospheric pressure, 1 g of the as-prepared Ag_{0.8}Au_{0.1}Pd_{0.1}Ti_{24.75}Zn_{74.25} initial alloy powder was added into 50 ml of a NaOH aqueous solution with a concentration of 15 mol/L and a temperature range of 105°C ~ 115°C with constant stirring. The Ag_{0.8}Au_{0.1}Pd_{0.1}Ti_{24.75}Zn_{74.25} initial alloy powder reacted with the concentrated alkaline solution underwent nano-fragmentation through a violent hydrogen generation and Zn-removal reaction with the concentrated alkaline solution, and simultaneously generated solid flocculent products diffusely distributed in the alkaline solution through shape and composition reconfiguration (the solid flocculent product was subsequently separated and dried to obtain the Ag-Au-Pd doped sodium titanate nanofilm material).

The hydrogen generation and Zn-removal reaction was completed within 1 min, and then the hot alkaline solution containing the solid flocculent product described above was sealed in a reactor lined with PTFE, and the reaction system was subsequently heated to 250°C within 10 min, at which time the pressure in the reactor was higher than atmospheric pressure;
After holding at 250°C under high pressure for 10 min, the reactor was placed in cold water for rapid cooling. After the reaction vessel was cooled down to room temperature, the pressure in the vessel was restored to normal pressure, and then the solid material in the reaction vessel was separated from the solution, cleaned, and dried at 250°C for 10 min, the Ag-Au-Pd-doped sodium titanate nanotubes were obtained. The outer diameter of the Ag-Au-Pd-doped sodium titanate nanotubes was in the range of 3 nm ~ 12 nm, and the length of which was more than 5 times the outer diameter of the tube. Here the elements Ag, Au, and Pd are distributed in the sodium titanate nanotubes in the form of atoms or atomic clusters, and the as-prepared Ag-Au-Pd-doped sodium titanate nanotubes have a phase transition thermal stability higher than that of the monolithic sodium titanate nanotube matrix.

The Ag-Au-Pd-doped sodium titanate nanotubes as described above are heat-treated at 550°C for 1h to obtain sodium titanate nanotubes containing embedded Ag-Au-Pd nanoparticles, the outer diameter of which is in the range of 3 nm ~ 12 nm, and the length of which is more than 5 times the outer diameter of the tubes. The size of the embedded Ag-Au-Pd nanoparticles is 1.5 nm ~ 5 nm, the outer diameter of the sodium titanate nanotube ranges from 3 nm ~ 12 nm, and the embedded Ag-Au-Pd nanoparticles are distributed in the sodium titanate nanotube by means of embeddedness.

The above solid substance after separation from the alkaline solution was dispersed in water, and then 0.025 mol/L HCl solution was gradually added to it, so that the pH value of the mixed solution decreased continuously, and the pH value of the mixed solution was finally controlled between 2 ~ 4. After 10 min, separation of the solid-liquid mixture, washing and drying at 250°C for 10 min were carried out, i.e., The Ag-Au-Pd-doped titanic acid nanotubes was obtained; wherein the outer diameter of the tube ranges from 3 nm ~ 12 nm, and the length of the tube is more than 5 times the outer diameter of the tube. Here the elements of Ag, Au and Pd are distributed in the titanic acid nanotubes as atoms or atomic clusters, and the phase transition thermal stability of the obtained the Ag-Au-Pd-doped titanic acid nanotubes is higher than that of the monolithic titanic acid nanotube matrix.

The Ag-Au-Pd-doped titanic acid nanotubes as described above were heat-treated at 550°C for 1.5 h to obtain titanic acid nanotubes containing embedded Ag-Au-Pd nanoparticles. The size of the as-prepared embedded Ag-Au-Pd nanoparticles is 1.5 nm ~ 5 nm, which is distributed in the titanic acid nanotubes by means of embeddedness, and the outer diameter of the as-prepared titanic acid nanotube matrix is 3 nm ~ 12 nm, and the length of the tubes is more than 5 times the outer diameter of the tubes.

The Ag-Au-Pd-doped titanic acid nanotubes as described above were heat-treated at 650°C for 2 h to obtain anatase-type TiO₂ nanotubes containing embedded Ag-Au-Pd nanoparticles. The Ag-Au-Pd nanoparticles have a size of 1.5 nm ~ 5 nm, which are distributed in the anatase-type TiO₂ nanotubes by means of embeddedness, and the anatase-type TiO₂ nanotubes have an outer diameter of 3 nm ~ 15 nm, and the length of the tubes is more than 5 times greater than the outer diameter of the tubes.

The Ag-Au-Pd-doped titanic acid nanotubes as described above were heat-treated at 950°C for 2 h to obtain rutile-type TiO₂ nanotubes/rods containing embedded Ag-Au-Pd nanoparticles. The size of the obtained embedded Ag-Au-Pd nanoparticles is 1.5 nm ~ 5 nm, which are distributed in the rutile-type TiO₂ nanotubes/rods by means of embeddedness, and the outer diameter of the rutile-type TiO₂ nanotubes/rods is 3 nm ~ 20 nm and the length of the tubes/rods is greater than more than 3 times of the outer diameter of the tubes/rods.

### Embodiment 7

This embodiment provides a method of preparing Ag-doped sodium (potassium) titanate nanofilm material, sodium (potassium) titanate nanofilm material embedded with Ag nanoparticles, Ag-doped titanic acid nanofilm material, titanic acid nanofilm material embedded with Ag nanoparticles, and TiO₂ sheet powder embedded with Ag nanoparticles, including the following steps:
The raw materials of metal Ag, Ti and Al were weighed according to the ratio of Ag₁Ti₃₉Al₆₀ (atomic percentage), and melt to obtain an alloy melt with a composition of Ag₁Ti₃₉Al₆₀. The alloy melt is solidified into an ingot and then crushed to an initial alloy powder with a particle size of no more than 1 mm, which mainly consists of TiAl₂ intermetallic compound containing solid dissolved Ag and TiAl intermetallic compound containing solid dissolved Ag.

A 15 mol/L KOH solution and a 15 mol/L NaOH solution were prepared respectively, and the two solutions were mixed 1: 1 by volume to obtain a mixed KOH and NaOH solution with an OH⁻ concentration of 15 mol/L.

Under atmospheric pressure, 1 g of the above-produced Ag₁Ti₃₉Al₆₀ initial alloy powder was added to 50 ml of a mixed aqueous solution of KOH and NaOH with a concentration of 15 mol/L and a temperature range of 105°C ~ 115°C with constant stirring. the Ag₁Ti₃₉Al₆₀ initial alloy powder underwent nano-fragmentation through a violent hydrogen generation and Al-removal reaction with the concentrated alkaline solution, and simultaneously generated solid flocculent products diffusely distributed in the alkaline solution through shape and composition reconfiguration.

The hydrogen generation and Al-removal reaction was finished in close to 8 min, and the reaction temperature was hold for 2 min to ensure the complete completion of the reaction, and then, 700 ml of room-temperature water was rapidly poured into the reaction system under stirring, and the concentration of alkali in the solution was reduced to less than 1 mol/L within 2 s, and the temperature was reduced to less than 45°C.

The above solid flocculent product was separated from the solution, cleaned, and dried at 250°C for 10 min, i.e., the Ag-doped sodium (potassium) titanate nanofilm material was obtained, with a thickness of a single film of about 0.25 nm ~ 2 nm, and an average area of a single film of more than 2000 nm². Wherein the Ag element was mainly distributed in the sodium (potassium) titanate nanofilm in the form of atoms or atomic clusters. Due to the pinning effect of Ag elements, the thermal stability of the sodium (potassium) titanate nanofilm matrix was greatly improved.

The above Ag-doped sodium (potassium) titanate nanofilms were heat-treated at 550°C for 2 hours, i.e., a sodium (potassium) titanate nanoparticle film embedded with Ag nanoparticles was obtained, with the thickness of a single film in the range of about 0.5 nm ~ 3 nm, with the average area of the film being greater than 1000 nm², and the size of the embedded Ag nanoparticles in the range of 1.5 nm ~ 5 nm;
The solid flocculent material after separation from the alkaline solution as described above was dispersed in water, and 0.025 mol/L HCl solution was gradually added therein under stirring, so that the pH value of the mixed solution decreased continuously, and the pH value of the mixed solution was finally controlled between 2 and 5. After 5 min, it was separated, cleaned, and dried at 250°C for 10 min, i.e., the Ag-doped titanic acid nanofilm was obtained, with a thickness of a single film in the range of about 0.25 nm ~ 2 nm, and an average area of a single film larger than 2000 nm². Here the Ag elements were mainly distributed in the titanic acid nanofilm in the form of atoms or atomic clusters; the thermal stability of the titanic acid nanofilm matrix was greatly improved due to the pinning effect of Ag elements.

The above Ag-doped titanic acid nanofilm was heat-treated at 550°C for 1.5 hours to obtain a titanic acid nanofilm material embedded with Ag nanoparticles, with a thickness of a single film of about 0.5 nm ~ 3 nm, an average area of the film of more than 1000 nm², and a size range of the embedded Ag nanoparticles of 1.5 nm ~ 5 nm;
The above Ag-doped titanic acid nanofilm was heat-treated at 650°C for 2 hours to obtain anatase TiO₂ nanosheets embedded with Ag nanoparticles. The anatase TiO₂ nanosheets have a thickness ranging from 1 nm to 15 nm, an average area of more than 400 nm², and the Ag nanoparticles in situ embedded in the anatase TiO₂ nanosheets have a size ranging from 1.5 nm to 5 nm.

The above Ag-doped titanic acid nanofilm was heat-treated at 950°C for 2 hours, i.e., the rutile TiO₂ sheet powder embedded with Ag nanoparticles was obtained; the thickness of the rutile TiO₂ sheet was in the range of 2 nm ~ 20 nm, with an average area of more than 300 nm², and the size of the Ag nanoparticles in situ embedded in the rutile TiO₂ sheet was in the range of 1.5 nm ~ 5 nm.

### Embodiment 8

This embodiment provides a method of preparing Ag-doped sodium (lithium) titanate nanotubes, Ag-doped titanic acid nanotubes, titanic acid nanotubes embedded with Ag nanoparticles, and TiO₂ nanotubes embedded with Ag nanoparticles, including the following steps:
The raw materials of metal Ag, Ti and Al raw materials were weighed according to the ratio of Ag₃Ti₂₇Al₇₀ (atomic percentage), and melt to obtain an alloy melt with the composition of Ag₃Ti₂₇Al₇₀, The alloy melt was prepared into an initial alloy ribbon with a thickness of ~20 µm by a rapid solidification method using melt spinning with copper roller. The initial alloy is mainly composed of TiAl₃ intermetallic compound containing solid dissolved Ag and TiAl₂ intermetallic compound containing solid dissolved Ag.

A LiOH solution of 6 mol/L and a NaOH solution of 14 mol/L were prepared respectively, and the two solutions were mixed 1: 1 by volume to obtain a mixed solution of LiOH and NaOH with OH⁻ concentration of 10 mol/L.

Under atmospheric pressure, 1 g of the above-produced initial alloy ribbon was added to 50 ml of the above mixed solution in the temperature range of *T_{f solution}* -5°C to *T_{f solution}* with constant stirring. The Ag₃Ti₂₇Al₇₀ initial alloy ribbon underwent nano-fragmentation through intense hydrogen generation and Al-removal reaction during the reaction with the concentrated alkaline solution, and was simultaneously reconfigured in shape and composition to generate a solid-state flocculent product that was distributed in alkaline solution.

The hydrogen generation and Al-removal reaction was completed within 20 s. Then, the hot mixed alkaline solution containing the solid flocculent product as described above was sealed in a reactor lined with PTFE, and the reaction system was subsequently heated to 200°C within 5 min, at which time the pressure in the reactor was higher than atmospheric pressure;
After holding at 200°C for 30 min, the reactor was placed in cold water to cool down rapidly. After the reaction vessel is cooled down to room temperature, the pressure in the vessel is restored to atmospheric pressure, and then the solid material in the reaction vessel is separated from the solution, cleaned, and dried at 280°C for 10 min, i.e., the Ag-doped sodium (lithium) titanate nanotube material is obtained, with an outer diameter of the tube ranging from 3 nm to 10 nm, and a length of the tube more than 5 times greater than the outer diameter of the tube. Therein, the element Ag is distributed in the sodium (lithium) titanate nanotubes in the form of atoms or atomic clusters, and the as-prepared Ag-doped sodium (lithium) titanate nanotubes have a higher phase transition thermal stability than that of the monolithic sodium (lithium) titanate nanotube matrix.

The above solid substance after separation from the alkaline solution was dispersed in water, and then 0.025 mol/L HCl solution was gradually added therein, so that the pH value of the mixed solution decreased continuously, and the pH value of the mixed solution was finally controlled between 2 ~ 4. After 10 min, solid-liquid separation, cleaning, and drying at 250°C for 10 min were performed, i.e., the Ag-doped titanic acid nanotubes were obtained. The outer diameter of the tube ranges from 3 nm to 10 nm, and the length of the tube is more than 5 times the outer diameter of the tube. The Ag element is distributed in the titanic acid nanotubes as atoms or atomic clusters, and the phase transition thermal stability of the as-prepared Ag-doped titanic acid nanotubes is higher than that of the nomolithic titanic acid nanotube matrix.

The above Ag-doped titanic acid nanotubes were heat-treated at 550°C for 1.5 h, i.e., the titanic acid nanotubes embedded with Ag nanoparticles were obtained; the size of the as-prepared embedded Ag nanoparticles was 1.5 nm~5 nm, which were distributed in the titanic acid nanotubes by means of embeddedness, and the outer diameter of the titanic acid nanotubes was 3 nm ~ 10 nm, and the length of the tubes was more than 5 times greater than the outer diameter of the tubes.

The above Ag-doped titanic acid nanotubes were heat-treated at 650°C for 3 h, i.e., the anatase TiO₂ nanotubes embedded with Ag nanoparticles were obtained; the size of the obtained embedded Ag nanoparticles was 1.5 nm ~ 5 nm, which was distributed in anatase TiO₂ nanotubes by means of embeddedness, and the outer diameter of the anatase TiO₂ nanotubes was 3 nm ~ 15 nm, and the length of the tubes was more than 5 times the outer diameter of the tubes.

### Embodiment 9

The present embodiment provides a preparation method of Ag-doped titanate nanofilm material, and Ag-doped titanic acid material, including the following steps:
The raw materials of metal Ag, Ti and Al were weighed according to the ratio of Ag₁Ti_{24.75}Al_{74.25} (atomic percentage), and melt to obtain an alloy melt with the composition of Ag₁Ti_{24.75}Al_{74.25}. The alloy melt was prepared into an initial alloy in the form of ribbons with a thickness of ~20 µm by a rapid solidification method using melt spinning with copper roller. The initial alloy ribbons mainly consists of TiAl₃ intermetallic compound containing solid dissolved Ag.

Under atmospheric pressure, 1 g of the as-prepared Ag₁Ti_{24.75}Al_{74.25} initial alloy ribbon was added into 50 ml of aqueous NaOH solution at a concentration of 10 mol/L and a temperature of 105°C ~ 112°C with constant stirring. The Ag₁Ti_{24.75}Al_{74.25} initial alloy ribbon underwent nano-fragmentation through a violent hydrogen generation and Al-removal reaction with the concentrated alkaline solution, and simultaneously underwent shape and composition reconfiguration to generate a solid flocculent product diffusely distributed in the alkaline solution.

The hydrogen generation and Al-removal reaction was completed within 15 s. After holding the temperature for 2 hours to confirm the end of the hydrogen generation and Al-removal reaction, the corresponding products could still be obtained by prolonging the holding time; the volume of the solution was maintained at 50 ml by replenishing the evaporated water during the holding time.

After 2 h, the hot concentrated alkaline solution containing the solid flocculated product was poured onto a four-layer copper mesh with pore sizes of 200 µm, 20 µm, 5 µm, and 5 µm, respectively, at an angle of 45° to the horizontal plane, the solid flocculated product was retained on the four-layer copper mesh, and the alkaline solution was filtered off, while the temperature of the solid flocculated product was reduced to less than 45°C in 20 s. The as-prepared solid flocculent product was further cleaned and dried at 250°C for 10 min to obtain Ag-doped sodium titanate nanofilm material, with the thickness of a single film ranging from 0.25 nm to 2 nm, and the average area of the film being larger than 2000 nm². Here the Ag element was mainly distributed as atoms or atomic clusters in the sodium titanate nanofilm matrix.

The above Ag-doped sodium titanate nanofilm was dispersed in water, and 0.025 mol/L HCl solution was gradually added to it under stirring condition, so that the pH value of the mixed solution was continuously decreased, and the pH value of the mixed solution was finally controlled between 2 and 5. After 30 min, it was separated, cleaned, and dried at 250°C for 10 min, and then the Ag-doped titanic acid nanofilm was obtained. The thickness of a single film is about 0.25 nm ~ 2 nm, and the average area of a single film is larger than 2000 nm². Its morphology is shown in the low-magnification and high-magnification images in Fig. 8. It indicates that the target products of the Ag-doped titanic acid nanofilms can still be obtained by continuing the holding time for 2 h after the end of the hydrogen generation and Al-removal reaction, combined with the subsequent acid solution reaction. Here the Ag element in the as-prepared products was mainly distributed in the titanic acid nanofilm matrix as atoms or atomic clusters; due to the pinning effect of the Ag element, the thermal stability of the titanic acid nanofilm matrix was greatly improved.

### Embodiment 10

This embodiment provides a method of preparing Ag-doped titanate nanotubes, Ag-doped titanic acid nanotubes, titanic acid nanotubes embedded with Ag nanoparticles, and TiO₂ nanotubes/rods embedded with Ag nanoparticles, including the following steps:
The raw materials of metal Ag, Ti and Al were weighed according to the ratio of Ag₁Ti_{24.75}Al_{74.25} (atomic percent) and melt to obtain an alloy melt with the composition of Ag₁Ti_{24.75}Al_{74.25}. The alloy melt is solidified into an ingot, and then the ingot is crushed into an initial alloy powder with a particle size of not more than 50 µm, which mainly consists of TiAl₃ intermetallic compounds containing solid dissolved Ag.

At room temperature and pressure, 0.5 g of the above-made initial alloy powder and 50 mL of NaOH aqueous solution with a concentration of 10 mol/L were placed in a sealed reactor lined with PTFE; then the temperature of the sealed reactor and the initial alloy and the NaOH aqueous solution inside it was immediately raised to 250°C within 10 min, and then hold for 25 min;

After 25 min, the reactor was placed in cold water to rapidly cool down. After the reaction vessel was cooled down to room temperature, the pressure inside the vessel was restored to normal pressure, and then the solid material inside the reaction vessel was separated from the solution, cleaned, and dried at 250°C for 10 min, i.e., the Ag-doped sodium titanate nanotubes were obtained, and the outer diameters of the tubes were 3 nm ~ 12 nm, and the length of the tube is more than 5 times the outer diameter of the tube. The Ag element is distributed in the sodium titanate nanotubes as atoms or atomic clusters, and the phase transition thermal stability of the as-prepared Ag-doped sodium titanate nanotubes is higher than that of the monolithic sodium titanate nanotube matrix.

The above solid substance after separation from the alkaline solution was dispersed in water, and then 0.025 mol/L HCl solution was gradually added therein, so that the pH value of the mixed solution decreased continuously, and the pH value of the mixed solution was finally controlled between 2 and 4. After 10 min, solid-liquid separation, cleaning, and drying at 250°C for 10 min were performed, i.e., the Ag-doped titanic acid nanotubes were obtained. The outer diameter of the tube ranges from 3 nm to 12 nm, and the length of the tube is more than 5 times the outer diameter of the tube. Here the Ag element is distributed in the titanic acid nanotubes as atoms or atomic clusters, and the phase transition thermal stability of the as-prepared Ag-doped titanic acid nanotubes is higher than that of the monolithic titanic acid nanotube matrix.

The above Ag-doped titanic acid nanotubes were heat-treated at 550°C for 2 h to obtain titanic acid nanotubes embedded with Ag nanoparticles. The size of the embedded Ag nanoparticles is 1.5 nm ~ 5 nm, which is distributed in the titanic acid nanotubes by means of embeddedness, and the outer diameter of the titanic acid nanotubes is 3 nm ~ 12 nm, and the length of the tubes is more than 5 times the outer diameter of the tubes.

The above Ag-doped titanic acid nanotubes were heat-treated at 650°C for 3 h, i.e., the anatase TiO₂ nanotubes embedded with Ag nanoparticles were obtained; the size of the embedded Ag nanoparticles was 1.5 nm ~ 5 nm, and the embedded Ag nanoparticles was distributed in anatase TiO₂ nanotubes by means of embeddedness, and the outer diameter of the anatase TiO₂ nanotubes was 3 nm ~ 15 nm and the length of the tubes was more than 5 times the outer diameter of the tubes.

The above Ag-doped titanic acid nanotubes were heat-treated at 950°C for 2 h, i.e., the rutile TiO₂ nanotubes/rods embedded with Ag nanoparticles were obtained; the size of the embedded Ag nanoparticles was 1.5 nm ~ 5 nm, and they were distributed in rutile TiO₂ nanotubes/rods by means of embeddedness, and the outer diameters of the rutile TiO₂ nanotubes/rods were 4 nm ~ 20 nm. The length of the rutile TiO₂ nanotubes/rods is more than 3 times of the outer diameter of the tubes/rods.

### Embodiment 11

The present embodiment provides a preparing method of an Ag-doped sodium titanate nanofilm material, a sodium titanate nanofilm material embedded with Ag nanoparticles, an Ag-doped titanic acid nanofilm material, a titanic acid nanofilm material embedded with Ag nanoparticles, and a TiO₂ sheet powder embedded with Ag nanoparticles, and the use thereof, including the following steps:
The raw materials of metal Ag, Ti and Zn are weighed according to the ratio of Ag_{0.5}Ti_{24.5}Zn₇₅ (atomic percent), and an alloy melt with the composition of Ag_{0.5}Ti_{24.5}Zn₇₅ is obtained by melting. The alloy melt was prepared into a ribbon-like initial alloy with a thickness of ~20 µm by a rapid solidification method using melt spinning with copper roller. The initial alloy is mainly composed of TiZn₃ intermetallic compound containing solid dissolved Ag.

Under atmospheric pressure, 1 g of the above-made Ag_{0.5}Ti_{24.5}Zn₇₅ initial alloy ribbon was added into 50 ml of aqueous NaOH solution at a concentration of 15 mol/L and a temperature of its boiling point (about 140°C) with constant stirring. The Ag_{0.5}Ti_{24.5}Zn₇₅ initial alloy ribbon underwent nano-fragmentation through a violent hydrogen generation and Zn-removal reaction with the concentrated alkaline solution, and simultaneously underwent shape and compositional reconfiguration to generate a solid flocculent product diffusely distributed in the alkaline solution.

The hydrogen generation and Zn-removal reaction was completed within 15 s, and the holding time was continued for 2 min to ensure the complete completion of the reaction, and then 700 ml of room-temperature water was rapidly poured into the reaction system at one time under stirring, and the alkali concentration in the solution was lowered to less than 1 mol/L and the temperature was lowered to below 45°C in 2 s.

The solid flocculent product was separated from the alkaline solution, cleaned, and dried at 250°C for 10 min, i.e., the Ag-doped sodium titanate nanofilm material was obtained, and the thickness of its single film was about 0.25 nm ~ 2 nm, and the average area of the film was larger than 2000 nm². Here the Ag elements were mainly distributed in the sodium titanate nanofilm in the form of atoms or atomic clusters, and the thermal stability of the sodium titanate nanofilm matrix is greatly improved due to the pinning effect of Ag elements.

The Ag-doped sodium titanate nanofilm material was heat-treated at 550°C for 1 h. The sodium titanate nanofilm material embedded with Ag nanoparticles was obtained, and the thickness of a single film was in the range of about 0.5 nm ~ 3 nm, the average area of the film was greater than 1500 nm², and the size of the Ag nanoparticles was in the range of 1.5 nm ~ 5 nm.

The solid flocculent product after separation from the alkaline solution as described above was dispersed in water, and then 0.025 mol/L HCl solution was gradually added therein, so that the pH value of the mixed solution was continuously decreased, and the pH value of the mixed solution was finally controlled between 2 and 5, and after 20 min, it was separated, cleaned, and dried at 280°C for 10 min, i.e., The the Ag doped titanic acid nanofilm was obtained. The thin film material has a thickness of a single film of about 0.25 nm ~ 2 nm, and the average area of the film is greater than 2000 nm². wherein the Ag element is mainly distributed in the titanic acid nanofilm in the form of atoms or atomic clusters, and the thermal stability of the titanic acid nanofilm film matrix has been greatly improved due to the pinning effect of the Ag element.

The Ag-doped titanic acid nanofilm material was heat-treated at 500°C for 5 hours to obtain a titanic acid nanofilm material embedded with Ag nanoparticles, with a thickness of a single film of about 0.5 nm ~ 3 nm, an average area of the film of more than 1500 nm², and a size range of the embedded Ag nanoparticles of 1.5 nm ~ 5 nm.

The above Ag-doped titanic acid nanofilm material was heat-treated at 650°C for 2 hours to obtain an anatase TiO₂ nanosheet powder embedded with Ag nanoparticles. The thickness of the anatase TiO₂ nanosheets ranges from 1 nm to 10 nm, the average area thereof is greater than 500 nm², and the size of the Ag nanoparticles in situ embedded in the anatase TiO₂ nanosheets is 1.5 nm ~ 5 nm.

The rutile TiO₂ nanosheet powder embedded with Ag nanoparticles was obtained by heat treating the above Ag-doped titania acid nanofilm material at 950°C for 2 hours. The thickness of the rutile TiO₂ nanosheet ranges from 2 nm to 20 nm, its average area is greater than 300 nm², and the size of the Ag nanoparticles in situ embedded in the rutile TiO₂ nanosheet is 1.5 nm ~ 5 nm.

The above Ag-doped titanic acid nanofilm material was mixed with polyvinylidene fluoride (PVDF) to prepare a composite coating containing Ag-doped titanic acid nanofilm and PVDF. In this coating, Ag element is dispersed in the titanic acid nanofilm in the form of atoms or atomic clusters, and the the titanic acid nanofilm is dispersed in PVDF, which can maximize the utilization of the properties of Ag element and titanic acid. The material can be applied in fields including hydrophobic materials, photocatalytic materials, bactericidal coating materials, coatings for offshore equipment and ships.

### Embodiment 12

The present embodiment provides a method for preparing Ag-doped sodium titanate nanotubes, Ag-doped titanic acid nanotubes, titanic acid nanotubes embedded with Ag nanoparticles, and TiO₂ nanotubes/rods embedded with Ag nanoparticles, including the following steps:
At room temperature and pressure, in a sealed reactor lined with polytetrafluoroethylene, the Ag-doped titanate nanofilm material is placed with 50 mL of 10 mol/L aqueous NaOH in a volume ratio of 1:50; then the temperature of the sealed reactor containing the Ag-doped titanate nanofilm material and the aqueous NaOH solution is elevated to 250°C within 10 min, and then held for 10 min;
After 10 min, the reactor was placed in cold water to rapidly cool down. After the reaction vessel was cooled down to room temperature, the pressure inside the vessel was restored to normal pressure, and then the solid material inside the reaction vessel was separated from the solution, cleaned, and dried at 250°C for 10min, i.e., the Ag-doped sodium titanate nanotubes were obtained, and the outer diameters of the tubes were 3 nm ~ 12 nm.

The length of the tube is more than 5 times the outer diameter of the tube. Therein, the Ag element is distributed in the sodium titanate nanotubes in the form of atoms or atomic clusters, and the phase transition thermal stability of the as-prepared Ag-doped sodium titanate nanotubes is higher than that of the monolithic sodium titanate nanotube matrix.

The solid substance after separation from the alkaline solution as described above was dispersed in water, and then 0.025 mol/L HCl solution was gradually added thereto, so that the pH value of the mixed solution was continuously decreased, and the pH value of the mixed solution was finally controlled between 2 ~ 4. After 60 min, the solid-liquid separation was carried out, followed by being cleaned and dried for 10 min at 250°C, i.e., the Ag-doped titanic acid nanotubes were obtained. The outer diameter of the tubes ranges from 3 nm to 12 nm, and the length of the tube is more than 5 times the outer diameter of the tube. Here the Ag element is distributed in the titanic acid nanotubes as atoms or atomic clusters, and the phase transition thermal stability of the as-prepared Ag-doped titanic acid nanotubes is higher than that of the monolithic titanic acid nanotube matrix.

The above Ag-doped titanic acid nanotubes were heat-treated at 550°C for 2 h to obtain titanic acid nanotubes embedded with Ag nanoparticles. The size of the embedded Ag nanoparticles is 1.5 nm ~ 5 nm, which is distributed in the titanic acid nanotubes by means of embeddedness, and the outer diameter of the titanic acid nanotubes is 3 nm ~ 12 nm, and the length of the tubes is more than 5 times the outer diameter of the tubes.

The above Ag-doped titanic acid nanotubes were heat-treated at 650°C for 3h, i.e., the anatase TiO₂ nanotubes embedded with Ag nanoparticles were obtained; the size of the embedded Ag nanoparticles was 1.5 nm ~ 5 nm, which was distributed in anatase TiO₂ nanotubes by means of embeddedness, and the outer diameter of the anatase TiO₂ nanotubes was 3 nm ~ 15 nm, and the length of the tubes was more than 5 times the outer diameter of the tubes.

The above Ag-doped titanic acid nanotubes were heat-treated at 950°C for 2 h, i.e., the rutile TiO₂ nanotubes/rods embedded with Ag nanoparticles were obtained; the size of the embedded Ag nanoparticles was 1.5 nm ~ 5 nm, and they were distributed in rutile TiO₂ nanotubes/rods by means of embeddedness, and the outer diameters of the rutile TiO₂ nanotubes/rods were 4 nm ~ 20 nm. The length of the rutile TiO₂ nanotubes/rods is more than 3 times of the outer diameter of the tubes/rods.

### Embodiment 13

The present embodiment provides a preparation method of Ag-doped titanate nanofilm material, Ag-doped titanic acid nanofilm material, including the following steps:
The raw materials of metal Ag, Ti and Al were weighed according to the ratio of Ag₁Ti_{24.75}Al_{74.25} (atomic percentage), and melt to obtain an alloy melt with a composition of Ag₁Ti_{24.75}Al_{74.25}. The alloy melt is prepared into an initial alloy in the form of ribbons with a thickness of ~100 µm by a rapid solidification method using melt spinning with copper roller. The initial alloy is mainly composed of TiAl₃ intermetallic compound containing solid dissolved Ag.

Under atmospheric pressure, 0.5 g of the Ag₁Ti_{24.75}Al_{74.75} initial alloy ribbon and 50 ml of NaOH aqueous solution with a concentration of 10 mol/L were placed in a closed container, and the initial alloy ribbon was not in contact with the alkaline solution at the beginning;

The temperature inside the closed container, as well as the temperature of the initial alloy ribbon and the alkaline solution is raised to 150°C, at which time the closed container is in a high-pressure state, and then the Ag₁Ti_{24.75}Al_{74.75} initial alloy ribbon inside the closed container is mixed with the alkaline solution at this temperature, so that a violent hydrogen generation and T-removal reaction occurs. The initial Ag₁Ti_{24.75}Al_{74.75} alloy ribbon was nano-fragmented by the intense hydrogen generation and Al-removal reaction under the high temperature and high pressure, and the solid flocculent product containing Ag was generated by the simultaneous shape and composition reconfiguration.

The hydrogen generation and Al-removal reaction was completed within 30 s. After 30 s, the closed vessel and the reaction system were rapidly cooled down to near room temperature in cooling water, and the pressure in the closed vessel was lowered to atmospheric pressure;
After the temperature of the reaction system was reduced to ambient temperature and pressure, the solid flocculent product was separated from the alkaline solution, cleaned, and dried at 280°C for 10 min, i.e., the Ag-doped sodium titanate nanofilm material was obtained, with the thickness of the single film ranging from 0.25 nm to 5 nm, and the average area of the film being larger than 1000 nm², showing the characteristics of an obvious two-dimensional material. The Ag element is mainly distributed in the sodium titanate nanofilm in the form of atoms or atomic clusters.

The solid flocculent product after separation from the alkaline solution described above was dispersed in water, and then 0.025 mol/L HCl solution was gradually added to it, so that the pH value of the mixed solution was continuously decreased, and the pH value of the mixed solution was finally controlled between 3 and 5. After 5 min, the solid-liquid separation was carried out, and the solid product was cleaned, and dried at 250°C for 15 min, which resulted in the Ag-doped titanic acid nanofilm. and the thickness of its single film was about 0.25 nm ~ 5 nm, and the average area of the film was larger than 1000 nm². wherein the element Ag is mainly distributed as atoms or atomic clusters in the as-prepared titanic acid nanofilm matrix.

### COMPARATIVE EXAMPLE 1

Under atmospheric pressure, 1g of anatase TiO₂ powder with a particle size range of 50 nm ~ 100 nm was added to 50 ml of aqueous NaOH solution with a concentration of 10 mol/L and a temperature of its boiling point temperature (about 119°C) with constant stirring.

After 10 min, 450 ml of room temperature water was rapidly poured into the reaction system under stirring, and the alkali concentration in the solution was reduced to 1 mol/L, and the temperature was reduced to below 40°C.

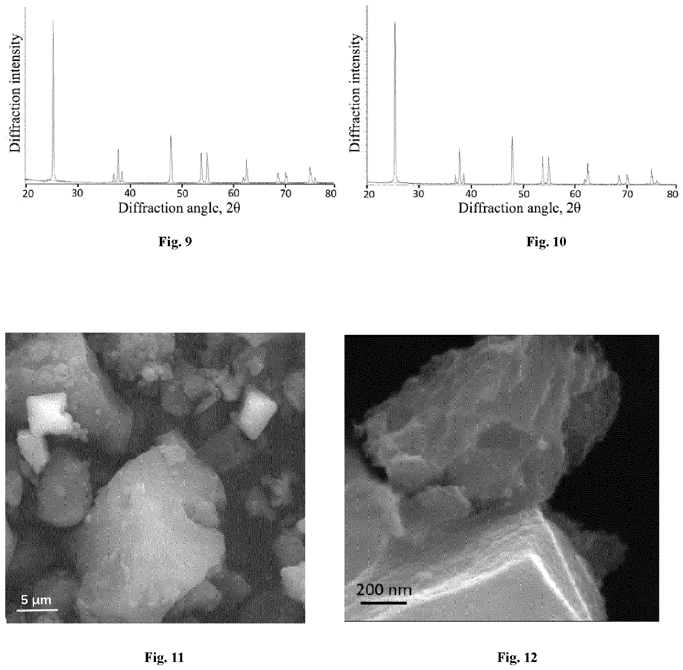

The solid material in the solution was separated from the solution, cleaned and dried, and the XRD pattern of the as-prepared product was measured, as shown in Fig. 9.

The XRD pattern of the anatase TiO₂ powder before the reaction is shown in Fig. 10, it can be seen that after the reaction for 10 min, the anatase TiO₂ almost did not undergo any change. According to the width of the XRD peaks, it concluded that the size of the TiO₂ particles also did not change significantly. This comparative example shows that, when the Ti source is TiO₂ powder, enve on the boiling temperature of the alkaline solution in the atmospheric environment, it is very difficult to break the Ti-O bond of TiO₂ in a short time.

### COMPARATIVE EXAMPLE 2

The raw materials of metal Ag, Ti and Al were weighed according to the ratio of Ag₁Ti_{24.75}Al_{74.25} (atomic percentage), and the alloy melt with the composition of Ag₁Ti_{24.75}Al_{74.25} was obtained by melting; the alloy melt was solidified into an alloy ingot, and then crushed into the initial alloy powder with a particle size of no more than 30 µm. The initial alloy is mainly composed of TiAl₃ intermetallic compound containing solid dissolved Ag.

Under atmospheric pressure, the above initial alloy powder was reacted with 10 mol/L NaOH solution at a temperature of 35°C for 2 h, and the as-prepared products are shown in Figs. 11 and 12. It can be seen that under the reaction conditions, the shape of the original initial alloy powder before and after the reaction was roughly unchanged, and it was still the original crushed and angular powder particles, as shown in Fig. 12, and its microstructure did not show a large number of monolithic two-dimensional thin films, but rather, it showed a nanoporous powder particle morphology with original angular. Therefore, the reaction equilibrium of the initial alloy with the alkaline solution occurring at a lower temperature is completely different from the reaction equilibrium of the present invention occurring near the boiling point temperature of the alkaline solution, and the product morphology is also completely different.

### COMPARATIVE EXAMPLE 3

The raw materials of metal Ti and Al were weighed according to the ratio of Ti₂₅Al₇₅ (atomic percent), and the alloy melt with the composition of Ti₂₅Al₇₅ was obtained by melting; the alloy melt was prepared into the initial alloy in the form of ribbons with a thickness of ~30 µm by a rapid solidification method using melt spinning with copper roller. The initial alloy is mainly consisted of TiAl₃ intermetallic compound.

Under atmospheric pressure, 0.25 g of the as-prepared Ti₂₅Al₇₅ initial alloy ribbon was added into 50 ml of aqueous NaOH solution at a concentration of 10 mol/L and a temperature of its boiling point (~119°C) with constant stirring. The Ti₂₅Al₇₅ initial alloy ribbon underwent nano-fragmentation through intense hydrogen generation and Al-removal reaction in the concentrated alkaline solution, and was simultaneously reconfigured in shape and composition to generate diffusely distributed solid flocculent products in the alkaline solution.

The hydrogen generation and Al-removal reaction was finished within 15 s. The reaction temperature was hold for 2 min to ensure the completion of the reaction, and then 450 ml of room-temperature water was rapidly poured into the reaction system at one time under stirring, and the alkali concentration in the solution was lowered to 1 mol/L within 2 s, and the temperature was lowered to below 45°C.

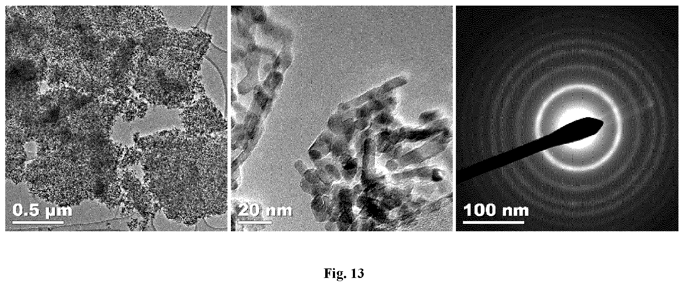

The solid flocculent product after the above separation from the alkaline solution was dispersed in water, and then 0.025 mol/L HCl solution was gradually added to it, so that the pH value of the mixed solution was continuously decreased, and finally the pH value of the mixed solution was controlled between 2~5. After 10 min, the titanic acid nanofilm was obtained. The as-prepared titanic acid nanofilm were solid-liquid separated from the solution and cleaned, and then heat-treated for 2 h at 475°C, the anatase TiO₂ nanosheet were obtained, as shown its TEM morphology and diffraction spectrum in Fig. 13. This comparative example illustrates that the titanic acid nanofilm without doping elements can undergo an obvious phase transition at 475°C, as well as an obvious morphological change from thin film to sheet at the same time.

The technical features of the above examples may be arbitrarily combined. For conciseness, all possible combinations of the technical features of the above embodiments have not been completely described. However, as long as there is no contradiction between the combinations of these technical features, they shall be considered to be within the scope of the present disclosure.

The above examples only express several embodiments of the disclosure, and their descriptions are more specific and detailed, but they cannot be interpreted as a limitation on the scope of the present disclosure. It should be noted that for one of ordinary skill in the art, several variations and improvements may be made without deviating from the concept of the disclosure, which all fall within the scope of protection of the disclosure. Therefore, the scope of protection of the present disclosure shall be subject to the attached claims.

## Claims

1. A method of preparing a titanate nanofilm material doped with E-group elements, comprising the following steps:
step 1, providing an initial alloy comprising T-type elements, Ti and E-group elements; wherein the T-type elements comprise at least one of Al and Zn; and the phase composition of the initial alloy comprises a T-Ti intermetallic compound with solid dissolved E-group elements; wherein the atomic percentage content of Ag in the E-group elements is 50% ~ 100%, and the molar ratio of E-group elements to Ti in the initial alloy is 0 < *C_{E}*/*C_{Ti}* ≤0.25;
step 2, reacting the initial alloy with an alkaline solution at a temperature of *T*₁, during which the reaction interface advances inwardly from the surface of the initial alloy at an average rate of greater than 2 µm/min, and the initial alloy at the reaction interface undergoes nano-fragmentation through a hydrogen generation and T-removal reaction, and simultaneously undergoes shape and compositional reconfiguration to generate solid flocculent products containing E-group elements; wherein *T*₁ ≥ 60 °C;
step 3, the temperature of the solid flocculent product containing E-group elements in the reaction system described in step 2 is lowered from *T*₁ and the solid flocculent product containing E-group elements is collected, i.e., the titanate nanofilm material doped with E-group elements is obtained.

2. A method of preparing a titanate nanofilm material embedded with E nanoparticles, wherein the titanate nanofilm material embedded with E nanoparticles is prepared by heat-treating the product or the titanate nanofilm material doped with E-group elements prepared according to claim 1.

3. A method of preparing a titanic acid nanofilm material doped with E-group elements, wherein the titanic acid nanofilm material doped with E-group elements is obtained by reacting the product or the titanate nanofilm material doped with E-group elements prepared according to claim 1 with an acid solution and then collecting the solid product.

4. A method of preparing a titanic acid nanofilm material embedded with E nanoparticles, wherein the titanic acid nanofilm material embedded with E nanoparticles is prepared by heat-treating the product or the titanic acid nanofilm material doped with E-group elements prepared according to claim 3.

5. A method of preparing a TiO₂ nanosheet powder embedded with E nanoparticles, wherein the TiO₂ nanosheet powder embedded with E nanoparticles is prepared by heat-treating the product or the titanic acid nanofilm material doped with E-group elements prepared according to claim 3, or by heat-treating the product or the titanic acid nanofilm material embedded with E nanoparticles prepared according to claim 4.

6. A method of preparing titanate nanotubes doped with E-group elements, comprising the following steps:
sealing a solid substance with a alkaline solution in a closed vessel, wherein the solid substance is the product or the titanate nanofilm doped with E-group elements prepared according to claim 1, or (and) the product or the titanic acid nanofilm doped with E-group elements prepared according to claim 3, then the solid substance and the alkaline solution in the closed vessel were treated by a high pressure and a high temperature of *T₂* which is higher than that of the *T_{f solution}*; wherein the *T_{f solution}* is the boiling temperature of the alkali solution involved in the reaction at ambient pressure, and *T_{f solution}* < *T₂*; after a certain time of reaction, the temperature of the closed vessel is lowered and the pressure is restored to ambient pressure, and the final solid product is collected, i.e., the titanate nanotubes doped with E-group elements are obtained.

7. A method of preparing titanate nanotubes embedded with E nanoparticles, wherein the titanate nanotubes embedded with E nanoparticles are prepared by heat-treating the final product or the titanate nanotubes doped with E-group elements prepared according to claim 6.

8. A method of preparing titanic acid nanotubes doped with E-group elements, wherein the titanic acid nanotubes doped with E-group elements are obtained by reacting the final product or the titanate nanotubes doped with E-group elements prepared according to claim 6 with an acid solution and collecting the solid product.

9. A method of preparing titanic acid nanotubes embedded with E nanoparticles, wherein the titanic acid nanotubes embedded with E nanoparticles are prepared by heat-treating the product or the titanic acid nanotubes doped with E-group elements prepared according to claim 8.

10. A method of preparing crystalline TiO₂ nanotubes/rods embedded with E nanoparticles, wherein the crystalline TiO₂ nanotubes/rods embedded with E nanoparticles are prepared by heat-treating the product or the titanic acid nanotubes doped with E-group elements prepared according to claim 8, or by heat-treating the product or the titanic acid nanotubes embedded with E nanoparticles prepared according to claim 9.

11. A titanate nanofilm material doped with E-group elements, which is prepared by a method of preparing a titanate nanofilm material doped with E-group elements prepared according to claim 1, characterized as comprising:
the thickness of the titanate nanofilm doped with E-group elements is 0.25 nm ~ 10 nm; the average area of the titanate nanofilm doped with E-group elements is greater than 500 nm²; the molar ratio of the E-group elements to Ti satisfies 0 < *C_{E}*/*C_{Ti}* ≤ 0.25; the atomic percentage content of Ag in the E-group elements is 50% ~ 100%; the E-group elements is mainly distributed in the titanate nanofilm in the form of atoms or atomic clusters; the phase transition thermal stability of the titanate nanofilm doped with the E-group elements is higher than that of the monolithic titanate nanofilm matrix.

12. A titanate nanofilm material embedded with E nanoparticles, which is prepared by a method of preparing a titanate nanofilm material embedded with E nanoparticles prepared according to claim 2, characterized as comprising:
the size of the E nanoparticles is 1.5 nm ~ 10 nm; the E nanoparticles are mainly embedded in the titanate nanofilm; the thickness of the titanate nanofilm with E nanoparticles is 0.3 nm ~ 10 nm; the average area of the titanate nanofilm with E nanoparticles is greater than 400 nm²; the molar ratio of the E-group elements to Ti satisfies 0 < *C_{E}*/*C_{Ti}* ≤ 0.25; the atomic percentage content of Ag in the E-group elements is 50%~100%.

13. A titanic acid nanofilm material doped with E-group elements, which is prepared by a method of preparing a titanic acid nanofilm material doped with E-group elements prepared according to claim 3, characterized as comprising:
the thickness of the titanic acid nanofilm doped with E-group elements is 0.25 nm ~ 10 nm; the average area of the titanic acid nanofilm doped with E-group elements is greater than 500 nm²; the molar ratio of the E-group elements to Ti satisfies 0 < *C_{E}*/*C_{Ti}* ≤ 0.25; the atomic percentage content of Ag in the E-group elements is 50% ~ 100%; and the E-group elements is mainly distributed in the titanic acid nanofilm in the form of atoms or atomic clusters; the phase transition thermal stability of the titanic acid nanofilm doped with the E-group elements is higher than that of the monolithic titanic acid nanofilm matrix.

14. A titanic acid nanofilm material embedded with E nanoparticles, which is prepared by a method of preparing a titanic acid nanofilm material embedded with E nanoparticles prepared according to claim 4, characterized as comprising:
the size of the E nanoparticles is 1.5 nm ~ 10 nm; the E nanoparticles are mainly embedded in the titanic acid nanofilm; the thickness of the titanic acid nanofilm embedded with E nanoparticles is 0.3 nm ~ 10 nm; the average area of the titanic acid nanofilm embedded with E nanoparticles is greater than 400 nm²; and the molar ratio of the E-group elements to Ti satisfies 0 < *C_{E}lC_{Ti}* ≤ 0.25; the atomic percentage content of Ag in the E-group elements is 50% ~ 100%.

15. A TiO₂ nanosheet powder embedded with E nanoparticles, which is prepared by a method of preparing a TiO₂ nanosheet powder embedded with E nanoparticles prepared according to claim 5, characterized as comprising:
the TiO₂ nanosheet embedded with E nanoparticles is in the form of a sheet; the TiO₂ nanosheet embedded with E nanoparticles has a thickness of 1 nm ~ 30 nm; the TiO₂ nanosheet embedded with E nanoparticles has an average area of more than 100 nm²; the E nanoparticles have a size of 1.5 nm ~ 10 nm; the E nanoparticles are mainly embedded in the TiO₂ nanosheets; the molar ratio of the E-group elements to Ti satisfies 0 < *C_{E}*/*C_{Ti}* ≤ 0.25; the atomic percentage content of Ag in the E-group elements is 50% ~ 100%.

16. A titanate nanotube doped with E-group elements, which is prepared by a method of preparing a titanate nanotube doped with E-group elements prepared according to claim 6, characterized as comprising:
the outer diameter of the titanate nanotube doped with E-group elements is 2 nm ~ 20 nm; the molar ratio of the E-group elements to Ti satisfies 0 < *C_{E}*/*C_{Ti}* ≤ 0.25; the atomic percentage content of Ag in the E-group elements is 50% ~ 100%; the E-group elements is mainly distributed in the titanate nanotubes in the form of atoms or atomic clusters; the titanate nanotube doped with E-group elements has a higher phase transition thermal stability than that of the monolithic titanate nanotube matrix.

17. A titanate nanotube embedded with E nanoparticles, which is prepared by a method of preparing a titanate nanotube embedded with E nanoparticles prepared according to claim 7, characterized as comprising:
the size of the E nanoparticles is 1.5 nm ~ 10 nm; the E nanoparticles are mainly embedded in the titanate nanotube; the outer diameter of the titanate nanotube embedded with E nanoparticles is 2 nm ~ 20 nm; the molar ratio of the E-group elements to Ti satisfies 0 < *C_{E}lC_{Ti}* ≤ 0.25; and the atomic percentage content of Ag in the E-group elements is 50% ~ 100%.

18. A titanic acid nanotube doped with E-group elements, which is prepared by a method of preparing a titanic acid nanotube doped with E-group elements prepared according to claim 8, characterized as comprising:
the outer diameter of the titanic acid nanotubes doped with E-group elements is 2 nm ~ 20 nm; the molar ratio of the E-group elements to Ti satisfies 0 < *C_{E}*/*C_{Ti}* ≤ 0.25; the atomic percentage content of Ag in the E-group elements is 50% ~ 100%; the E-group elements is mainly distributed in the titanic acid nanotubes in the form of atoms or atomic clusters; the titanic acid nanotubes doped with the E-group elements have a higher phase transition thermal stability than that of the monolithic titanic acid nanotube matrix.

19. A titanic acid nanotube embedded with E nanoparticles, which is prepared by a method of preparing a titanic acid nanotube embedded with E nanoparticles prepared according to claim 9, characterized as comprising:
the E nanoparticles have a size of 1.5 nm ~ 10 nm; the E nanoparticles are mainly present in titanic acid nanotubes by means of embeddedness; the E nanoparticles are mainly embedded in the titanic acid nanotubes; the titanic acid nanotubes embedded with E nanoparticles have an outer diameter of 2 nm ~ 20 nm; the molar ratio of the E-group elements to Ti satisfies 0 < *C_{E}*/*C_{Ti}* ≤ 0.25; and the atomic percentage content of Ag in the E-group elements is 50% ~ 100%.

20. A crystalline TiO₂ nanotube/rod embedded with E nanoparticles, which is prepared by a method of preparing a crystalline TiO₂ nanotube/rod embedded with E nanoparticles prepared according to claim 10, characterized as comprising:
the size of the E nanoparticles is 1.5 nm ~ 10 nm; the E nanoparticles are mainly embedded in the crystalline TiO₂ nanotubes/rods; the outer diameter of the TiO₂ nanotubes/rods embedded with E nanoparticles is 2 nm ~ 25 nm; the molar ratio of the E-group elements to Ti satisfies 0 < *C_{E}*/*C_{Ti}* ≤ 0.25; and the atomic percentage content of Ag in the E-group elements is 50% ~ 100%.

21. A method of preparing titanate nanotubes doped with E-group elements, which are prepared by the following steps:
step 1), providing an initial alloy comprising T-type elements, Ti and E-group elements; wherein the T-type elements comprise at least one of Al and Zn; and the phase composition of the initial alloy comprises a T-Ti intermetallic compound with solid dissolved E-group elements; wherein the atomic percentage content of Ag in the E-group elements is 50% ~ 100%, and the molar ratio of E-group elements solid dissolved in the T-Ti intermetallic compound to Ti in the initial alloy is 0 < *C*_{E}/*C*_{Ti} ≤ 0.25;
step 2), sealing the initial alloy with the alkaline solution in a closed vessel, and subsequently heating the closed reaction system to the temperature of *T₂* and holding it for a certain period of time; wherein 100°C < *T_{f solution}* < *T₂*; *T_{f solution}* is the boiling point temperature of the alkaline solution involved in the reaction at ambient pressure, and the pressure in the reaction vessel at the temperature of *T₂* is higher than the ambient pressure;
step 3), lowering the temperature of the closed vessel and restoring the pressure to ambient pressure, and collecting the final solid product, i.e., obtaining titanate nanotubes doped with E-group elements.

22. A method of preparing a titanic acid nanotube doped with E-group elements, wherein the titanic acid nanotube doped with E-group elements is obtained by reacting the final product or the titanate nanotubes doped with E-group elements prepared according to claim 21 with an acid solution and collecting the solid product.

23. A method of preparing titanic acid nanotube embedded with E nanoparticles, wherein the titanic acid nanotube embedded with E nanoparticles is prepared by heat-treating the product or the titanic acid nanotube doped with the E-group elements prepared according to claim 22.

24. A method of preparing crystalline TiO₂ nanotubes/rods embedded with E nanoparticles, wherein the crystalline TiO₂ nanotubes/rods embedded with E nanoparticles are prepared by heat-treating the product or the titanic acid nanotube doped with E-group elements prepared according to claim 22, or by heat-treating the product or the titanic acid nanotube embedded with E nanoparticles prepared according to claim 23.

25. An application of the product materials prepared according to the preparation method described in any one of claims 1-10, or the product materials prepared according to the preparation method described in any one of claims 21-24, or the materials described in any one of claims 11-20, in polymer-based nanocomposites, resin-based composites, ceramic materials, photocatalytic materials, hydrophobic materials, effluent degrading materials, bactericidal coatings, anticorrosive coatings, and marine coatings.

26. An application of the product materials according to claim 25, wherein the Ag-doped titanic acid nanofilm materials prepared according to the method described in claim 3 is mixed with a polymer, and then a composite coating with the Ag-doped titanic acid nanofilm and the polymer is prepared; in the composite coating, the Ag elements are dispersed in the titanate nanofilm by means of atoms or atomic clusters, and the titanic acid nanofilm is dispersed in the polymer; wherein the composite polymer coating can be applied in fields including hydrophobic materials, sewage degradation materials, antiseptic coating materials, coatings for marine equipment and ships.

27. A method of preparing a titanate nanofilm material doped with E-group elements according to claim 1, wherein the methods as described in step 2 for lowering the temperature of the E-doped solid flocculent product in the reaction system from *T₁* include at least one of dilution by addition of solvent and cooling by filtration.

28. An application of the product materials prepared by the preparation method according to any one of claims 1-10, or the product materials prepared by the preparation method according to any one of claims 21-24, or the materials according to any one of claims 11-20, in home decoration paint, germicidal sprays, and antifouling paints.wherein the titanate nanotubes embedded with E nanoparticles.
As a home decoration paint, the Ag-contained product materials or the product materials described above are mixed with the other components of the paint as a paint additive, and applied to the surface of the furniture, the wares, or the wall to achieve an antibacterial effect;
As a germicidal spray, the Ag-contained product materials or the product materials described above are mixed with other liquid spray components, and can be sprayed on the surface of furniture, wares, fabrics, and walls to achieve an antibacterial effect;
As an antifouling coating, the Ag-contained product materials or the product materials as described above are substituted for the bactericidal antifouling component in the conventional antifouling coating to achieve an antifouling effect.

29. An application of the product materials prepared according to the preparation method described in any one of claims 1-10, or the product materials prepared according to the preparation method described in any one of claims 21-24, or the materials described in any one of claims 11-20, in an antibacterial fabric, wherein the Ag-contained product materials or the materials are dispersed so as to be adhered to or coated on the surface of the fabric or to be mixed and knitted together with the fabric, so that the fabric has an antibacterial and sterilizing effect and capability.
